# EUROPEAN PATENT SPECIFICATION

(11) **EP 1 575 005 B1**
(45) Date of publication and mention of the grant of the patent: **20.01.2010**
(21) Application number: 05250948.6
(22) Date of filing: 18.02.2005
(51) Int. Cl.: G07F 7/10

(54) **Method and apparatus for processing an application identifier from a smart card**
Verfahren und Vorrichtung zum Verarbeiten einer Anwendungsidentifizierung aus einer Chipkarte
Procédé et dispositif pour le traitement d'un identificateur d'application issu d' une carte à puce

(30) Priority: 24.02.2004 US 786312; 24.02.2004 US 786506; 24.02.2004 US 786895; 24.02.2004 US 786763
(43) Date of publication of application: 14.09.2005
(73) Proprietor: SUN MICROSYSTEMS, INC., Santa Clara, California 95054 (US)
(72) Inventor: De Jong, Eduard, Dyfed, SA67 7AX (GB)
(74) Representative: Davies, Simon Robert

(56) References cited:
- US-A1- 2002 083 322
- US-A1- 2003 078 866
- SUN MICROSYSTEMS, INC.: "Java Card (TM) 2.2 Runtime Environment (JCRE) Specification" [Online] June 2002 (2002-06), SUN MICROSYSTEMS, INC. , PALO ALTO, CA, USA , XP002325473 Retrieved from the Internet: URL:http://java.sun.com/products/javacard/ specs.html> [retrieved on 2005-04-20]
- SUN MICROSYSTEMS, INC.: "Java Card (TM) 2.2 Application Programming Interface" [Online] September 2002 (2002-09), SUN MICROSYSTEMS, INC. , PALO ALTO, CA, USA , XP002325474 Retrieved from the Internet: URL:http://java.sun.com/products/javacard/ specs.html> [retrieved on 2005-04-20] * page 1 - page 90 *
- OSS-J ARCHITECTURE BOARD: "OSS THROUGH JAVA (TM) J2EE DESIGN GUIDELINES" [Online] 31 October 2001 (2001-10-31), OSS THROUGH JAVA (TM) , XP002325475 Retrieved from the Internet: URL:http://www.ossj.org/downloads/design_g uidelines.shtml> [retrieved on 2005-04-20] * page 1 - page 116 *
- SUN MICROSYSTEMS, INC.: "User's Guide, Wireless Toolkit, Version 2.1, Java (TM) 2 Platform, Micro Edition" [Online] December 2003 (2003-12), SUN MICROSYSTEMS, INC. , SANTA CLARA, CA, USA , XP002325476 Retrieved from the Internet: URL:http://java.sun.com/j2me/docs/wtk2.1/U serGuide.pdf> [retrieved on 2005-04-20] * page 7 - page 17 * * page 73 - page 75 *

## Description

### Field of the Invention

The invention relates to smart card technology, and in particular to smart cards that typically support multiple applications from different suppliers.

### Background of the Invention

Most people now have a collection of small plastic cards, representing various credit cards, store cards, identity cards, membership cards, and so on. Information about the card and its owner, such as account details and so on, is normally printed or embossed on the card, and may also be stored in some form of magnetic strip. Note that such cards are simply passive storage devices, and the information that they contain is fixed at card creation time.

In recent years, smart cards have also proliferated. These are similar in scale to traditional credit cards, but incorporate within their plastic cases a microelectronic memory and also (optionally) an embedded processor. It will be appreciated that the computational resources available within a smart card are extremely limited compared to those of a desktop workstation, or even a laptop or handheld device. One especially popular form of smart card is known as a Java Card. This is based on the Java platform developed by Sun Microsystems ("Java" and "Java Card" are trademarks of Sun Microsystems Inc). In such devices, a Java virtual machine (VM) is provided within the smart card to allow the execution of Java applets or applications. Particular advantages of being able to use the Java environment for smart card applications are the inherent security features of the Java environment, plus the ready availability of software development packages for the Java programming language. It is estimated that by the end of 2002 over 200 million Java cards had been shipped. More information about the Java Card smart card platform is available from the page: /products/javacard/ at the web site: http://java.sun.com and from the site: http://www.javacardforum.org/.

An Application Programming Interface (API) is defined for the Java Card platform. Applications written in the Java programming language invoke this API to access the Java Card runtime environment (JRE) and any native services. The Java Card API allows application portability, in that the same application can run on any smart card that supports the API. The Java Card API is compatible with international standards, in particular the ISO/IEC 7816 family of standards.

Note that programs that run on smart cards may be referred to as either an application or as an applet. It will be appreciated that there is a clear distinction between a Java applet and a Java application in a desktop environment, in particular the absence of a main class from the former. However, this distinction does not apply in the smart card environment. Thus applets for use on a Java card platform are not the same as applets that run on a web browser. The term applet will generally be used herein to refer specifically to code, and the term application to refer to the higher level functionality provided by the applet code and associated data (unless the context requires otherwise).

The Java Card platform supports multiple applications on a single card. These may be separated by firewalls, in order to ensure that they do not interfere with one another. This is particularly of concern if the various applications are operated by different organisations, whose business relationships with the cardholder may be independent of one another.

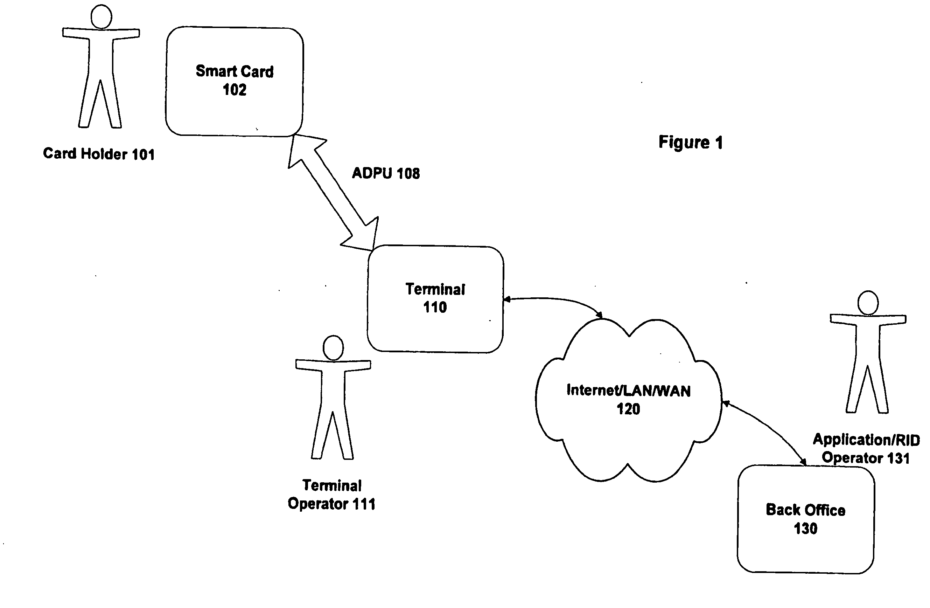

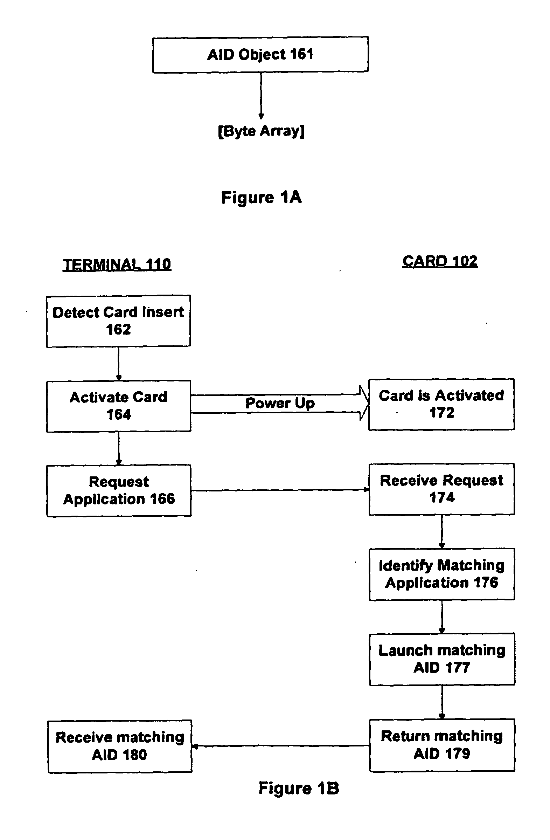

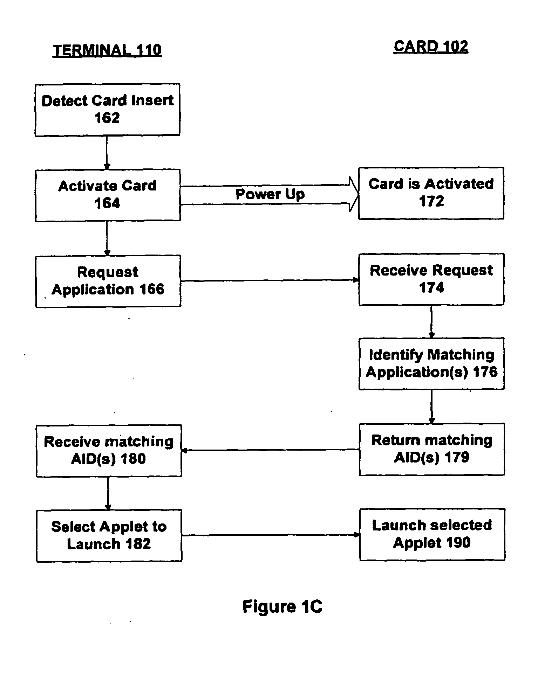

Figure 1 is a high-level schematic diagram illustrating the main architectural components in a typical smart card application. In particular, smart card 102 belonging to cardholder 101 interacts with a terminal 110 by exchanging an application protocol data unit (ADPU) 108. The format for the ADPU is defined by the International Standard ISO/IEC 7816-3.

Terminal 110 may be a handheld device, an adjunct to a desktop workstation, a dedicated card reader (analogous to an ATM) or any other suitable system. Furthermore, the communications between the smart card 102 and the terminal 110 may be by wired connection, such as some form of bus (e.g. USB), or by wireless link (e.g. radio or some other electromagnetic signal), depending on the particular devices concerned. In addition, the terminal 110 may be under the direct control of an operator 111 (such as for a handheld terminal), or alternatively terminal 110 may be automated (such as for an ATM).

Terminal 110 interacts with a back office 130 over any suitable form of network 120, such as the Internet, a local area network (LAN), a wide area network (WAN), and so on. Back office 130 may comprise multiple systems (not explicitly shown in Figure 1), such as a web server or portal attached to network 120, perhaps with an application server and/or a database system behind. Note that the terminal 110 may be off-line until activated by a smart card 102, a card holder 101 or a terminal operator 111 to access a back office 130 over network 120.

In operation, the cardholder 101 typically places the card 102 into or adjacent the terminal 110, thereby allowing the two to interact, e.g. to perform a debit operation from the card, in order to purchase some goods. This interaction will generally be referred to herein as a session, and typically involves the exchange of multiple messages between the smart card 102 and the terminal 110. A session can be regarded as comprising multiple transactions, where each transaction represents the completion of some portion of the overall session (e.g. a security authorisation).

Associated with each applet on smart card 102 is an Application Identifier (AID). The AID is a byte string up to 16 bytes long, whose format is defined by International Standard ISO/IEC 7816-5. Thus according to this standard, the first 5 bytes of the AID represent the registered application provider identifier (RID) and have a value allocated by ISO or one of its member bodies. The RID generally indicates the merchant or other entity involved with operating the applet, hereinafter referred to as the RID operator. The RID operator is generally responsible for the back office program 130, and is depicted as application/RID operator 131 in Figure 1. The last 11 bytes of the RID constitute the proprietary application identifier extension (PIX). The PIX is determined by the RID operator 131, and can be used to store a reference number or other information associated with the applet.

Figure 1A illustrates the storage of the AID on a typical smart card 102. The AID bytes are stored in a byte array, which represents internal storage for a Java AID object 161. Applications can therefore access the AID by making appropriate calls to AID object 161, which in effect provides a wrapper for the underlying byte array.

International standard ISO/IEC 7816-4 defines a procedure to allow a terminal to locate a desired application on a smart card, and this is illustrated at a high level in the flowchart of Figure 1B. The procedure starts when the smart card 102 is first inserted into the terminal 110. The terminal detects the insertion of the smart card (step 162), and in response to such detection activates the smart card (steps 164, 172). This activation typically includes providing power to the smart card.

The terminal now sends a request using an application protocol data unit (ADPU) 108 to the smart card (step 166). The ADPU identifies the application to be used in this session in terms of its AID. The request from the terminal is received by the smart card (step 174), typically within an applet selector program that is running on the smart card 102 as part of a card executive layer. The applet selector is then responsible for locating and launching the application that matches the AID request from the terminal, i.e. the application that has the same AID as specified in the request (steps 176 and 177). The smart card also returns the AID for the matching application back to the terminal 110 (steps 179 and 180). (N.B. This last step is optional within the context of ISO/IEC 7816-4, although commonly implemented).

Figure 1C describes a variation on the above approach (also in accordance with ISO/IEC 7816-4), in which the terminal 110 supplies the card with a truncated AID (known as a partial AID), for example the first ten bytes of an AID. In these circumstances, there may be multiple matches against the partial AID. For example, if two applets have AIDs that have the first ten bytes in common, and then differ only in the final six bytes of the AID, they will both match the same partial AID of length 10 bytes (or less). One reason for using a partial AID might be if the terminal 110 wants to identify all applets on the card having a particular RID.

The processing of Figure 1C commences as just described for Figure 1B, except that at step 166 the request from the terminal 110 to the smart card 102 comprises only a partial AID. Consequently, the smart card may identify multiple matching applications at step 176. The AIDs for these matching applications are then returned to the terminal 110 (steps 179, 180), in order to allow the terminal (or user) to select a specific desired application from those matching the partial AID. Thus the terminal now sends a request to the smart card to launch an applet (step 182). This request specifies the particular applet to be launched on the smart card in terms of its complete AID (generally selected from the set of those received from the smart card at step 180). The smart card duly responds to this request by launching the applet selected by the terminal (step 190).

In fact, the skilled person will realise that although Figure 1C represents an appropriate logical model for the use of partial AIDs, the actual implementation looks more like Figure 1B (primarily for historical reasons). Thus current systems generally accommodate the matching and return of multiple matching AIDs by identifying only a single matching AID at a time. In particular, the applet having the AID that is first matched to the partial AID received from the terminal is launched, and the complete AID for this applet is returned to the terminal 110. The smart card then only supplies a next matching AID upon a subsequent specific request from the terminal. Nevertheless, it will be appreciated that multiple matching AIDs could be handled in other ways, such as by returning the complete set of multiple matching AIDs all at once in a single response to the terminal (as depicted in Figure 1C).

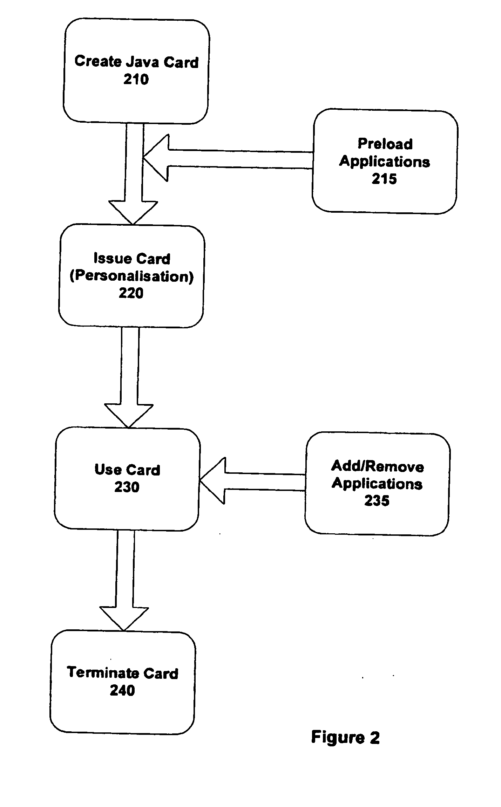

Figure 2 is a schematic diagram representing the life cycle of a smart card, which in this particular implementation is a Java Card. This life cycle commences with the manufacture of the card, and the initial loading of the base operating system and the Java Card environment (step 210). Also at this stage, one or more applications may be preloaded (step 215). Generally, the base operating system and Java Card environment, and also potentially any preloaded applications, may be stored in ROM on the smart card 102 as part of the manufacturing process.

The card is now ready for issue to a cardholder (step 220), which typically involves an appropriate personalisation process, as well as initialisation of the Java environment, and starting the Java virtual machine on the card. The cardholder is thereafter able to use the card (step 230), such as in the manner illustrated schematically in Figure 1. Note that if the card was originally issued without any preloaded applications, then the cardholder may have to load an application prior to making substantive use of the card. In practice however, this situation is rather uncommon, since usually there is at least one preloaded application in order to motivate issuance of the card in the first place.

During the operational lifetime of the card, further application programs may potentially be installed onto the card (step 235), for example if the cardholder signs up to new accounts or services. Conversely, applications may be removed from the card, perhaps because an account is closed.

The last operation shown in Figure 2 is where the card is terminated (step 240). This may occur, for example, because the card has a built-in expiry date or is surrendered by the user (perhaps if the user is moving to a new card issuer, or the card is physically damaged).

Although the Java Card environment does support multiple applications from different RID operators, nevertheless, in practice, the installed applications on a large majority of issued cards come from and are run by a single RID operator. In other words, applications from one RID operator are typically found on one card, and applications from another RID operator on a different card. Consequently, relatively little attention has been paid to the business and technical problems associated with the provision and utilisation of multi-vendor smart cards.

Further details on the JavaCard™ 2.2 Application Programming Interface can be found, for example, in Revision 1.1 for the 2.2_01 Release, dated September 2002. Furthermore, US 2002/083322 discloses a terminal adapted to download deployment information from a server, identified through a URL stored on a smart card.

### Summary of the Invention

Aspects of the invention are defined in the claims.

Accordingly, one embodiment of the invention provides a method of processing an application identifier (AID) as defined in ISO/IEC 7816-5 for an application installed on a smart card. The AID includes a registered application provider identifier (RID). The method includes receiving at a terminal the AID for an application on a smart card and determining the RID for the application from the received AID of the application. The RID is then used to generate a network resource identifier, and a request is transmitted from the terminal to the network resource using the network resource identifier, wherein said request incorporates the AID for the application. In due course, a response is received at the terminal to the request. The response includes material selected based on the AID included in said request, wherein said material is for use in handling the application on the smart card. The application incorporates an AID interpreter. The method includes receiving a request at the AID interpreter to provide the AID for the application. In other words, the AID is accessed via the AID interpreter. The AID interpreter responds by retrieving first and second components of the AID. The first component is logically internal to the AID interpreter, while the second component is logically external to the AID interpreter and comprises dynamic data representing state information. Note that the first and second components may be retrieved in any order (or simultaneously). The first and second components of the AID are then combined in order to dynamically generate the AID for providing in response to the request.

Typically the method is implemented in a terminal as part of its interaction with the smart card. Examples of the material that may be downloaded in these circumstances include information to be used for decoding data received by the terminal from the smart card, and a user interface for controlling a screen format for the terminal as viewed by the cardholder during the session.

The ability to download material to a terminal for handling a smart card interaction following receipt of the RID avoids having to have the material already available on the Terminal prior to the beginning of a session with a card. This dynamic delivery of material reduces the amount to be stored on the terminal, which may potentially have to deal with a wide range of smart cards and applications. It also avoids the problem of having to ensure that material on multiple different terminals is always kept up-to-date.

Since the location of the RID within the AID is predefined by standard, the terminal is always able to access the RID from the AID by extracting it from this predefined location, irrespective of the application involved. Accordingly, the RID may be used as a form of key in order to access material at transaction time. In particular, the RID may be converted into a network resource identifier from which the material can be retrieved.

There are various ways in which the RID may be converted into a network resource identifier. One possibility is to maintain a lookup table at the terminal that maps from RID to network resource identifier. Another possibility is to maintain the lookup table on the network. In this case, the network resource identifier may be generated by combining a first fixed address portion, representative of the network location of the lookup table, with a second variable address portion. The second address portion is dependent upon the received RID, and can be regarded as a form of a search string for input to the search site. Note that in this case, the material downloaded to the terminal represents the output of the network lookup procedure. This output typically identifies a further network location for use in handling the application.

Another possibility is to adopt a combination of these two approaches, whereby the terminal first tries to find a mapping in its local lookup table, but then goes to the network lookup table if no local mapping is found. In these circumstances, the local lookup table might be operated as a form of cache of the network lockup table.

In another embodiment, no lookup procedure is used. Rather, a network resource identifier is derived directly from the received RID. In one implementation, this network resource identifier has first and second address portions, where the first address portion comprises a predetermined value corresponding to a network domain. The second address portion is dependent upon the RID received from the card, and represents one or more input parameters for transmission to the network domain. Typically, this web site might represent a domain belonging to the terminal provider, who maintains material for use in handling applications from different RID operators. This material can then be accessed in accordance with the supplied RID.

It will be appreciated that the RID is contained in the AID as a five-byte sequence. This byte-value is transformed in some manner in prior to incorporation into a network address (whether for a network lookup or otherwise). For example, the RID may be transformed from a binary representation of the RID into a non-binary representation, such as a string format. One possibility is to base the string on a hexadecimal representation of the RID. Note also that some protocols allow a hexadecimal value to be incorporated directly into a network address, for example, this can be done in HTTP by using the "%" symbol as a flag.

There is a wide variety of possible material that can be downloaded over the network. For example, the material may be code for interacting with the cardholder or smart card. In one particular embodiment, the response to the request comprises or identifies code for use in decoding the AID of the application. This code is then installed into the terminal for the session with the application.

The code can be provided in a number of possible formats, including as a Java applet, a Java class, or as some other binary file. More complex formats are also possible, such as a Java application descriptor file, which provide additional information about the code.

Other forms of material that may be downloaded include text, such as for a contract or license governing the use of the application on the smart card, and a (further) network location. This downloaded network location might be used to specify a service or facility for use in interacting with the application on the smart card. For example, if the application relates to a travel purchase facility, then the terminal may download the network addresses of various airlines and travel agents in order to facilitate an on-line booking. The downloaded material might also comprise data. This data might perhaps represent a set of currently available products and prices (including (potentially images of the products as well).

The network resource identifier may be generated in various forms. Typically the network resource identifier represents a Universal Resource Locator (URL) or possibly an IP address that identifies a resource on the Internet or some other TCP/IP network (such as some intranet). Alternatively, the network resource identifier may represent a fully qualified class name for a (Java) class. This can then be handled in accordance with standard class loading procedures. For example, the terminal examines to see if the class is already loaded. If so, then this already available version can be used, rather than transmitting a network request to download the material. More generally, class loading can be handled in accordance with the (Java) classpath definitions at the terminal.

The terminal receives a complete AID from an application, including both the RID portion and also the proprietary application identifier extension (PIX) portion. In general, the terminal may not know initially how to interpret the PIX portion. Nevertheless, the PIX portion can be incorporated into the request sent out over the network, for example as an HTTP parameter if the request is being sent out over the Internet. The response to the request may then be dependent on the PIX portion. One possibility is that the downloaded material may represent the data from the PIX portion provided in accordance with some standard format (e.g. as a set of Name-Value pairs) that can be readily interpreted and processed by the terminal.

In one embodiment, there are multiple applications on the smart card, and the terminal receives an AID for each respective application. A network resource identifier is then calculated from the RID of each AID, and material downloaded from this network resource identifier. This material allows the terminal to determine which of the multiple applications on the smart card may be used with the terminal. For example, the material may indicate that certain applications require particular facilities, such as a type of encryption/decryption, that are not available at this terminal. Another possibility is that the material is used in offering the cardholder a choice of which application to employ for this session (such as by providing some description of services offered by the application in question).

In one embodiment, the first component of the AID includes at least an RID portion. The first component may also include a portion indicative of a firewall in which the application is located on the smart card. Note that these parameters are relatively fixed and also generally specific to the application itself, which renders them suitable for incorporating into the AID at installation time.

The second component may be used to hold a wide range of state information relevant to the application. Note that this state information may be fixed (e.g. it may represent a version number of the application), or it may vary with time (e.g. it may represent a current balance remaining to the application). Note also that the state information may be particular to the application in question, or the state information might describe some property of the card, such as a memory capacity, or potentially of the cardholder, such as a date of birth.

Allowing the second component to be external to the AID interpreter makes it easier to incorporate the same state information in multiple applications (rather than having to separately maintain the same state information in lots of different applications). Consequently, the second component may be stored once on a card, and then shared between the multiple applications, thereby reducing memory requirements for the smart card. Another advantage, as discussed in more detail below, is that the AID interpreter can be more generic.

In one embodiment, the request to the AID interpreter is made by calling a method on the AID interpreter. Such a request is typically made in response to a communication from a terminal, when the card is brought into engagement or communication with the terminal at the start of a session. In such circumstances, the terminal generally supplies at least one identifier for an application to be used in the session. This identifier is then compared with the AIDs for the various applications on the smart card in order to identify the desired application for the session.

Typically, the identifier matches a portion of the AID of the desired application. This matching portion usually comprises at least part of the first component of the AID, but excludes the second component of the AID. The reason for this is that the second component, being state information, may be liable to change. The terminal is therefore unlikely to know in advance the contents of this second component for matching purposes.

Nevertheless, there may perhaps be occasions when the terminal is interested in trying to match at least part of the second component. This might typically be the case if the second component is used to hold some configuration information, which may perhaps be important for deciding whether or not the terminal tries to launch a particular application. (One example of this might be if the state information indicates whether or not the application had passed an expiry date).

The generated AID is returned from the application to a terminal. The terminal may use this AID for various purposes in the session. For example, the terminal may extract state information, such as a balance, in order to determine whether or not a commercial transaction requested by the cardholder should be allowed to proceed. Another possibility is that the terminal performs application matching itself. In this case, the terminal typically receives generated AIDs from multiple applications on the card, and then selects an appropriate application on the card to launch. (Note that this application matching may be performed on the smart card instead, either by the AID interpreter itself, or by some other facility).

In one embodiment, the second component is processed prior to combination with the first component. For example, the second component may be stored as an expiry date for the application. This can then be compared with the current date of the session to generate a flag indicating whether or not the application has expired. This flag can then be integrated into the AID.

Note that the processing may involve not only data manipulation (such as the comparison above), but also data formatting. For example, if the second component were stored as an integer representing a current balance on the card, then an appropriate transformation could be performed to convert from the integer format into the byte format of the AID.

Typically, the processing of the second component is performed externally to the AID interpreter, for example by another part of the application. This then avoids the AID interpreter having to understand details about the contents and format of the second component (prior to processing). Indeed, the AID interpreter may have no facility itself to update or modify the second component. Rather, in one embodiment the AID interpreter can only access the second component via a call to the applet. In this embodiment, responsibility for updating the state information of the second component therefore falls to some routine other than the AID interpreter. Typically this other routine is already used for manipulating the state information on the card, and so provides a consistent and convenient mechanism for altering the state information if so desired.

In one embodiment of at least one of the applications includes an application identifier (AID) for the application and an AID interpreter. The AID is accessed via the AID interpreter. The AID comprises a first component logically internal to the AID interpreter and a second component logically external to the AID interpreter. The second component is indicative of a state relevant to the application. The AID interpreter is operable to combine at least the first and second components of the AID in order to generate the AID.

The AID can therefore be used to supply configuration information to control the installation of the application onto a smart card. One advantage of this approach is that it helps to provide a consistent and self-defining installation process that is not reliant upon external parameters or settings (other than as recorded in the AID itself).

A wide variety of customisation parameters can be handled in this manner. For example, the parameters may relate to one or more resources available to the application on the card, such as allocated memory or cryptographic facilities. Another possibility is that a customisation parameter is indicative of a level of service to be made available to a cardholder in transactions involving the application. The application is then configured to allow for the settings or values of such configuration parameters.

In a typical embodiment, the application includes an AID interpreter. As part of the installation process, the AID is passed to the AID interpreter, which then stores the AID for the application onto the card. Subsequently, when configuring the application, the stored AID can be accessed with the AID interpreter, which extracts the customisation parameter(s) from the stored AID. In one embodiment this involves instantiating the AID interpreter by calling a method on the application during instantiation of the application itself. This then allows the AID for the application to be stored onto the card as part of initialisation of the application.

A method of selecting a desired application on a smart card is described herein. There are potentially two or more applications installed on the smart card, with each application having a stored application identifier (AID). The method comprises specifying a desired application in terms of multiple parameters, and retrieving multiple parameters from a stored AID for an application on the smart card. This then allows the specified multiple parameters to be compared with the retrieved multiple parameters to determine whether or not there is a match.

Existing implementations are based on selecting an application using a single parameter, namely a partial or complete AID. However, this lacks flexibility, in that the terminal must known the particular AID stored on the card in order to make a match. In contrast, the use of multiple parameters allows a matching process that is more aligned with the logical approach for selecting an application. This reduces the complexity of terminal management, and also enhances flexibility.

In many implementations, the multiple parameters do not occupy the full space of the AID. This therefore allows additional information to be encoded into the AID, beyond that used purely for application matching purposes (such as a date and/or location of last use of the smart card). Note that the location of any such additional (non-matching) information is flexible, and can, in principle, be anywhere within the PIX portion of the AID. (In contrast, the use of a partial AID for application selection forces any non-matching information to be located at the end of the AID).

In one implementation, the multiple parameters comprise a registered application provider identifier (RID), a firewall identifier, and an applet identifier. More particularly a smart card may be separated into one or more firewalls, with each application installed on the smart card being contained within one of the firewalls. One of the multiple parameters is therefore indicative of the firewall in which the desired application is contained, while another of the parameters comprises an applet ID that identifies an application within a firewall. It will be appreciated that while the RID represents a predefined first portion of the AID, the one or more remaining parameters may be distributed anywhere (and any how) within the predetermined second (PIX) portion of the AID.

Note that the above three parameters provide a logical set of criteria for selecting an application, compared to the more artificial approach of treating the AID as a single (or partial) byte sequence for matching. Nevertheless, in other circumstances or implementations, a different number of parameters may be used for the matching For example, the firewall ID may be omitted for selection purposes if the applet ID is unique to a particular RID across all firewalls. Alternatively, a reduced number of parameters may be used to pick out a certain subset of applications (which can be difficult with simple AID matching). For example, it may be desired to locate all applets within a given firewall. This could be done by selecting on RID and firewall, but not on applet ID.

Note also that a given set of multiple parameters (such as RID, firewall ID and applet ID) may be combined or concatenated into one single data structure for matching purposes as an implementation convenience. However, this data structure should be regarded as logically comprising multiple parameters, since it may be assembled from different locations in the AID (rather than a contiguous block), and each of the parameters has individual significance.

In a typical implementation, a smart card is brought into communication with a terminal. In one embodiment, the terminal transmits a request to the smart card specifying a desired application (or applications) in terms of the multiple parameters. This causes the smart card to select an application as described above. The smart card then returns to the terminal a response to the request. The response includes the AIDs of those applications whose retrieved parameters match the specified parameters.

In one particular implementation, the request from the terminal is received by an applet selector on the smart card. This causes the applet selector to call a method on an AID interpreter associated with each application on the smart card. The AID interpreters then retrieve the multiple parameters for their associated application. The retrieved parameters can then be returned to the applet selector for comparison with the parameters received from the terminal. Alternatively, the applet selector may forward the received parameters to the various AID interpreters, which can perform the comparison themselves, notifying the applet selector if any match is found.

In another implementation, the application selection is performed on the terminal rather than on the smart card. In this approach, the interaction between the terminal and the smart card typically commences with the terminal transmitting a request to the smart card for information about the applications installed on the smart card. In some cases, the smart card may retrieve the multiple parameters from the AID of each application on the card, and then transmit these parameters to the terminal (typically in conjunction with the full AID). The terminal then determines a desired application by matching against each set of multiple parameters. This allows the terminal to launch the desired application by returning the full AID for this application to the smart card.

Alternatively, in response to the initial request, the smart card may simply supply the set of full AIDs for the applications on the smart card. In these circumstances, it is the responsibility of the terminal to break down the AIDs into the multiple parameters. The terminal therefore has to identify the appropriate AID interpreter for performing this task. The desired AID interpreter(s) may already be available on the terminal, for example as a result of interactions with previous smart cards, and/or may be downloaded over a network in response to the received AID(s). In one particular embodiment, the terminal identifies the desired AID interpreter based on the RID portion of the relevant AID, and then downloads the AID interpreter from an address which is dependent upon the RID. (N.B. The terminal can always access the RID, since its location within the AID is predefined and the same for all applications).

A computer program product comprising instructions on a medium for loading into a machine can be used to cause the machine to perform a method described above.

Note that a computer program product may comprise program instructions stored on a removable storage medium, for example an optical (CD ROM, DVD, etc) or magnetic (floppy disk, tape, etc) device. Such a medium can then be introduced into a computer system in order to transfer the program instructions to the system. Alternatively, the program instructions may be transferred to the computer system by download via a transmission signal medium over a network, for example, a local area network (LAN), the Internet, and so on. The transferred program instructions are typically stored on a hard disk of a computer system, and loaded for use into random access memory (RAM) for execution by a system processor.

It will be appreciated that the apparatus, method and computer program product embodiments of the invention will generally benefit from the same particular features described above (e.g. in relation to the method embodiments of the invention).

### Brief Description of the Drawings

Various embodiments of the invention will now be described in detail by way of example only with reference to the following drawings, in which like reference numerals pertain to like elements, and in which:
Figure 1 is a schematic diagram illustrating the main components involved in a typical smart card application;
Figure 1A is a schematic diagram representing the implementation of an AID object in a typical existing smart card;
Figure 1B is a flowchart whereby a terminal selects and launches one application out of potentially multiple applications on a smart card by providing a full AID to the smart card;
Figure 1C is a flowchart whereby a terminal selects and launches one application out of potentially multiple applications on a smart card using partial AID matching;
Figure 2 is a schematic diagram illustrating the typical life cycle of a smart card;
Figure 3 is a schematic block diagram representing at a high level the structure of a typical smart card;
Figure 4 is a schematic diagram illustrating the interaction between a smart card and a terminal in accordance with one embodiment of the invention;
Figure 5 illustrates the composition of an AID in accordance with one embodiment of the invention;
Figures 5A, 5B, 5C, and 5D illustrate the structure of an AID interpreter in accordance within four different embodiments of the invention;
Figure 6 is a flowchart depicting a procedure for matching an applet on a card in accordance with certain embodiments of the invention;
Figures 6A through 6E are flowcharts illustrating in more detail the procedure of Figure 6 in accordance with various embodiments of the invention;
Figure 6F is a flowchart depicting a procedure for matching in the terminal an applet on a card in accordance with one embodiment of the invention;
Figure 7 is a flowchart illustrating a smart card dynamically generating an AID to provide to a terminal in accordance with one embodiment of the invention;
Figure 8 illustrates a procedure for a terminal to utilise an AID to obtain code or information to support processing the AID in accordance with one embodiment of the invention;
Figures 8A through 8F illustrate aspects of the processing of Figure 8 in more detail for various embodiments of the invention, including some of the processing performed at a server;
Figure 9 illustrates the server processing for a request from a terminal in accordance with one embodiment of the invention;
Figures 10 and 11 are schematic diagrams of the components involved in utilising an AID to obtain code or information to support processing the AID in accordance with two different embodiments of the invention;
Figure 11A illustrates the use of a default proxy AID interpreter in accordance with one embodiment of the invention;
Figure 12 is a flowchart illustrating a procedure for a terminal to obtain a set of AIDs from a smart card in accordance with one embodiment of the invention;
Figure 12A is a flowchart illustrating some of the operations of the procedure of Figure 12 in more detail in accordance with one embodiment of the invention;
Figure 13 is a flowchart illustrating a procedure for a terminal to identify a matching application in accordance with one embodiment of the invention;
Figure 13A is a flowchart illustrating the selection of proxy program on the terminal in accordance with one embodiment of the invention;
Figure 14 is a flowchart illustrating the installation of an application including an AID onto a smart card in accordance with one embodiment of the invention; and
Figure 15 is a flowchart illustrating the use of the AID to hold configuration data in the flowchart of Figure 14.

### Detailed Description

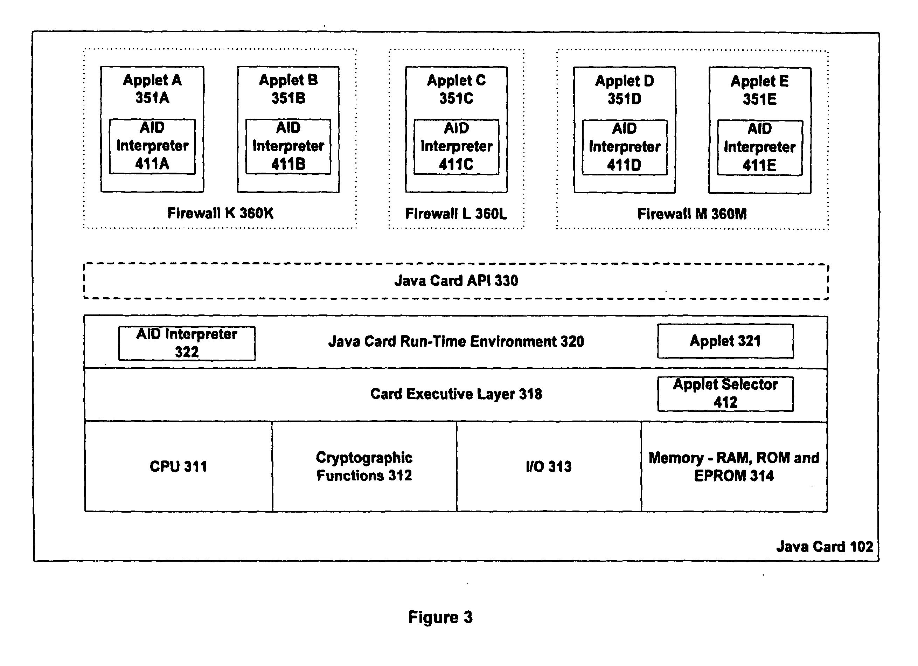

Figure 3 illustrates in schematic form the high level structure of a smart card 102 in accordance with one embodiment of the present invention. In the particular embodiments shown, the smart card is implemented using a Java Card system. Such a system is described for example in: "Java Card Technology for Smart Cards: Architecture and Programmer's Guide" by Zhiqun Chen, Addison-Wesley, 2000, ISBN 0201703297, while the formal Java Card specification is available for download from: http://java.sun.com/products/javacard/specs.html. Both of these texts are hereby incorporated by reference. Nevertheless, it will be appreciated that smart card 102 is not limited to the Java Card platform, and that alternative embodiments of the invention can be implemented on any suitable smart card platform.

Note that while smart card 102 is conveniently implemented in a plastic device similar in size and shape to a conventional credit card, in alternative embodiments it takes a variety of other portable formats, such as a ring, or a pendant, and so on. In other embodiments, smart card 102 comprises a token or similar device, such as for use in authentication. In addition, smart card 102 can be integrated into another electronic device. For example, in some embodiments smart card 102 comprises a Subscriber Identity Module (SIM) card for use in a GSM mobile telephone, or a Wireless Interface Module (WIM) for use in a device that supports the Wireless Application Protocol (WAP), or a Universal Subscriber Identity Module (USIM) card or a User Identity Module (UIM) for use in a 3^{rd} Generation Partnership Project mobile telephone.

Smart card 102 can be regarded as having a layered structure, with hardware at the bottom The hardware for a card typically includes a CPU 311, a cryptographic facility 312, an input/output unit 313 and memory (RAM, ROM, EPROM) 314. Running on the hardware platform is a card executive layer 318, usually an operating system (OS) particular to the specific hardware platform involved. The card executive layer includes an applet selector 412, whose operation will be described in more detail below.

On top of the card executive layer is the Java Card runtime environment (JCRE), which includes the Java Card virtual machine (VM) 320. Note that the Java Card VM itself is generally specific to the particular card executive layer 318, but then presents the standard Java Card API 330 to application software 351 running on the smart card 102.

The Java Card device 102 depicted in Figure 3 has (by way of example) five loaded applets 351A, 351B, 351C, 351D and 351E. Each applet 351 includes a card AID interpreter 411, which will be described in more detail below. The applets 351A, 351B, 351C, 351D and 351E generally extend (i.e. subclass) a base applet class 321 provided by the JCRE 320. Similarly, the AID interpreters 411A, 411B, 411C, 411D and 411E typically extend a base AID interpreter class 322, which is also provided by the JCRE 320. Note that applets 351A, 351B, 351C, 351D and 351E are typically from different vendors. It will be appreciated having multiple applications from different vendors installed on a single card avoids the need for a user to have to carry around multiple cards, one for each vendor or application provider (as typically happens today).

The applets 351 are arranged into three groups, separated from another by firewalls 360. Thus applets 351A and 351B are in firewall 360K, applet 351C is in firewall 360L, and applets 351D and 351E are in firewall 360M. Applets 351 can share data within a firewall 360, but not generally from one firewall to another. One typical motivation for having two or more applets within a single firewall is where one applet manages the code and classes of the other application(s) that are within the same firewall. It is expected that all the applets within a particular firewall are controlled by the same RID operator (i.e. they have the same RID).

It will be appreciated that applets 351 are static, in that all the code they use is already stored in smart card 102. In other words, applications do not download any code from terminal 110 or elsewhere except during initial applet installation, at which time all the applet code is loaded for storage onto smart card 102 as part of the applet installation process.

In existing systems, it is difficult for external programs, such as may be running on a terminal 110, to ascertain and confirm the firewall structure of an inserted smart card. In other words, it is difficult for the terminal to deduce the allocation of applets 351 to firewalls 360, such as depicted in Figure 3. Nevertheless, such information may be useful for the terminal in knowing how to handle the card in question, for example, because an applet can only access data within its own firewall. Furthermore, when an applet is first installed onto the card, it is clearly important to determine the correct firewall for the applet, so that the applet is installed into the proper location.

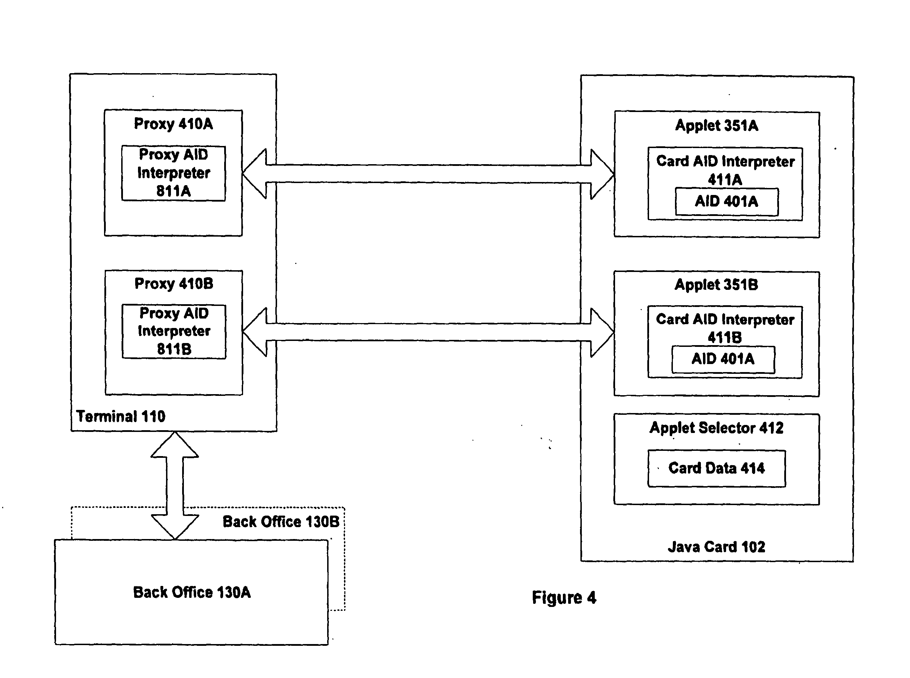

Figure 4 depicts in schematic form the interaction between a smart card 102 and a terminal 110 in accordance with one embodiment of the invention. The smart card 102 typically includes multiple applets, 351A, 351B, etc., each incorporating its own AID interpreter object, 411A, 411B respectively. Each applet 351 also includes its own AID 401. From a logical perspective, the AID 401 for a card can be regarded as contained with the card's AID interpreter 411. Thus a card AID interpreter 411 is responsible for providing access to the AID 401 (and parts thereof) for the applet 351 concerned. This interaction between the card AID interpreter 411 and the AID 401 is described in more detail below.

In operation, the smart card 102 contacts a terminal 110, which contains one or more proxies 410A, 410B. For each proxy, there is typically a corresponding back office application 130A, 130B. Note that in Figure 4, there is a one-to-one correspondence between a proxy 410 in the terminal 110 and an applet 351 on smart card 102, although in other embodiments one proxy 410 may be associated with multiple applets 351. Each proxy includes its own proxy AID interpreter 811 (again as described in more detail below).

If there is only a single proxy 410 installed on terminal 110, this can be set to trigger automatically when a card 102 is inserted into the terminal 110 (or otherwise engages with the terminal). Note that the proxy need not be terminated after each session with a card, but rather may only be suspended pending insertion of a new (potentially different) card. This helps to reduce proxy start-up time for the new card interacting with a terminal.

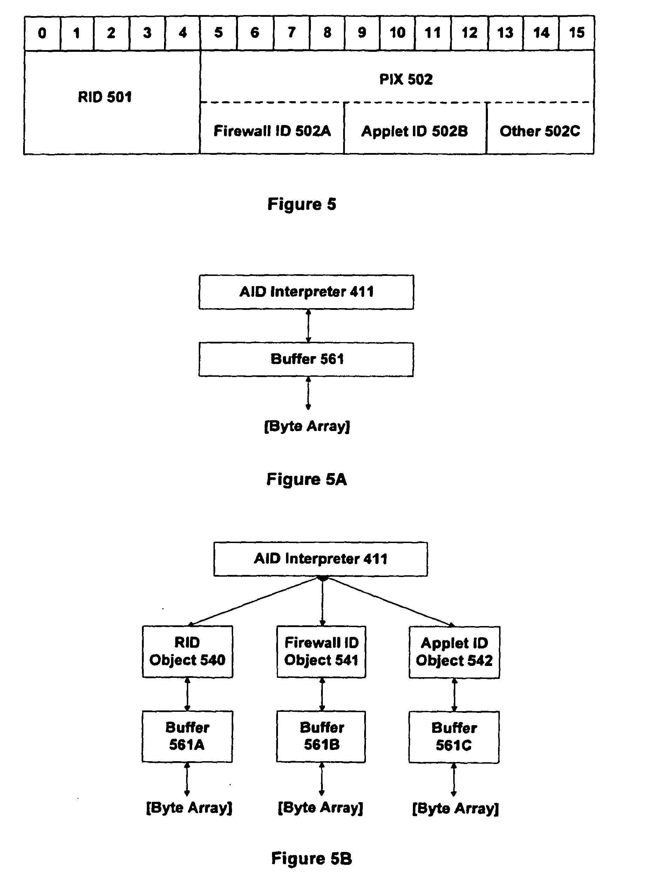

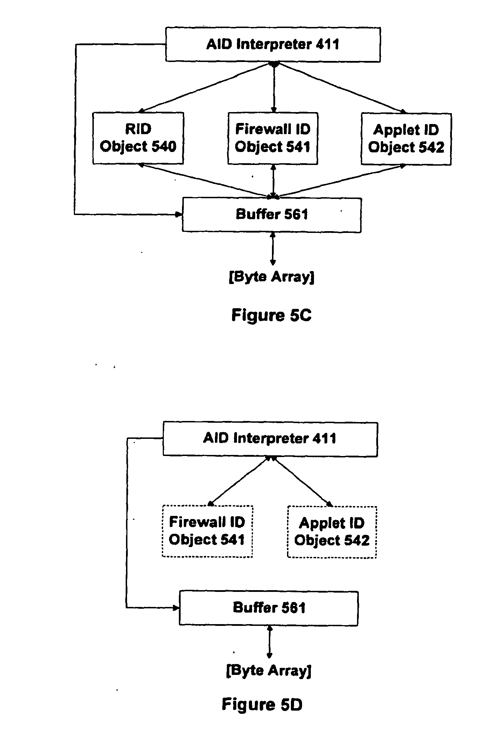

Figure 5 illustrates the structure of an AID in terms of byte string 401 in accordance with one embodiment of the present invention. As previously described, an AID 401 is divided into two portions in accordance with the international standard ISO/IEC 7816-5. In particular, the AID commences with a 5-byte RID portion 501 that identifies the supplier or operator of the applet 351 (i.e. the RID operator), and then has an 11-byte (maximum) proprietary application identifier extension (PIX) portion 502, whose format and content are under the control of the RID operator identified by the RID.

Figure 5 further illustrates various subfields within the PIX portion 502 of the AID 401, in accordance with one embodiment of the present invention. Thus the PIX portion 502 is used to store both an identifier 502A of the firewall 360 that contains the applet concerned, and also an identifier 502B of the particular applet 351 itself. If required, additional information 502C can also be encoded into the PIX, as described later in more detail.

It will be appreciated that in contrast to the high-level breakdown of the AID 401 into RID and PIX portions, which is specified by the ISO7816-5 standard, there is no such standardisation of the subfields within the PIX portion 502. Accordingly, the sizes and layout shown in Figure 5 for the Firewall ID portion 502A, the Applet ID portion 502B, and the Other portion 502C are illustrative only, and may vary from one applet to another. For example, in one embodiment the bytes allocated to a particular subfield are not contiguous. Thus the Applet ID 502B can be stored in two separate blocks, with bytes indicative of the Firewall ID 502A located in-between. Furthermore, one or more of these subfields can be omitted altogether if not required by a particular RID operator. All such variations are of course still constrained by total size of the PIX 502, which is limited to 11 bytes (or at least no greater than 11 bytes), in conformity with the international ISO/IEC standard.

One motivation for storing the Firewall ID 502A within AID 401 is that although all applets in the same firewall are expected to relate to the same RID operator (i.e. have the same RID 501), the converse is not true. In other words, applets having the same RID may be located in different firewall. This might typically arise if the cardholder has more than one relationship with an RID operator, and these different relationships are to be kept independent. One common situation in which this may occur is where an organisation (such as a bank) is responsible for both a general card management application, and also some particular application for account manipulation, e.g. cash withdrawal from an ATM. In this case, the general card management application is likely to have privileges that should not be extended to the specific application for account manipulation. Another possibility is where a contractor for a large supermarket may have identity information encoded in a card to allow them to access particular areas of the supermarket in a business capacity. At the same time, the contractor may also have a loyalty or reward program installed in their card for when they make personal purchases at the supermarket.

Figures 5A, 5B, 5C, and 5D illustrate schemes for storing an AID byte string 401 within an applet 351 in accordance with alternative embodiments of the invention. In all four cases the AID is accessed via the card AID interpreter object 411. The card AID interpreter object 411 supports a predetermined set of method calls to perform operations on the AID, such as (for example) get_AID(), which accesses and returns the complete AID, get_RID(), which accesses and returns just the RID component of the AID, etc. From the perspective of other software, the card AID interpreter 411 may therefore be regarded as an AID object. (Any separate existence of an AID object internal to the AID interpreter is transparent to software external to the AID interpreter).

The internal implementation of the card AID interpreter 411 differs between the various embodiments shown in Figures 5A, 5B, 5C, and 5D. However, it will be appreciated that these differences are transparent to (i.e. hidden from) software that uses the card AID interpreter 411 to access the AID and its components (due to object encapsulation). Thus in all cases there is a common method signature for the card AID interpreter class 411. Nevertheless, differences in the internal implementation of the card AID interpreter 411 may have implications for performance, required storage capacity, and so on, as will now be discussed.

In all four embodiments of Figures 5A, 5B, 5C, and 5D, the underlying AID byte string 401 itself is stored in one or more byte arrays, although any other appropriate form of storage primitive(s) could be used. A byte array is then accessed via a buffer object 561, which is a general purpose object that provides method calls for accessing and manipulating its byte array of stored data (i.e. in this case the AID). However, the buffer object 561 has no knowledge of the internal composition of the stored data, such as that the first portion of the AID byte array represents the RID 501, and the second portion of the AID byte array represents the PIX 502.

In the embodiment of Figure 5A, there is relatively little internal structure, and the card AID interpreter 411 calls the buffer object 561 directly in order to access the stored AID data. The card AID interpreter 411 therefore acts in effect as a wrapper for buffer object 561. In a variation on this configuration, the card AID interpreter 411 may be implemented as an extension of the buffer object 561. In either case, the AID interpreter 411 therefore has knowledge of the structure and coding of an AID 401, in order to be able to derive the various AID components from the full stored AID.

Figure 5B illustrates an alternative implementation of the card AID interpreter 411, in which three components of the AID, namely RID 501, Firewall ID 502A, and the Applet ID 502B, are each represented by a respective (sub)object, namely RID object 540, Firewall ID object 541, and Applet ID object. These three subobjects interact with respective buffer objects 561A, 561B, 561C. (It is assumed here that the PIX portion comprises only a Firewall ID 502A and Applet ID 502B - i.e. that there is no Other portion 502C in this particular PIX 502). When card AID interpreter 411 receives a method call for the AID or one of its components, it calls the relevant subobject(s). For example, in response to a get_RID() call, the card AID interpreter 411 calls the RID (sub)object 540, while in response to a get_AID() call, the AID interpreter 411 retrieves all the components of the AID (i.e. RID 501, Firewall ID 502A etc.) from their respective subobjects 540, 541, etc. In the latter case, the card AID interpreter then knows how to assemble the retrieved AID components into the complete AID.

It will be noted therefore that the embodiment of Figure 5B does not store the AID byte string as a complete entity per se. Rather, the various components of the AID are stored separately (in different byte arrays). These components are then assembled in response to a call into the AID interpreter to dynamically generate the complete AID. (A more extensive use of dynamically generated AIDs will be described later in more detail).

The embodiment of Figure 5C represents something of a hybrid between the embodiments of Figures 5A and 5B. Thus in the embodiment of Figure 5C, the AID subobjects (i.e. RID object 540, Firewall ID object 541, and Applet ID object 542) all access a single buffer object 561, which is used to store the complete AID. This use of a common buffer for holding the AID generally permits a more compact storage than the three separate buffers shown in Figure 5B.

Note also that in the embodiment of Figure 5C, the card AID interpreter 411 itself is also able to communicate with buffer 561 directly, i.e. not through one of the subobjects. This helps to speed up operations involving the whole AID (i.e. it avoids having to reconstruct the AID from its various components).

Figure 5D illustrates another embodiment in which the Firewall ID object 541 and the Applet ID object 542 are implemented as transient objects (stored in RAM) rather than persistent objects (stored in EEPROM). In other words, the Firewall ID object 541 and the Applet ID object are only instantiated if particularly required, thereby saving storage on the card.

There are various trade-offs between speed, storage capacity, flexibility, and so on regarding the different embodiments of Figures 5A, 5B, 5C, and 5D. For example, the full subobject hierarchy of Figure 5B provides a good logical representation of the AID structure, but may not offer the best performance levels.

Accordingly, it will be appreciated that the particular implementation adopted for card AID interpreter 411 in any given situation depends upon the circumstances in question. For example, one implementation may be selected if speed is of paramount concern compared to data and code storage capacity, while another embodiment may be selected if the relevant importance of performance and storage capacity is reversed. The skilled person will be aware of which embodiment to select for a given set of circumstances, and will also be aware of potential variations on the particular embodiments illustrated in Figures 5A, 5B, 5C, and 5D.

Returning now to the interaction between a smart card and a terminal, such as illustrated in Figure 4, the provision of multiple (potentially unrelated) applications on a smart card makes it important that the correct application is selected and utilised for any particular session. Note that terminal 110 itself may be dedicated to a single type of application, or may instead support a range of applications.

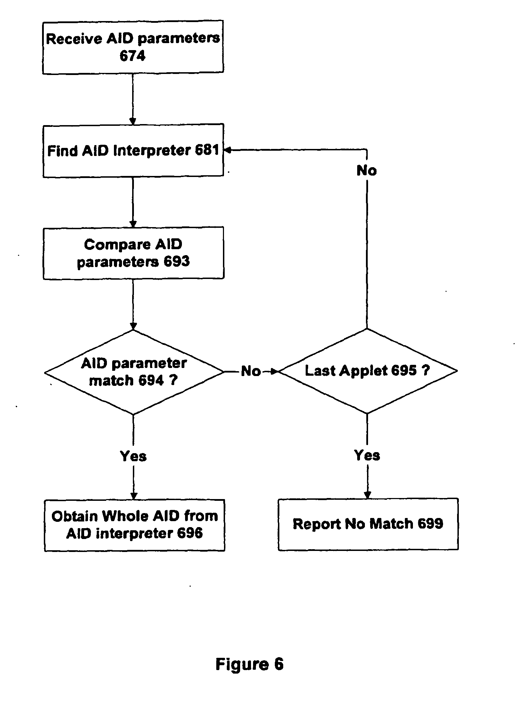

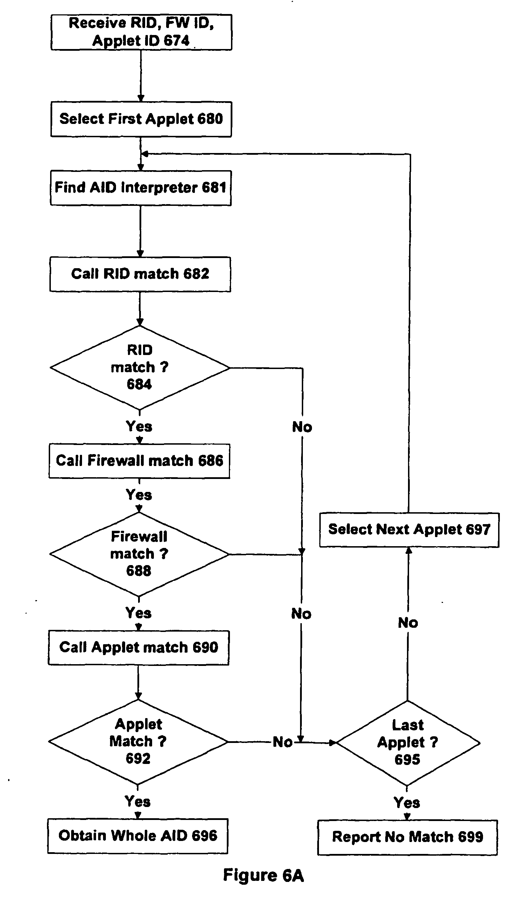

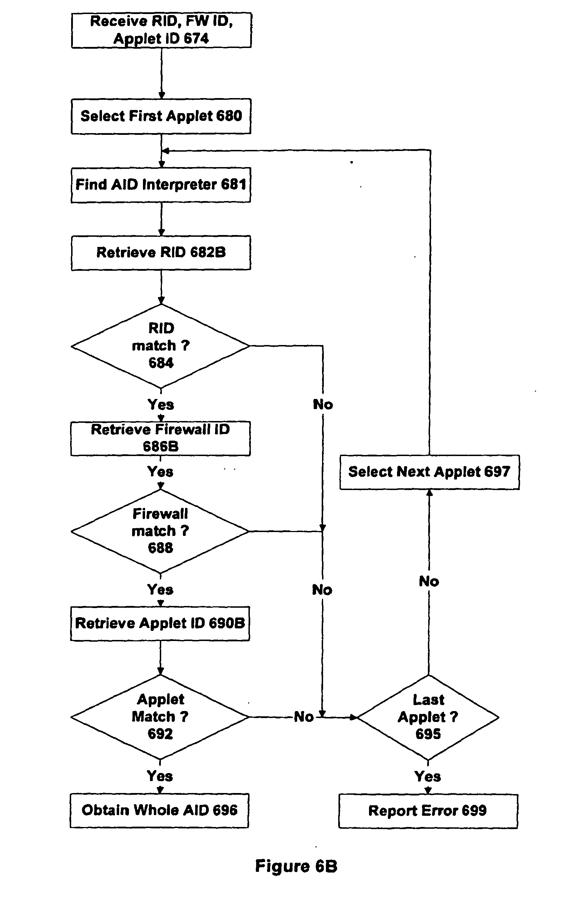

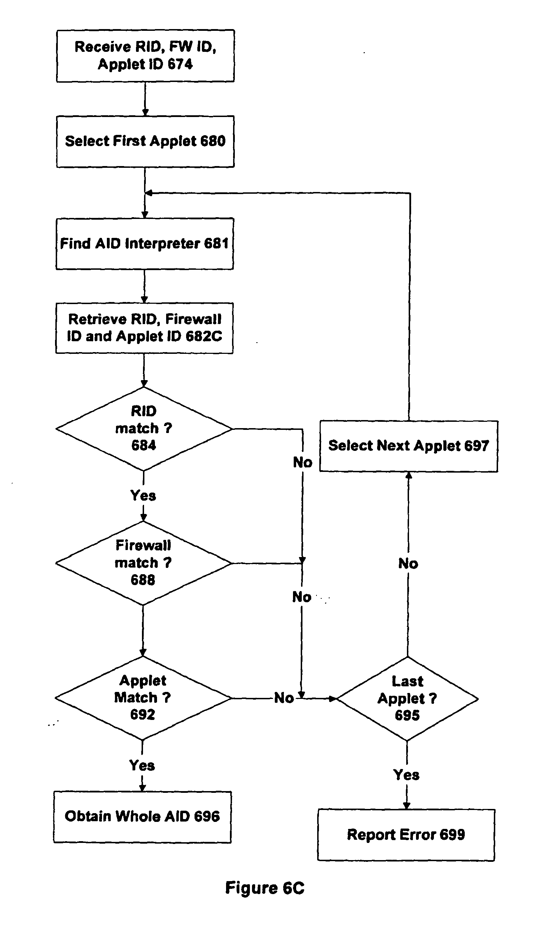

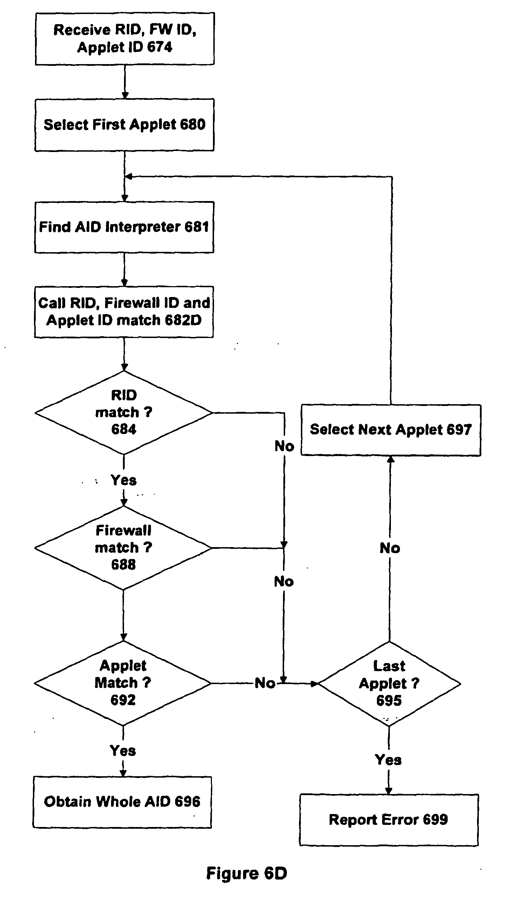

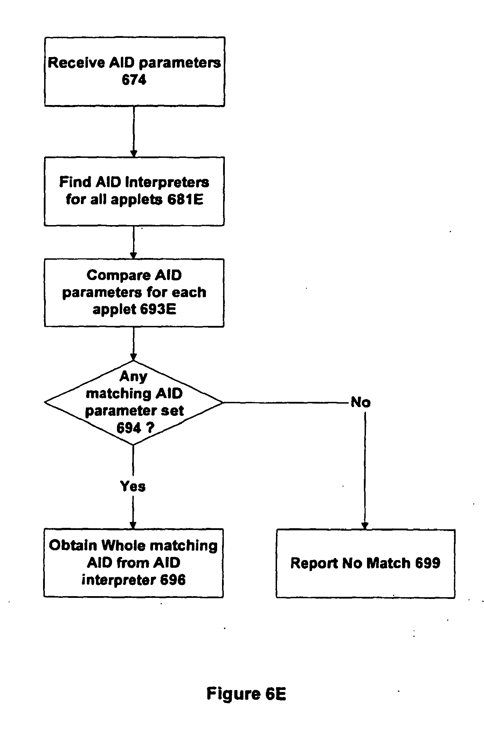

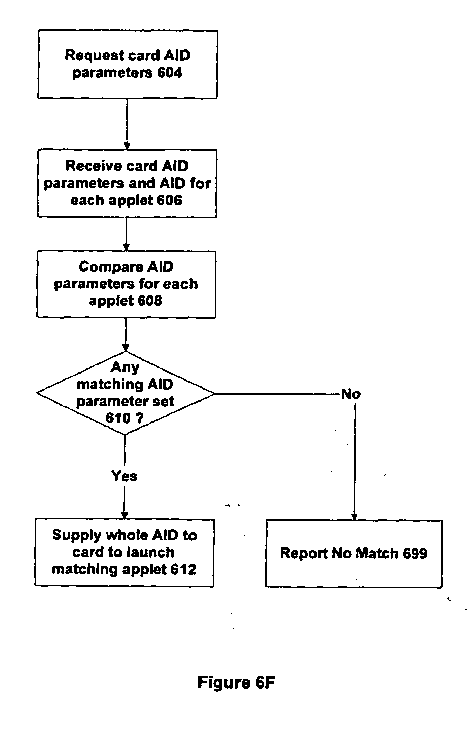

In accordance with one embodiment of the invention, the interaction between a smart card and a terminal still follows in general terms the high-level pattern set out in Figure 1B. However, at a more detailed level, the procedure is significantly different, as illustrated in Figure 6, which depicts processing in accordance with one embodiment of the invention.

The processing of Figure 6 commences with the receipt at step 674 by the smart card 102 of a request from the terminal 110. This request generally corresponds to that transmitted at step 166 in Figure 1B, except that the terminal 110 does not specify a single, complete (or partial) AID per se. Rather, the desired application is identified in terms of multiple parameters. These multiple parameters reflect the different components of the AID, for example as illustrated in Figure 5.

It is now determined which application (if any) on the smart card is identified by the received parameters. This is achieved by comparing the received AID parameters against the AID parameters for the applications on the smart card, which as previously described can be accessed via the AID interpreter 411 for the corresponding applet. Accordingly, the AID interpreter 681 for each applet is located (step 681), thereby permitting the above comparison to be performed (step 693). Various mechanisms for performing this comparison are described in more detail below.

If the AID parameters from a particular applet match those received from the terminal (at step 694), then the complete AID is obtained from the relevant applet (step 696). This complete AID can then be returned to the terminal and the applet corresponding to the AID activated on the card (corresponding to steps 177 and 179 in Figure 1B).

If however the AID parameters from an applet on a card do not match those received from a terminal, then it is checked to see if there are any more applets to examine (step 695). If so, the AID parameters for these further applets are retrieved and tested against the AID parameters received from the terminal. However, if all the applets have now been tested without a positive response at step 695, the smart card now reports to the terminal that it cannot find a match to the requested application (step 699).

Figure 6A illustrates in more detail the processing of Figure 6 in accordance with one particular embodiment of the invention. As previously described, this processing commences with the receipt at step 674 by the smart card 102 of a request from the terminal 110. In this embodiment the desired application is identified in terms of three parameters:
(i) an RID 501
(ii) a firewall identifier 502A; and
(iii) an applet identifier 502B.
Note that although these parameters are logically separate, they in practice be conjoined into a single string in the request itself in order to facilitate transmission between the terminal 110 and the smart card 102 (this is discussed in more detail below).

In one embodiment, if the firewall identifier 502A specifies a firewall that is known to contain at most only a single application, then the applet identifier 502 can be omitted. Conversely, the firewall identifier 502A can be omitted in one embodiment, typically if the applet identifier 502B is known to be unique to that RID 501.

A request containing the above three parameters is therefore received on the smart card at step 674 by the applet selector 412 (see Figures 3 and 4). The applet selector then has to find an application 351 on the card that matches these parameters (corresponding in general terms to step 176 of Figure 1B, or to steps 681, 682 and 684 of Figure 6). Thus following receipt from terminal 110 of the request specifying the RID 501, Firewall ID 502A, and Applet ID 502B of the desired applet, the applet selector 412 calls each installed applet to try to match these three parameters. More particularly, a first applet is selected (step 680), and the applet selector 412 calls this applet in order to obtain access to the card AID interpreter 411 within the applet (step 681).

Once the card AID interpreter for the applet has been located, the applet selector 412 calls a match_RID() method (or such-like) on the card AID interpreter 411 (step 682). In making the match_RID() call, the applet selector passes as a parameter the particular RID 501 that was received from the terminal - i.e. the RID to be matched. The card AID interpreter 411 then tests the received RID against the locally stored RID for that applet (step 684). The exact manner of performing this test will depend upon the method signature and internal implementation of the card AID interpreter 411, such as discussed above in relation to Figures 5A, 5B, 5C, and 5D.

After the card AID interpreter 411 has tested the RID received from the terminal against the RID for that applet, the match_RID() method call returns a positive or negative response as appropriate (step 684). If this response is negative, then it is known that this applet cannot be the one desired by the terminal 110, since the RID does not match. Accordingly, in this case the applet selector 412 proceeds to select another applet 351 on the card to test (step 697).

On the other hand, if an RID match is obtained at step 684, the applet selector 412 next examines whether the Firewall ID received from the terminal matches the locally stored Firewall ID for the applet. This testing is again performed by making an appropriate call (e.g. match_FirewaIIID()) from the applet selector to the card AID interpreter 411 (step 686). If the card AID interpreter produces a negative response to the match_FirewaIIID() call, the Firewall ID received from the terminal does not match the Firewall ID stored in the applet. Accordingly, the applet in question cannot be the one desired by the terminal. The applet selector therefore again proceeds to select the next applet for investigation (step 697).

Alternatively, if the testing of the Firewall ID at step 688 results in a positive match, the applet selector 412 now examines whether the Applet ID received from the terminal matches the Applet ID stored within this applet (step 690). Again, this is achieved by making an appropriate method call into the card AID interpreter 411 (step 690). In response to this call, the card AID interpreter 411 tests the Applet ID received from the terminal against the Applet ID stored within the applet (step 692). If this test yields a negative outcome, then the applet in question cannot be the one desired by the terminal, since the Applet ID does not match. Accordingly, the applet selector 412 again proceeds to select the next applet for consideration (step 697).

On the other hand, if the test of Applet ID at step 692 gives a positive result, then the desired applet been located, since the RID, Firewall ID and Applet ID must all match. In this case, the applet selector 412 calls the get_AID() method of the card AID interpreter 411. This call returns the complete AID for the matching applet (step 696), which can then be passed back to the requesting terminal (corresponding to step 179 in Figure 1B). In addition, the matching applet will also typically be launched on card 102 (corresponding to step 177 in Figure 1B).

Note that it has been assumed so far that there is a single applet 351 on a card that matches the terminal request. However, this assumption may not necessarily hold. Thus if the application 351 requested by the terminal 110 is not present on the card 102, then no matching applets will be found. This situation is accommodated in the flowchart of Figure 6A where a test is made at step 695 to see if all the applets have been examined. If so, and there are no further applets to investigate on the card, the applet selector 412 has to send a negative report back to the terminal (step 699), indicating that the requested application is not installed on the card. Depending on the particular terminal in question, this may terminate the session between the card and the terminal, or may lead the terminal to submit a request for a different application on the card (i.e. to specify a different set of RID 501, Firewall ID 502A, and Applet ID 502B parameters).

It is generally expected that the RID, Firewall ID and Applet ID reliably define a unique application, so that the situation of finding more than one matching applet on a card for a particular terminal request should not arise. However, in some embodiment, a more generic matching process can be utilised. For example, the terminal can be permitted to omit an applet ID from its request at step 674. In this case, there may potentially be multiple matching applications (i.e. all the applications located within the specified firewall). One option would be to handle this situation similarly to the way in which existing systems handle a partial AID that matches multiple applications (i.e. by returning one match at a time for each terminal request). Another possibility is to modify the flowchart of Figure 6A by proceeding from step 694 (obtain whole AID) to step 695. In this case, processing would always eventually arrive at step 699, once the applet selector had investigated all the applets on the card. At this point the applet selector 412 can then return to the terminal the complete set of matching AID(s) that have been found, or report the absence of any match (as appropriate).

Figure 6B depicts an alternative implementation of the application matching process in accordance with one embodiment of the invention. Note that many aspects of this embodiment are the same as for the embodiment of Figure 6A, and so will not be described in detail. The main difference is that in this implementation it is the applet selector 412 that is responsible for performing the testing of the three input parameters, namely the RID 501, the Firewall ID 502A, and the Applet ID 502B (rather than the card AID interpreter 411, as in the embodiment of Figure 6A).

The processing of Figure 6B again starts when a terminal 110 sends a request containing the parameters identifying the desired application, and this request is then received by the smart card (step 674). However, instead of the applet selector 412 now passing these parameters to the selected individual applets 351 (as in the embodiment of Figure 6A), in this embodiment the applet selector 412 calls the card AID interpreter 411 for each selected applet in order to retrieve the corresponding parameters stored in that applet. Thus the applet selector retrieves the RID 501 for a selected applet from the card AID interpreter 411 at step 682B, the Firewall ID 502A for the selected applet from card AID interpreter 411 at step 686B, and the Applet ID 502B for the selected applet from card AID interpreter 411 at step 690B. The retrieval of step 682B can be regarded as being performed using a get_RID() call, in contrast to the match_RID() call used in the embodiment of Figure 6A.

After each parameter has been retrieved from the card AID interpreter 411, the Applet selector 412 tests the retrieved parameter against the corresponding parameter received in the request from the terminal. Thus applet selector 412 tests at step 684 for a match of RID 501, at step 688 for a match of Firewall ID 502A, and at step 692 for a match of Applet ID 502B. If all three matches turn out positive, then the desired applet has been identified, and the applet selector can request the complete AID for this applet from the relevant card AID interpreter (step 694). (Note that the applet selector 412 itself will not generally know how to form a complete AID from the three parameters it already has, nor will it know whether any additional information, such as Other 502C (see Figure 5), might be required for such a task). The applet selector can then return the complete AID back to the terminal that originally submitted the request (corresponding to step 179 in Figure 1).

It will be appreciated that there are many variations on the above approach. For example, rather than investigating the RID, the Firewall ID, and the Applet ID in turn, the card AID interpreter 411 can support a single combined method call to match (or retrieve) two or three of these identifiers at once. One example of this is shown in Figure 6C, which depicts processing in accordance with one embodiment of the invention. The flowchart of Figure 6C is broadly similar to the flowchart of Figure 6B, except that the applet selector retrieves all three parameters, namely the RID, the Firewall ID and the Applet ID, in a single operation at step 682C. These three retrieved parameters can then be matched against the parameters received from the terminal, in the same way as described for Figure 6B. Note that in one embodiment, the selector can retrieve the complete AID in step 682C as well as the various AID components, in which case step 696 of Figure 6C can subsequently be omitted.

Figure 6D illustrates a further embodiment, which is the same as that of Figure 6C, except that the parameter matching is performed by the various AID interpreters 411 at step 682D (as in Figure 6A), rather than by the applet selector. Thus in the embodiment of Figure 6D, the applet selector 412 invoke a (combined) call on the AID interpreter 411, and as part of this call passes to the card AID interpreter 411 of an applet the parameter triplet of RID 501, Firewall ID 502A and Applet ID 502B received from the terminal (step 682D). The card AID interpreter 411 then tests these three parameters against the corresponding components of the AID stored within the relevant applet (steps 684, 688, and 692). If all three parameters match, then the card AID interpreter 411 returns a positive response to the call. On the other hand, if one or more of the parameters do not match, a negative response is returned. (N.B. In one implementation, in the event of all three parameters matching, the card AID interpreter 411 includes the complete AID string in its return to the applet selector 412, thereby avoiding the applet selector having to make a separate request for this at step 696).

A further possible variation is that rather than the applet selector investigating the different applets on a card sequentially (i.e. one applet at a time), as in Figure 6, the applet selector 412 instead investigates multiple (potentially all) applets at the same time. In other words, the processing of Figure 6 (steps 681 through to 694 in particular) is performed for each applet in parallel. This is illustrated in the flowchart of Figure 6E, which depicts processing in accordance with one embodiment of the invention. Note that the processing of Figure 6E can be performed by any suitable parallel implementation of the flowcharts of Figure 6A through 6D, in which case the loop back via step 697 is clearly omitted. The applet selector 412 can then collate the results from each separate applet in order to determine overall whether a matching applet has been identified.

Although the embodiments of Figure 6 through to 6E all perform the applet matching on the smart card 102, this matching can also be performed on terminal 110, as illustrated in the flowchart of Figure 6F, which depicts processing in accordance with another embodiment of the invention. The flowchart of Figure 6F commences with the terminal requesting information about the applets on the card 102 (step 604). In response, the terminal receives the RID 501, firewall ID 502A and applet ID 502B as well as the complete AID 401 for each applet on the card (step 606). This allows the terminal to try to identify the desired applet, based on matching its RID 501, firewall ID 502A and applet ID 502B (step 610). Once this applet has been identified, the terminal can now ask the applet selector 412 to launch or activate this applet by specifying the corresponding (complete) AID (step 612). A further possibility is for the terminal itself to include a proxy AID interpreter 811, as described in more detail below.

It will be appreciated that selecting an application on the basis of the RID 501, Firewall ID 502A, and Applet ID 502B avoids a terminal 110 having to identify a desired application by its precise AID 401. This considerably enhances flexibility compared to existing implementations, in which a terminal has to provide a full or partial AID, and receives back the full AID for each matching application. In particular, it is now possible for the contents and format of an AID 401 to vary without compromising compatibility with the terminal 110, provided that the Firewall ID 502A and Applet ID 502B themselves are maintained constant.

There are several reasons why such variation in the contents and structure of an AID 401 may occur. For example, the PIX portion 502 of the AID can be used to store additional information (i.e. Other 502C, as shown in Figure 5) which is potentially variable. Such additional information can typically relate to the card itself, such as its remaining memory capacity. Another possibility is that this additional information relates to the card application corresponding to the AID in question. For example, the Other 502C portion can include a version number or configuration details for the application. (Such information would typically not impact application selection, but might be relevant to further processing of the session).

The additional information stored in the Other 502C is normally not available to the terminal 110 (prior to interaction with card 102). Consequently, the terminal does not know the entire AID for matching. However, using an approach such as illustrated in Figures 6 though 6F, the terminal can still locate the desired application on the card by virtue of the application's RID, Firewall ID, and Applet ID, which the terminal does know in advance.

Of course, existing systems can potentially accommodate additional (variable) information in the AID by placing such information at the end of the AID, and then using a partial match on the prior (fixed) portion of the AID. However, this requires the terminal to know in advance the specific byte sequence for the partial AID. Furthermore, it also restricts the placement of any variable information to the end of the AID. In contrast, the approach described herein does not impose any restrictions as to where or how the Firewall ID 502A and the Applet ID 502B are stored within the PIX portion 502 of the AID. For example, they could be located at the end of the AID, after any other (potentially variable) information.

In one embodiment, the terminal and the AID interpreter apply a shared or common data representation to the Firewall ID and the Applet ID. This common data representation can correspond to a primitive data type (such as an integer), or to a complex data type (such as a 16-byte string). This shared representation is generally larger than the actual number of bytes allocated to each parameter inside the stored AID (which is of course limited to a maximum of 11 bytes corresponding to the size of the PIX portion 502 of the AID). Consequently, the AID interpreter 411 performs the appropriate size conversion between the internally stored Firewall ID (of say 3 bytes) and the external data representation of the Firewall ID (of say 16 bytes), and vice versa, as required.

Having a shared data representation for external manipulation of the Firewall ID 502A and/or Applet ID 502B portions allows the internal storage of these parameters to be altered without impacting terminal compatibility. For example, a particular supplier (i.e. having a particular RID 501) may have originally allocated a certain portion of the PIX 502 to the Firewall ID 502A and the remainder to the Applet ID 502B. However, it may subsequently transpire that there are a greater number of potential Firewall IDs than can be accommodated within the initially allocated portion. In this situation, the supplier may decide to increase the portion of the PIX 502 used to store the Firewall ID 502B. Since terminal 110 is only concerned with the external manifestation of these parameters, such modifications are quite transparent to the terminal. (In contrast, if the terminal 110 were matching a precise AID string, as in existing systems, the byte reallocation between the Firewall ID and the Applet ID is potentially problematic).

A further possibility is to divide the PIX portion at the bit (rather than byte) level, which helps to maximise utilisation of this very limited coding space - e.g. a single byte can be split across two or more fields. This then requires somewhat more complicated processing of the internal representation (i.e. within the AID interpreter), given the need to work with individual bits. However, if the common data representation is maintained at the byte level, external programs (such as running on terminal 110) are shielded from the complexities of the internal bit operations.

It will be appreciated that if the internal data format within the AID interpreter is different from the common data representation, then operations involving getting (reading) or matching an AID component have to perform a conversion from internal to external format. The conversions for such reading or matching operations can typically be achieved in a straightforward manner by prepending the appropriate number of null bytes (e.g. 13 in the above case) in order to convert from an internal format into an external format.

Note that the situation is a little more complex in reverse, when going from the external representation to the internal representation. In these circumstances, the value supplied from the terminal will generally be longer (say 16 bytes) than the space available (say 3 bytes) within the AID byte array on the card (or other internal storage facility). Typically, most of the bytes in the AID parameter passed from the terminal to the card will be zero, and so can be truncated to fit the parameter into the AID byte array. On the other hand, if a non-zero byte is to be truncated, then this generally represents an error situation, and should be flagged accordingly. However, the AID components in question (i.e. the Firewall ID portion 502A and the Applet ID portion 502B) are not normally updated after applet initialisation, thereby avoiding difficulty in this respect.

In summary therefore, the present approach matches AID parameters (generally RID 501, Firewall ID 502A and Applet ID 502B) via an AID interpreter in order to identify a desired application on a card. The precise manner in which the AID and its components are encoded and stored onto card 102 is hidden behind the AID interpreter, and need not be known to the terminal 110. This then enables terminal 110 to use a relatively stable and straightforward interface to identify applications across a wide range of cards 102, preserving compatibility without unnecessarily constraining the contents of the AID itself. Consequently, the extra level of indirection, whereby the AID 401 contents are only accessed via AID interpreter 411, provides great flexibility as to how the AID 401 is utilised and updated.

Note that although Figures 6 through 6F depict from the handling of an AID in terms of multiple (logical) components, it will be appreciated that from an implementation perspective the separation of these parameters can be less apparent. For example, in communications between the smart card 102 and the terminal 110, the parameters (i.e. RID 501, Firewall ID 502A and Applet ID 502B) can be combined into a single byte sequence for ease of transport and manipulation (e.g. as a data packet). This implies that in addition to a single common data representation for the parameters themselves, there can be a standard way of packing them into a single byte sequence or other appropriate transport format.

Likewise, although the different parameters are depicted in Figure 5 as independent of one another, this need not necessarily be the case. For example, in some embodiments the firewall ID can in fact be defined as the concatenation of RID portion 501 and Firewall ID portion 502A. It will be appreciated that such an approach still allows a terminal or other software to distinguish between applications in different firewalls. Moreover, this hierarchy reflects the fact that each RID operator (as defined by RID 501) defines its own set of firewall, and so Firewall ID portion 502A can only be sensibly interpreted given its corresponding RID portion 501. An example of an implementation that adopts such a hierarchical structure is included in Appendix A.

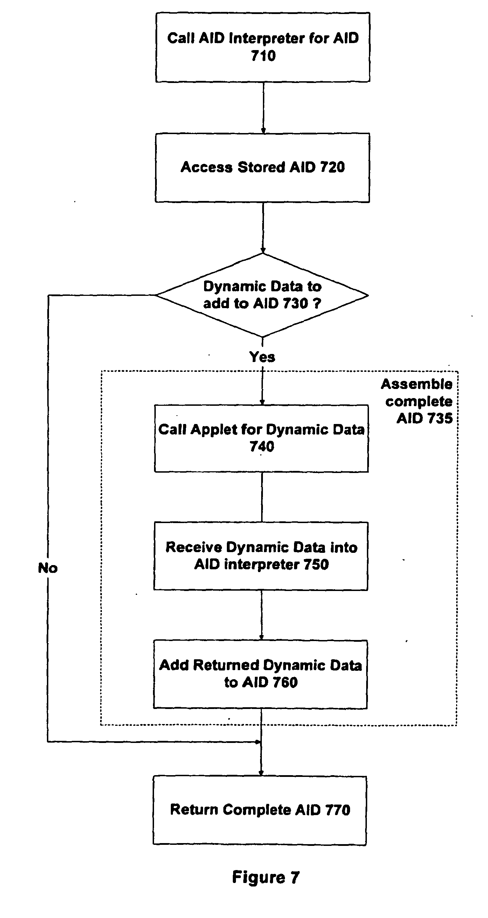

Figure 7 is a flowchart that illustrates in more detail a mechanism for a card AID interpreter 411 to provide an AID in accordance within one embodiment of the invention. The processing of Figure 7 illustrates in particular the situation where at least a portion of the AID is constructed dynamically using state information maintained on the card 102. In other words, the AID is used to encode information about the state of the card or the application corresponding to that AID. Some of this data may be stored separately from the static portions of the AID (such as RID 501, Firewall ID 502A, and Applet ID 502B0). This state information then has to be dynamically combined with the static portions to create the complete AID. (N.B The Other portion 502C of an AID, such as illustrated in Figure 5, may comprise static data and/or dynamic data).

The flowchart of Figure 7 commences with the card AID interpreter 411 receiving a method call for the (complete) AID (step 710). Such a call typically arises during a session with a terminal, perhaps because the applet selector 412 wants to retrieve the AID for the matching application in order to return the AID to the terminal (as per step 696 of Figure 6). However, the card AID interpreter may have to provide a complete AID in other circumstances as well. One possibility is that a smart card is asked to provide a complete listing of AIDs for the applets installed on the card, either for applet selection purposes (as in Figures 6 and 6A), or for more general card management operations. Another possibility is that if a transaction updates some portion of the AID to be stored on the card, then it can request a read-out of the AID at the end of the session, in order to confirm that the update has been correctly saved onto the card..

The AID interpreter responds to the request of step 710 by accessing the stored AID byte array (step 720). The exact manner in which this is performed depends on the internal implementation of the AID interpreter, as discussed above in relation to Figures 5A, 5B, 5C, and 5D. For some applets, the byte array retrieved at this stage represents the complete AID (i.e. there is a negative outcome to the test of step 730). In such cases, the card AID interpreter can immediately proceed to return the retrieved AID to the calling object (step 770, via step 730). However, in other situations, the AID includes a dynamic component, i.e. there is a positive outcome from step 730. (It will be appreciated that in an actual implementation of a card AID interpreter 411, the test of step 730 is typically omitted; rather, the card AID interpreter is hard-wired to include, or not to include, dynamic data, as appropriate for the applet in question).

The dynamic component of the AID may represent, for example, a current balance for the card, the date of the last transaction of an application, or any other desired data. This dynamic data can, in principle, be stored within the card AID interpreter 411 itself, and so be directly accessible to the card AID interpreter. However, more generally the dynamic data is located separately from the card AID interpreter, which pulls in the dynamic data on-the-fly when it is required to generate a complete AID. For example, in some embodiments the dynamic data is held in general card data storage 414 (see Figure 4), which is typically implemented in a portion of EPROM 314 assigned to or accessible by the application in question.

If the AID does incorporate dynamic data, the next task is to assemble the complete AID from this dynamic data and the static data (step 735). The exact manner of doing this depends upon how and where the dynamic data is stored. Figure 7 illustrates one particular situation, where the card AID interpreter 411 calls the applet to which the card AID interpreter belongs to provide the dynamic data (step 740). The applet responds by obtaining the dynamic data, typically by accessing one or more subobjects within the applet that are responsible for maintaining the dynamic data. Next, the applet returns this dynamic data to the card AID interpreter, for example by using a call-back mechanism (step 750). When the AID interpreter 411 has obtained the desired information, it generates a composite or final AID by combining the stored and dynamic components as appropriate (step 760). The newly generated AID can then be returned (step 770) in response to the original request at step 710.

It will be appreciated that there are many other possible implementations of step 735 apart from that shown in Figure 7. For example, in some embodiments the card AID interpreter itself maintains the dynamic AID component, in which case it would not need to contact the applet for this information. Alternatively, the applet may (upon prompting) write the dynamic component directly into the low-level AID storage facility. In this situation, step 720 is postponed until after step 735, whereupon the card AID interpreter 411 would, in effect, retrieve a complete and already updated AID. Other possible implementations will be apparent to the skilled person.

An example of the dynamic data that can be handled by the processing of Figure 7 is a credit balance controlled by a purse object. The purse object may perhaps store two parameters in card data 414, the first representing the amount of money deposited onto the card, and the second the amount of money spent from the card. The difference between these two amounts then gives the current balance, and it may be this figure (the balance) that is to be incorporated into the AID. In this situation, the purse object responds to the call of step 740 by calculating the current balance (i.e. by subtracting the amount spent from the amount deposited), and then returning the balance to the card AID interpreter for incorporation into the AID. Note that in this implementation, not only is the AID assembled dynamically, but it also incorporates data that does not normally exist per se on the card (rather, the dynamic data that is incorporated into the AID is derived from other data values that are present on the card).

It will be appreciated that there is a wide range of possibilities for dynamic data to be included in an AID. For example, the dynamic data can reflect the date and/or time of last use of the application, the location of the terminal of last use, or any other desired application or card property. This then gives considerable flexibility in terms of how the card, and in particular the AID, is used.

Note that the dynamically inserted data is not necessarily subject to change during the lifetime of the card or application. In some embodiments this data can instead represent a fixed (or relatively fixed) property, such as the remaining memory capacity of the card, the version number of an applet, etc. One advantage of storing details of this (potentially fixed) property or state outside the card AID interpreter 411 is where the same data is to be utilised by multiple applications. For example, the AID may be constructed to include an indication of which encryption facilities are present on the card, since this may impact the type of operations that a terminal can perform with the card. However, since these encryption facilities are common to all applications on the card, it is convenient for the relevant indication to be stored in a single, centralised location (typically in card data 414).

In these circumstances, the card AID interpreters for the various applications on the card 102 can use the procedure of Figure 7 to retrieve this centralised indication of encryption facilities as dynamic state information. The retrieved information can then be incorporated into the AID for the respective applications, as and when required by the AID interpreters 411. It will be appreciated that storing a single copy of data (in this case the indication of encryption facilities) in a shared resource, such as data block 414, where it can then be accessed by multiple applications on the card, is generally more efficient than encoding the data separately into the AID for each application on the card.

Another benefit of storing dynamic data outside the card AID interpreter 411 is that the card AID interpreter itself does not need to know how to access, manipulate or format the dynamic data. Rather, this can be left to those objects that primarily interact with the dynamic data (and typically update it). This then allows a higher degree of generality for the card AID interpreter 411 itself.

Thus in one embodiment the card AID interpreter knows whether or not the AID includes dynamic data, and if there is such dynamic data, how to obtain it (e.g. which method to call on the applet) and how to incorporate it into the AID byte string (perhaps to insert the dynamic data as Other 502C in bytes 13-15). However, the card AID interpreter does not need to have any further understanding of or interaction with the dynamic data.

For example, if the smart card stores two values, one representing amount placed on the card, the other amount spent (as suggested above), then in general the card AID interpreter 411 does not calculate the balance itself. Rather, the card AID interpreter calls its applet for the dynamic data to incorporate into the AID, and receives back the balance (already calculated) in response. Typically the applet itself obtains the balance by calling an appropriate method on the object responsible for maintaining the two data values in question (such as a purse object). This object then performs the necessary subtraction in order to produce and return the current balance to the card AID interpreter. The same object would also generally be responsible for suitably formatting the dynamic data for inclusion in the AID. For example, where the balance details are maintained in the purse object as real numbers (or possibly integers), the result can be converted into a byte string before return to the card AID interpreter for compatibility with the rest of the AID.

As described above, the presence of the AID interpreter 411 on smart card 102 relieves the terminal 110 of having to utilise the AID 401 directly in order to locate a desired application. Nevertheless there are other situations where the terminal 110 itself does want to be able to access and interpret the AID 401. For example, there may be other information encoded into an AID 401 passed to the terminal 110 that the terminal desires to use during the session, such as the Other portion 502C (see Figure 5).

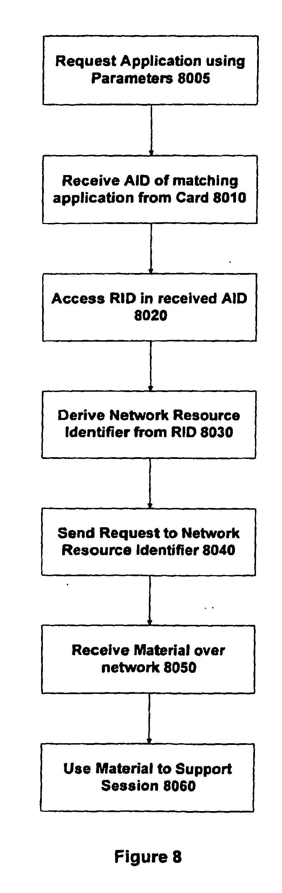

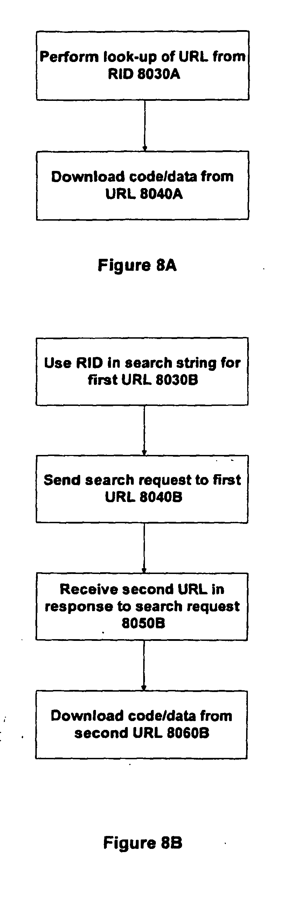

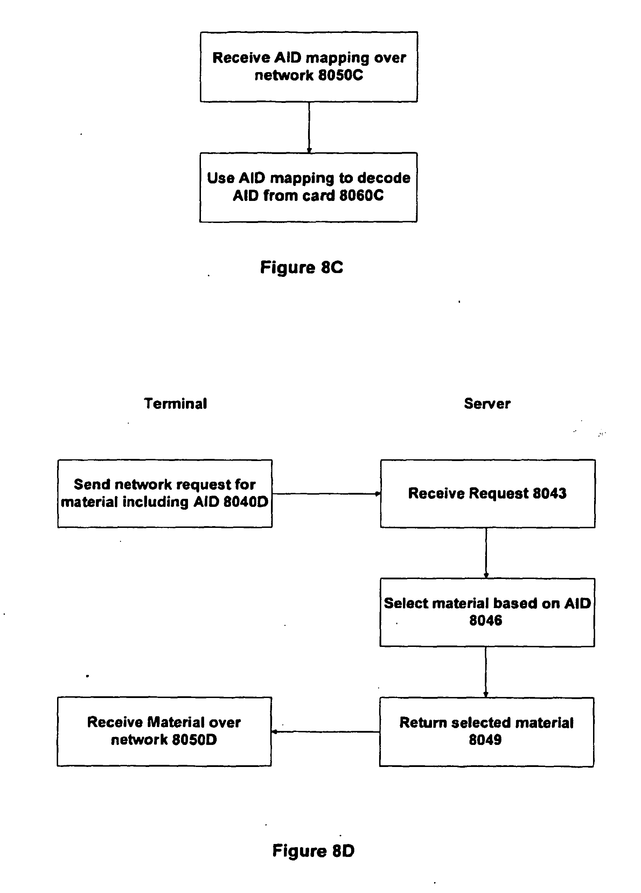

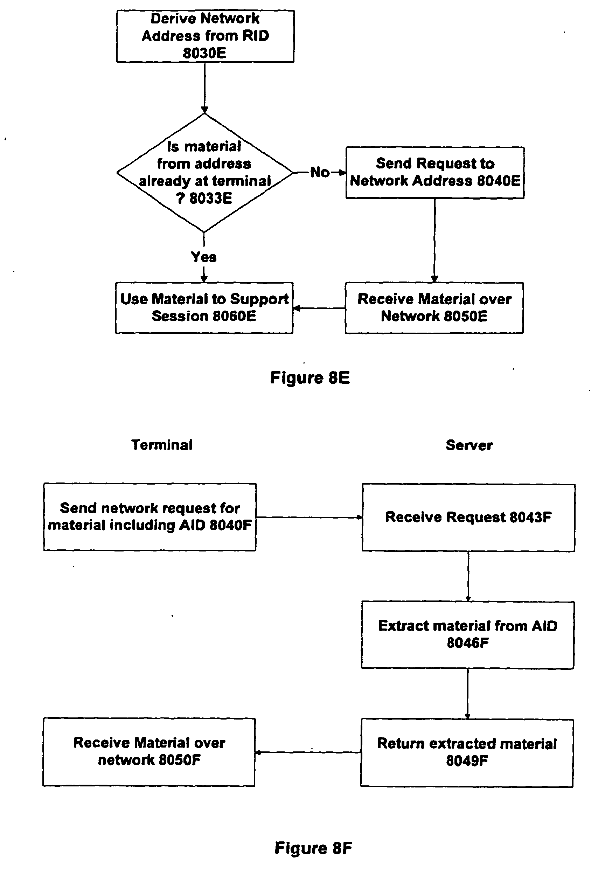

This situation is addressed by the procedure of Figure 8. Figure 8 which illustrates processing performed at a terminal 110 during a session with a smart card 102 after preliminary interactions between the terminal 110 and the card 102, such as card activation (see Figure 1B), have been completed, in accordance with one embodiment of the invention. The flowchart of Figure 8 commences with the terminal specifying a desired matching application (step 8005). This operation corresponds in general terms to step 166 of Figures 1B and 1C. In the particular implementation shown, the request for a matching application is performed using multiple parameters, such as RID 501, Firewall ID 502A, and Applet ID 502B. These parameters allow the smart card to identify a matching application, as described above in relation to Figures 6 through 6E. The smart card then returns the AID for the matching application, which is duly received by the terminal (step 8010, see also step 180 of Figures 1B and 1C).

Having received the AID from the card, the terminal typically has to interpret the AID in order to complete the desired user interaction. However, maintaining knowledge of the AID structure within the terminal itself can be problematic, particularly where the terminal 110 supports multiples applications from a variety of suppliers. Furthermore, as described above, a matching application can now be identified on the basis of certain parameters, such as Firewall ID and Applet ID, rather than requiring the terminal to store a complete AID string for this purpose. Having therefore avoided the terminal initially needing full knowledge of the AID on the card for application selection, it is also desirable to prevent the terminal having to maintain a detailed understanding of the AID format for subsequent interaction with the application. This then allows a terminal to be generic as possible, and avoids having to update terminal software whenever there is a change in AID structure (or conversely, permits changes in AID structure without compromising compatibility with the installed base of terminals).

Nevertheless, a terminal always knows from international standard ISO/IEC 7816-5 that the first five bytes of an AID represent the associated RID 501. Accordingly, once the terminal has received the incoming AID from the smart card 102, it is able to retrieve this RID portion 501 by extracting the first five bytes of the received AID (step 8020).

In accordance with the procedure of Figure 8, the terminal now uses this RID portion 501 to obtain some form of network resource identifier (step 8030). Typically this network resource identifier represents a Uniform Resource Locator (URL) on the Internet (or similar intranet or extranet), but it may represent any other suitable type of network address or resource specifier, etc.. There are a variety of possible mechanisms by which such a URL may be acquired from the extracted RID portion 501. For example, the terminal may maintain a lookup table that maps from RID portion 501 to specific URL. Alternatively, the terminal may follow some algorithm to convert from the RID to a URL. A further possibility is that some hybrid of the above two approaches is adopted, such as using the lookup table as the first option, and then forming a URL directly if there is no entry in the lookup table for that particular RID.

If step 8030 involves forming a URL directly from the RID, then typically some mechanism is provided (such as a constructor method) for converting from the RID byte string into a URL. Thus the RID byte string can first be represented in hexadecimal form, which is then transformed into a corresponding text string for incorporation into a URL. Alternative methods for deriving a network resource identifier from the RID byte sequence can also be employed, such as using one or more bytes directly to specify an IP address of a URL (this can be done by using the "%" character, followed by two hexadecimal characters to specify an octet).

Note that any initial mapping of the AID into a URL by the terminal is non-semantic, in that the terminal converts the AID byte sequence into a URL via some mechanism such as the hexadecimal transformation discussed earlier. However, this mapping process is not expected to recognise or interpret any components of the AID (other than perhaps the RID, whose position within the AID is predefined by standard).

Once the network resource identifier has been derived from the RID, terminal 110 now sends a request to the URL or other address corresponding to the RID 501 (step 8040). In due course, the terminal receives back over the network a response comprising some form of material relevant to the AID (step 8050), which is then used to support further activities in the session (step 8060). It will be appreciated that the manner of this use depends upon the nature of the downloaded material (e.g. whether it is code, data or a network service address, etc.). One particular situation, where the downloaded material comprises an AID interpreter for use on the terminal 110, will be discussed in more detail below.

Returning to step 8030, the RID can be used to define the domain name portion of a URL. In other embodiments, the RID can be provided in effect as an http parameter associated with the domain. One embodiment involving the former option is illustrated in Figure 8A, which depicts in more detail certain steps from the flowchart of Figure 8. Thus in Figure 8A, the network resource identifier represents a URL which is derived from the RID by performing a lookup in a table or database, etc. (step 8030A, corresponding to step 8030 in Figure 8). The table or database is maintained locally on the terminal. The terminal then downloads code and/or data as required from this URL (step 8040A, which can be regarded as corresponding to both steps 8040 and 8050 in Figure 8).

In some embodiments, the URL initially derived from the RID 501 comprises a guide or indicator to one or more sites from which further material can be accessed. For example, the URL initially obtained at step 8030 can provide a link to a further web site where the material is located (perhaps using the http redirect mechanism). The terminal then follows this link (or chain of links) in order to retrieve the relevant material. An example of this is where the terminal forms a URL comprising a generic portion, representing perhaps a constant Web site (and page), and an RID-dependent portion, comprising the RID in hexadecimal form. The RID-dependent portion is therefore presented in effect as an entry field associated with the generic page (analogous to encoding a search term into a URL for a search engine). This can then be used to determine the address of further material.

Such an embodiment is illustrated in the flowchart of Figure 8B, which again depicts in more detail certain steps from the flowchart of Figure 8. Thus in Figure 8B, the RID received from the card is appended as a search parameter to a predetermined first URL stored locally on the terminal (step 8030B, corresponding to step 8030 in Figure 8). This then forms a search request which is sent to the first URL (step 8040B, corresponding to step 8040 in Figure 8). In response to this request, the terminal receives a second URL (step 8050A, corresponding to step 8050 in Figure 8). The terminal now downloads code and/or data from this second URL for use in the session with the card (step 8060B, corresponding to step 8060 in Figure 8).

There is a very wide range of material that can potentially be obtained by the terminal at step 8050 in Figure 8. For example, in the embodiment of Figure 8B, the material initially downloaded for use in the session is in fact the second URL, which then directs the terminal to another location from which additional material can be obtained. In another embodiment illustrated in Figure 8C, the downloaded material comprises a data mapping, representing the structure of the AID 401 used by that organisation (step 8050C, corresponding to step 8050 in Figure 8). The terminal can then use this mapping in order to extract desired information (such as a current balance) from the AID supplied from the smart card (step 8060C, corresponding to step 8060 in Figure 8). Note that there can be multiple such mappings for a single organisation (as specified by the RID), with the particular mapping to be used dependent on some other data encoded into the PIX portion of the AID. In one such embodiment, the terminal receives over the network a full set of possible mappings for that RID, and then selects an appropriate mapping from this set based on the particular AID that it obtained from the smart card. In another embodiment, illustrated in Figure 8D, the terminal incorporates the full AID into the initial network request of step 8040D (corresponding to step 8040 in Figure 8). The web server receives this request (step 8043) and uses the complete AID to select the material to supply back to the terminal (steps 8046), downloading only the material (e.g. a mapping) appropriate to that particular AID (step 8049), which is received by the terminal in due course (step 8050D, corresponding to step 8050 of Figure 8).

In other embodiments, the material received by the terminal over the network comprises code (potentially in addition to other forms of material). There are a variety of possible code components in the supplied material, such as a user interface for the terminal to use with the cardholder, or a proxy AID interpreter 811 (see Figure 4) to allow the terminal 110 to decode the AID received from the smart card. In an alternative embodiment, the code downloaded is responsible for actual processing of application data during the session with the card (i.e. forming part of proxy code 410). It will be appreciated that two or more of these code components can be downloaded in any given session.

The code can be provided to the terminal in a variety of forms, such as raw class files or as Java Archive (JAR) files or packages, each containing (compressed) Java code plus manifest. The downloaded code can then indicate further classes or packages that may need to be retrieved from over the network in order for the application to run. A further possibility is that the terminal receives a Java Application Descriptor (JAD) file. This is an XML file that includes one or more URLs specifying where the relevant application code is located, as well as the location of any data associated with the application. The XML file can further include one or more descriptors relating to the application. The terminal can then download the code and data in accordance with the information provided in the JAD file.

Other types of material that can be downloaded over the network in response to the request from the terminal include multimedia data, such as a logo image to be utilised for the user session on a terminal screen; some form of contractual documentation associated with the session - perhaps a user license or agreement; and some form of authorisation or verification, such as a third party certificate guaranteeing the bona fide nature of a merchant involved with the session.

The material can also comprise a further network resource identifier representing a location, such as a portal, where a desired service can be obtained. Such a service may be the download of some product (e.g. music), some on-line purchase facility (e.g. for buying aircraft tickets), some data service (e.g. the supply of recent financial results), and so on. This further network resource identifier can also represent a site at which documentation relating to the commercial transaction (such as contractual details) is located. It will be appreciated that in many circumstances, the terminal is specialised for a particular application - e.g. the terminal may include a facility to print aircraft tickets, or to burn music downloaded from the network onto a customer CD. The nature of the terminal will then determine the range and nature of application processing available to a customer at the terminal.

Note that the terminal can download multiple different items for a single smart card session. For example, from the initially derived network resource identifier (at step 8030), the terminal may obtain a set of further URLs specifying locations of various types of material relevant to the session (code, contractual terms, payment service location, etc).

It will also be appreciated that in some situations certain material available from a URL may in fact already be present on the terminal. For example, some Java packages from a specified URL may have previously been downloaded (typically as JAR files) and installed onto the terminal, perhaps to process an earlier session with a different card. In these circumstances, it will not normally be necessary to repeat the download (unless perhaps an expiry date for the material has passed). More generally, the terminal may already have available the material corresponding to the network resource identifier generated at step 8030, either because the material is cached or mirrored locally, or because the identified resource happens to be located on the terminal itself. The material can then be accessed locally at steps 8040 and 8050 without having to download over the network.

Figure 8E illustrates a flowchart for one embodiment of the invention that takes into account the possibility of the terminal already having the specified material. Thus as shown in Figure 8E, a test is made at step 8033E to determine whether or not the terminal already has material from the relevant network address. If so, this material can be used directly by the terminal, without having to be downloaded over the network. (The remainder of the processing of Figure 8E is the same as that for Figure 8).

As mentioned above, the terminal can use more than just the RID portion 501 of the AID in the processing of Figure 8. For example, if the network resource identifier is generated at step 8030 by having the RID as an entry field or input parameter for a URL request, then the PIX portion can be provided likewise as an input parameter in the URL request. The web server can then utilise the PIX portion in determining the response that is provided back to the terminal (see step 8046 of Figure 8D). For example, the web server may determine the type of application associated with the AID (based perhaps on the Applet ID in the PIX portion), and then provide code back to the terminal that is appropriate for interacting with this particular application.

In some embodiments, the web-site or other network location performs some semantic interpretation of the AID obtained from the smart card by the terminal, so that the response back to the terminal incorporates data extracted from the AID (such as a current balance on the card, or other such state information included in the AID). This provides one mechanism to avoid the terminal itself having to be able to decode or interpret the AID byte string. Such an embodiment is illustrated in the flowchart of Figure 8F, which generally corresponds to that of figure 8D, except that at step 8046F, the server interprets the received AID in order to extract relevant information. This extracted information can then be returned to the terminal (step 8049F) for further processing in the session.

Note that the processing of Figure 8 following step 8010 (receipt of the AID from the smart card 102) is generally independent of the exact mechanism or circumstances whereby this AID is obtained. For example, the AID may be received following the operations described in relation to Figure 1B or 1C (i.e. without the use of multiple parameters to specify a matching application on the smart card). In addition, the processing of Figure 8 (from step 8010 onwards) might also be performed if a terminal receives an AID from a smart card not as part of the initial selection of a matching application, but rather at some subsequent stage of the session between the card 102 and the terminal 110.

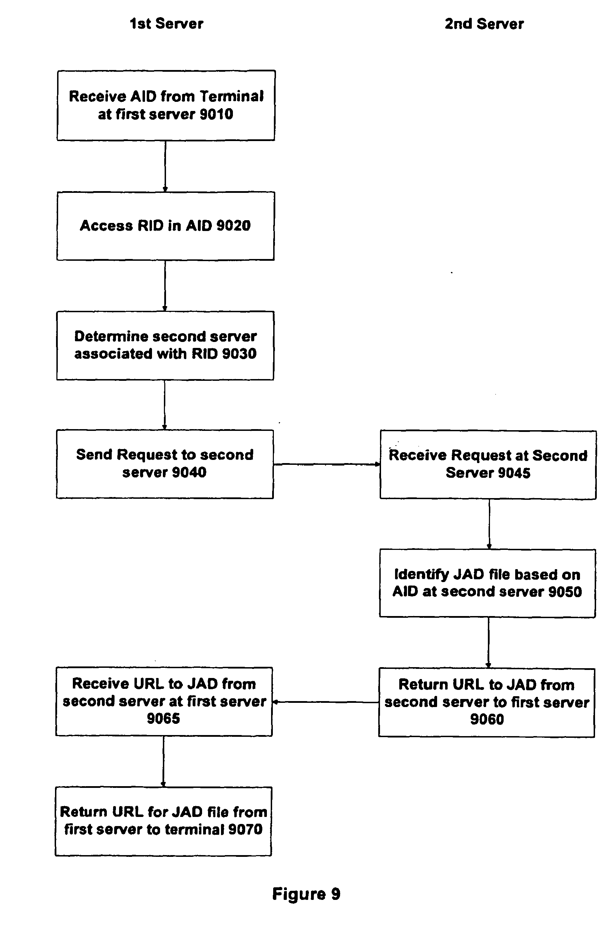

Figure 9 depicts in more detail the server processing in response to the (http) request of step 8040 of Figure 8 for one particular embodiment of the invention. Processing starts with a first server receiving the http request from the terminal (step 9010), where it is assumed that this request includes the relevant AID (RID and PIX portions). This first server extracts the RID portion 501 from the received AID (step 9020), and uses the RID to determine the URL of a second server (step 9030), generally by means of a database or lookup table available to the first server (either locally or over a network). The first server therefore can be considered as representing a form of generic gateway or portal, and the RID as a form of search term submitted to the portal.

Once the first server has determined the identity of the second server, the first server now in effect forwards the incoming request to the second server (step 9040). It is assumed that the second server is associated with the particular organisation corresponding to the relevant RID. In other words, an organisation having the RID in question maintains a web site on the second server. This web site is responsible for receiving and processing AID strings belonging to that organisation (i.e. having an RID portion corresponding to that organisation).

The AID string from the terminal is therefore received at the second server from the first server (step 9045), and decoded using an appropriate AID interpreter or other mechanism. (It is assumed that the organisation knows how to decode its own AID strings). Using the information obtained from the decoded AID, the second server now identifies a Java Application Descriptor (JAD) file (step 9050) to be used by the terminal in processing the smart card. The JAD file is generally retrieved from a stored set of such files, but might also be built dynamically in response to the terminal request.

The identified JAD file typically includes a URL or other reference indicating the location of an AID interpreter. The terminal can then use this reference to download code for decoding and processing the AID itself. The JAD file can also contain any other appropriate information, code references, descriptors, etc that may be required or useful for the session.

The second server now places the JAD file at a network-accessible location, and returns a URL for this location to the first server (step 9060). The first server duly receives the URL (step 9065), and in turn forwards the URL back to the terminal (step 9070). This URL therefore allows the terminal to retrieve the JAD file constructed by the second server, and then to download any code that it references.

Note that there are several possible variations on the processing of Figure 9. For example, instead of initially returning a URL for the JAD file from the second server to the terminal (via the first terminal), in other embodiments the JAD file itself can be transmitted along this route. A further potential variation is that at step 9040 the first server returns to the terminal the URL of the second server. In this approach, the terminal itself is then responsible for communicating directly with the second server, rather than using the first terminal as an intermediary. If so desired, this can be implemented in a straightforward manner by using the http re-direct mechanism.

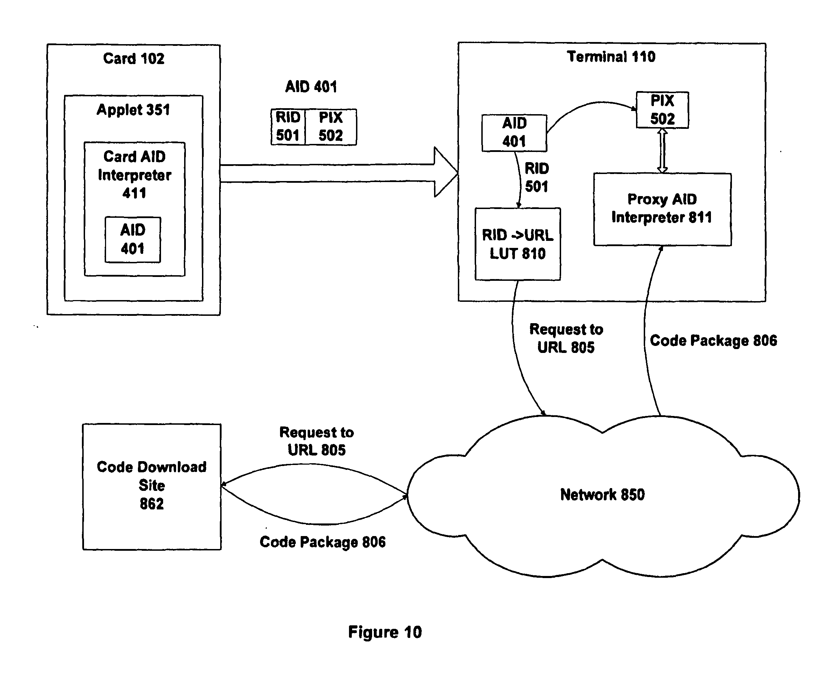

Figure 10 depicts a typical environment in which the procedures of Figures 8 and 9 can be implemented in accordance with one embodiment of the invention. Thus applet 351 is installed on card 102, and incorporates AID 401 and card AID interpreter 411. When the card is engaged with terminal 110, the AID 401 for the desired application is extracted from applet 351 and passed to terminal 110 (such as previously described in relation to Figure 6, for example).

Within terminal 110, the AID 401 is split into its two main constituents, namely RID 501 and PIX 502. The former portion (i.e. RID 501) is used to key into a lookup table 810, which contains a mapping of RID to URL. Based on the RID extracted from AID 401, a corresponding URL 805 can then be determined from the lookup table 810. This URL corresponds (in this particular situation) to a download site 860 for code to be used in processing the session involving card 102. A request 805 for such code is therefore sent to the download site 860. Note that this request may incorporate the full AID string received from the card. This AID string (or portions of it) can then be used by the download site to identify particular code of relevance for this session.

In response to the code request 805, a code package 806 for interpreting the AID 401 is returned over network 850 to terminal 110. This code package is then installed into terminal 110 to form a proxy AID interpreter 811. The newly installed code typically allows the proxy AID interpreter 811 to retrieve and interpret the data encoded in PIX 502 portion of AID 402, thereby permitting the terminal to continue processing the session with the card 102.

Typically, proxy AID interpreter 811 on the terminal 110 includes code that is analogous to or shared with AID interpreter 411 on the card, and may potentially be a superset (subclass) of the card AID interpreter 411. Note that proxy AID interpreter 811 is generally not only able to extract a firewall and applet identifier from PIX 502, but it is also able to access any other pertinent information that may be encoded into the PIX 502. (This additional information might typically relate to the state of the application on the card, such as described above in relation to Figure 5).

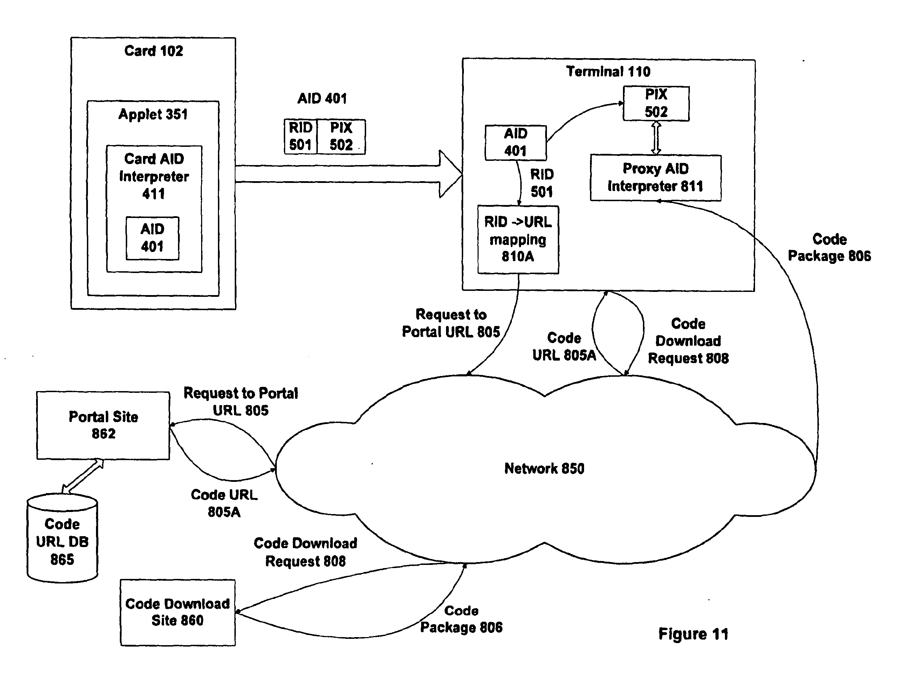

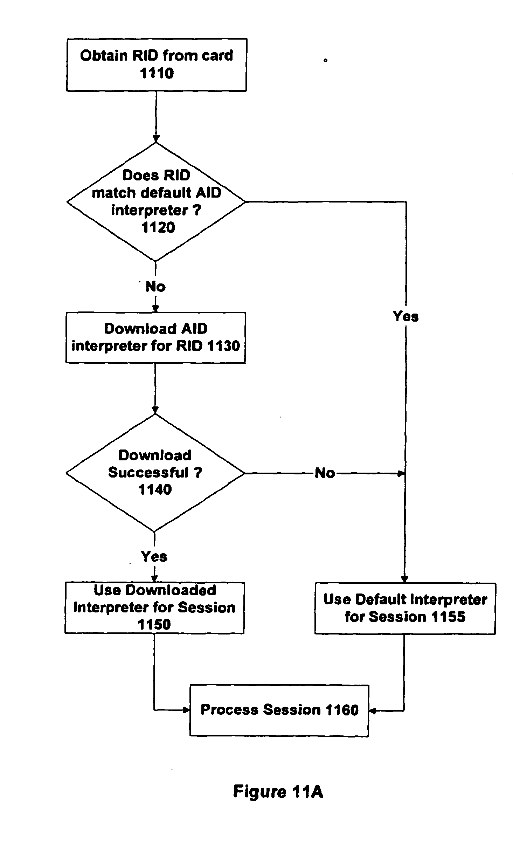

Figure 11 illustrates another embodiment, which is similar to that of Figure 10, but this time a slightly more complex chain of operations is involved for the terminal 110 to obtain the code for processing a session. Thus in this embodiment, there is a mapping process 810A that converts the RID received from terminal 110 into a first URL, this time corresponding to portal site 862. The terminal directs a query 805 to this portal site. The query typically includes the AID of applet 351. In other words, the AID is incorporated into the URL associated with the request to portal site 862 (generally in an analogous manner to the way that a search string is supplied to a web search engine).

The portal site 862 responds to the incoming query 805 by providing in return the URL 805A of the code download site 860. In the particular embodiment of Figure 11, portal site obtains this URL from database 865 using the received AID or at least a portion of it, such as the RID, as an index into the database 865. The code download URL 805A is therefore received back at terminal 110 from portal site 862.

The terminal now generates a code download request 808 directed to the received code download URL. Note that the terminal 110 may potentially include the AID in this code download request 808. The code download request 808 is received at code download site 860, which returns code 806 corresponding to the particular URL of the request. One use of this code download mechanism is to allow the terminal 110 to install its own proxy AID interpreter 811, for use during the session with applet 351, as described above in relation to Figure 10.

Note that the code downloaded from site 860 to terminal 110 may be dependent upon the AID (if any) included in code download request 808. For example, the AID might contain membership details for the cardholder. The code 806 for download can then be selected so as to only offer services appropriate to the particular class of membership of the cardholder (as determined from the AID).

It will be appreciated that it is generally easier to maintain a single network-accessible database 865 of RID to URL mappings, such as depicted in Figure 11, than to have separate mappings 810 stored in each terminal, such as depicted in Figure 10. On the other hand, the approach of Figure 10 is generally faster than that of Figure 11, given the reduced number of network requests involved. One compromise therefore is to adopt a hybrid approach, in which lookup table 810 represents in effect a local cache of data from code URL database 865. In such an embodiment, terminal 110 first attempts to fmd the location of code download site 860 using lookup table 810. This table typically stores the mappings for recently processed RIDs. However, if no entry for the RID in question is found in the lookup table, the terminal then contacts portal site 862 to derive the location of code download site 860 from database 865 (which is assumed to be much larger and more complete than lookup table 810). Any mapping information obtained in this manner from the code URL database 865 may be added into the lookup table 810 for future use (depending on the particular cache occupancy strategy deployed).

It will be appreciated that the ability to download onto a terminal 110 a proxy AID interpreter 811 that is specific to the particular AID of the inserted card 102 complements the initial AID matching procedure described above (see e.g. Figures 6 thruogh 6F). Thus the provision of card AID interpreter 411 on the card 102, and the use of Applet ID and Firewall ID (rather than the AID byte string itself) to specify a desired applet 351, allows a terminal to obtain the AID of the desired applet without needing to know (initially) the specifics of the AID itself.

Similarly, rather than having to preinstall appropriate AID processing software on all terminals, the AID obtained from the card can then be used by the terminal to identify and acquire a proxy AID interpreter 811 that is able to parse and manipulate the AID in question. Typically, the appropriate proxy AID interpreter 811 is downloaded over a network onto the terminal in order to complete the relevant session with the card 102. Accordingly, the dynamic provision of a proxy AID interpreter to a terminal helps to allow the PIX portion 502 of an AID to be used for more complex and varied tasks, which may perhaps be modified over time, without compromising compatibility at the set of terminals already present in the field.

Note that there are many potential variations on the embodiments of Figures 10 and 11. For example, a default structure may be defined for AID 401. Terminal 110 then has preinstalled a proxy AID interpreter 811 that is able to parse and extract information from an AID conforming to this default structure. In this case, there may be no need to derive a network resource identifier from an RID in this AID. For example, in the embodiment of Figure 10, lookup table 810 may instead indicate that the default proxy AID interpreter is to be used (perhaps by simply having a null entry for that RID). This can be regarded as analogous to the processing of Figure 8E.

On the other hand, in the embodiment of Figure 11, the RID to URL mapping (box 810A) may still be performed, but the response from the portal site 862 then indicates that the default proxy AID interpreter is to be used. In this case there is no need for the terminal to send a subsequent code download request 808, assuming that the default proxy AID interpreter is already installed on the terminal.

A further possibility is that the terminal attempts to use the default AID interpreter 811 if it is unable to find any other suitable code for this session, for example because there is no entry for the RID in the lookup table 810 or the portal site 862 (depending on the particular embodiment) or because a network connection is currently unavailable. Alternatively, the lack of a positive indication of which proxy AID interpreter for the terminal to use for a given AID (default or otherwise) might be taken as an error, possibly causing the terminal to abort the session.

Figure 11A is a flowchart illustrating the operation of one embodiment of the invention in which the terminal may utilise a default proxy AID interpreter. The method starts with the terminal obtaining the AID from the card (step 1110, corresponding generally to step 8020 in Figure 8). The terminal now determines whether the RID corresponds to the default interpreter (step 1120). If not, then the terminal attempts to download the AID interpreter corresponding to the RID, as previously described in relation to Figures 8 and 11 (step 1130). A test is now performed to see if this download has been successful (step 1140). If so, then the downloaded AID interpreter can be used for the session (step 1150). Alternatively, the default AID interpreter is used (step 1155) if this is the one indicated by the RID received from the card at step 1120, or if the download was unsuccessful at step 1140. The terminal now continues to process the session with the card (step 1160). Note that there may be certain restrictions on the functionality available during such processing if the default AID interpreter is being used because the specified AID interpreter is unavailable (i.e. the test of step 1140 was negative).

It will be appreciated that even for those cases where there is a specific proxy AID interpreter to use for a particular AID string, this will frequently be formed as a modification of the default proxy AID interpreter. For example, code obtained from a location such as code download site 860 can comprise a plug-in for the default proxy AID interpreter, or may be utilised via any other suitable mechanism. Alternatively, the downloaded code may subclass portions of the default proxy AID interpreter in order to provide more specific functionality in certain areas.

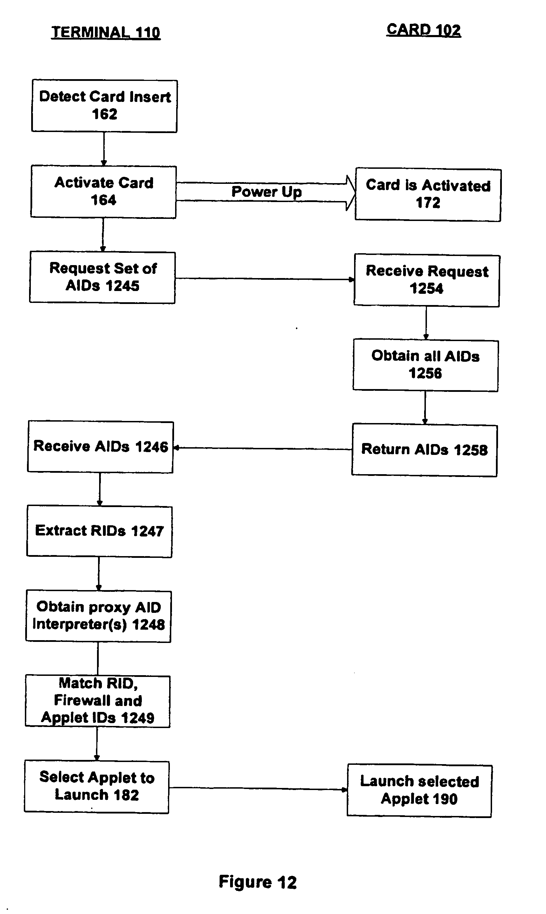

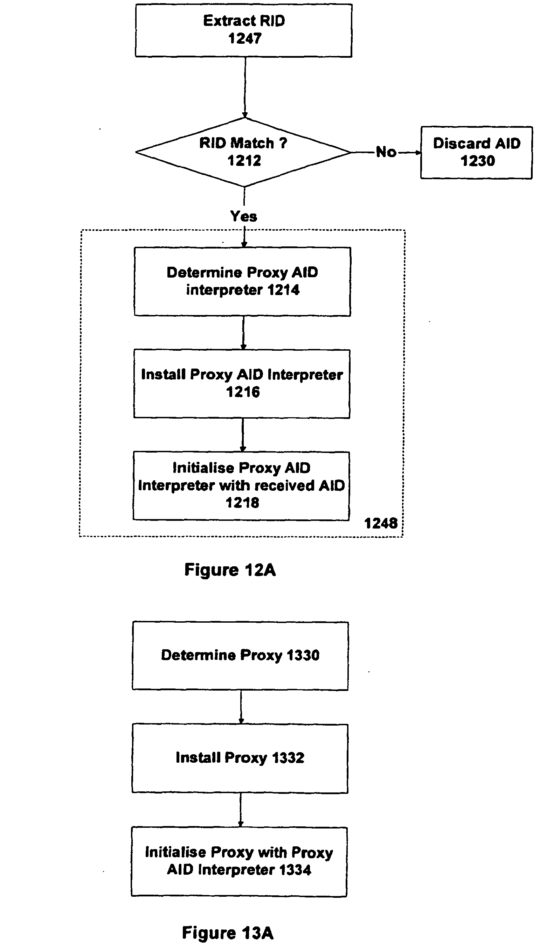

One implication of the ability to acquire a proxy AID interpreter 811 within the terminal 110 itself is that this now offers the possibility of performing the initial AID matching in the terminal 110 (in contrast to the AID matching performed on the smart card 102, such as illustrated above in Figure 6). One embodiment of the invention which supports such processing is illustrated in the flowchart of Figure 12, which commences in the same general manner as the flowchart of Figure 1. In other words, the terminal detects insertion of the card (step 162), and consequently activates the card (steps 164, 172).

At this point however, rather than specifying a desired application in terms of RID, Firewall ID, and Applet ID (corresponding to step 8005 of Figure 8), instead the terminal requests the applet selector 412 to provide it with the full set of AIDs for the card - i.e. the AID for each available applet 351 on the card (step 1245). The applet selector receives this request (step 1254), and typically uses a get_AID() method call on the card AID interpreter 411 of each application installed on the card in order to retrieve the AID for that application (step 1256). The precise manner in which the get_AID() call is implemented will depend upon the internal details of the card AID interpreter 411 in question (as discussed above in relation to Figures 5A, 5B, 5C, and 5D). Note that prior to making the get_AID() call for an application, the applet selector may first have to call the applet itself in order to locate the card AID interpreter 411 for that particular applet (analogous to step 681 of Figure 6). Note also that the AIDs for different applications may be collected in parallel, or one after another, or via any other suitable strategy.

The AIDs for the card applications are now returned from the card 102 to the terminal 110 (steps 1258, 1246), where the RID is extracted from each AID (step 1247). This RID then allows the terminal to identify and to acquire (if necessary) a proxy AID interpreter 811 to be used in processing the corresponding AID (step 1248). Note that the same procedure can be used here to obtain the appropriate proxy AID interpreter 811 as described above in relation to Figures 8 and 9. (It will be appreciated that there may be a different proxy AID interpreter 811 to download for each application 351 on card 102).

Once the terminal has the appropriate proxy AID interpreter for an AID, it can now decode that AID to determine the Firewall ID and Applet ID encoded into the AID. This then allows the terminal to perform the matching of RID, Firewall ID and Applet ID in order to identify a desired application for use in this particular session (step 1249). The proxy AID interpreter 811 can adopt the same procedure to identify a matching application as described above in relation to card AID interpreter 411 on the card itself (see Figure 6). After this matching has been completed, the terminal notifies the card (step 182, see also Figure 1C) of the applet that matches the above parameters (RID, Firewall ID and Applet ID). Typically this is achieved by returning the (complete) AID of the desired matching application from the terminal 110 to the smart card 102. This then allows the card to launch the specified matching applet (step 190, see also Figure 1C again).

One advantage of performing parameter matching on the terminal instead of on the card is that resources (memory, processing power, etc) are much more readily available on the terminal than on the card. On the other hand, there is the potential as mentioned above of having to download multiple AID proxy interpreters onto the terminal, one for each applet on the card, which may be relatively time-consuming. In practice however, the number of proxy AID interpreters to download can be significantly reduced by looking at the RID 501 obtained by the terminal at step 1247. If this RID matches the RID of the application desired by the terminal, then the terminal proceeds to obtain a proxy AID interpreter 811 for the associated AID. However, if the extracted RID does not match the RID of the application desired by the terminal, then there is no need to download the corresponding proxy AID interpreter 811, since this application cannot represent the desired application. Consequently, step 1248 need only be performed with respect to those AIDs that contain a matching RID, thereby greatly reducing the number of proxy AID interpreters to be downloaded to the terminal.

This situation is depicted in Figure 12A, which illustrates in more detail some of the processing of Figure 12. (The dotted box in Figure 12A corresponds to the box of the same number in Figure 12). Note that the procedure of Figure 12A is typically performed in respect of each AID byte string received by the terminal 110 from the card 102.

The procedure of Figure 12A commences with the extraction of the RID from the AID (step 1247), as previously discussed in relation to Figure 12. A test is now performed to see if the RID for this received AID matches the RID of the desired application (step 1212). If not, then it is known that it is not desired to activate the applet on the card from which this AID has been received, and so the AID can be discarded, or other appropriate action taken (step 1230).

Assuming however that there is an RID match, the terminal now has to determine which proxy AID interpreter to use for the AID (step 1214), whereupon the relevant proxy AID interpreter is identified and installed onto the terminal (step 1216) (if it is not already present). Note that the identification and installation of the desired proxy AID interpreter is generally driven off the RID, as described above in relation to Figures 8 and 9. The proxy AID interpreter 811 is now initialised with the corresponding AID string from the smart card 102 (step 1218), which then allows it to proceed with the parameter matching of step 1249.

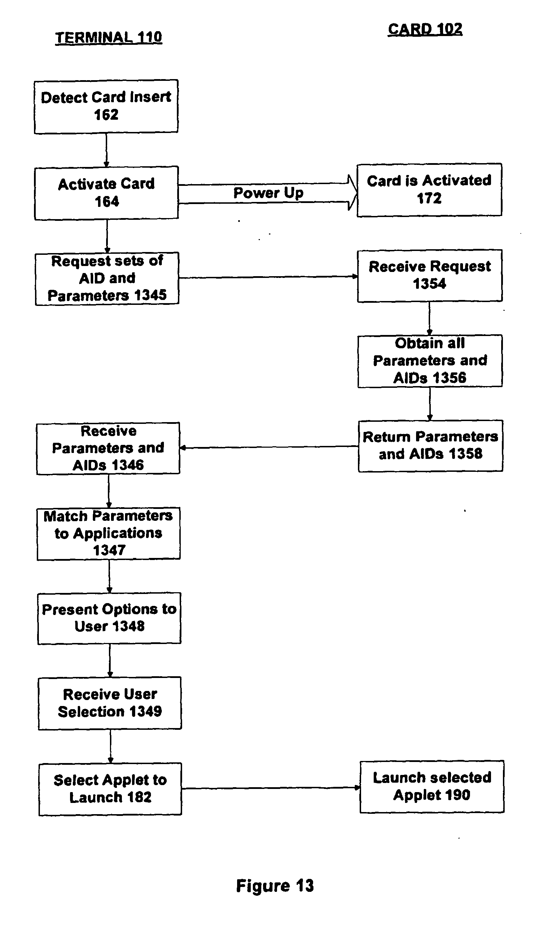

Figure 13 depicts a variation on the embodiments of Figure 6 and Figure 12. The embodiment of Figure 13 commences as these other two embodiments, with the terminal detecting insertion of the card (step 162), and then activating the card in response to such detection (steps 164, 172). Next, the terminal requests not only the set of AIDs from the card, but also the three application identifying parameters for each application - i.e. the RID 501, the Firewall ID 502A, and the Applet ID 502B (step 1345). The applet selector on the card receives this request (step 1354), and responds by calling the get_AID(), get_RID(), get_FirewallID() and get_AppletID() methods for each applet (step 1356). Again, this may involve an initial call to the applet in question, in order to locate the card AID interpreter 411 for that applet (as shown in Figure 6).

(Note that for clarity we are treating the AID and the RID separately here, with two distinct calls being made to obtain them. However, it will be appreciated that since the RID is encoded in a fixed position within the AID, these two can be handled by a single operation. In other words, there is no particular need to make a get_RID() call, but rather the RID can be obtained as and when required from the first five bytes of the retrieved AID).

The applet selector now returns the set of parameters for each applet back to the terminal (steps 1358 and 1346). The terminal matches the parameters received from the card against the parameters for the desired application (step 1347). Note that because this matching is being performed using parameters supplied from the card, rather than the terminal itself having to derive the parameters from the AID string (as in the procedure of Figure 12), there is no need at this stage for the terminal to have the relevant proxy AID interpreter(s) 811 installed or downloaded.

In one embodiment, the terminal 110 has just a single application to match. Once this (single) application has been identified at step 1347, processing can now proceed to step 182, where the terminal instructs the card to launch this applet (typically by providing its full AID), with the card then responding accordingly (step 179).

The proxy AID interpreter 811 corresponding to the selected applet may be pre-installed on the terminal. This is particularly likely if the terminal 110 only supports a single application, since in this case only one proxy AID interpreter 811 will generally be needed, but may also apply if the terminal supports multiple applications. In alternative embodiments, the terminal downloads the proxy AID interpreter 811 for the matching application either before, during, or after step 182. (The download of the AID interpreter is not shown in Figure 13, but will typically adhere to the procedure of Figure 8 or 9, and the subsequent installation and initialisation of Figure 12A).

It will be appreciated that the precise timing of any such download of a proxy AID interpreter 811 to terminal 110 is typically dependent on the particular selected application. For example, the AID string may contain some data value that affects the start-up or operation of the applet on the card at step 660. In these circumstances therefore, the proxy AID interpreter 811 should be available on terminal 110 to decode this data value before the terminal can send the appropriate applet launch command to the card at step 182.

In the embodiment shown in Figure 13, multiple applications may be matched at step 1347. For example, in one embodiment the terminal tries to identify all those applications that are present on the card that the terminal could potentially interact with (i.e. conduct a commercial transaction with). Accordingly, if there is a first set of applications installed on the card, and a second set of applications supported by the terminal, then at step 1347 the terminal identifies the intersection of these two sets (such as by looking for matching parameters, namely RID, Firewall ID, and applet ID).

The terminal now presents a choice or listing of these matching applications to a user, for example as a menu on a touch screen (step 1348). This enables the holder of a multi-function card 102 who is acting with a multi-function terminal to select the particular application to be used for this session (step 1349), again perhaps by using a touch-sensitive screen at a kiosk terminal. (More generally, the user would select the desired type of service or operation, and the terminal would then invoke the application corresponding to this form of service). The terminal now informs the card of the application that has been selected by the user (step 182), allowing the card to launch this application accordingly, as previously described (step 190).

It is also possible for the procedure of Figure 12 to be modified in order to provide an opportunity for a user to select a desired application. In this case step 1249 could represent a determination of those applications mutually supported by both the terminal and the card, with the user then selecting one of these applications. The terminal then informs the card of which application to launch, as described above in relation to Figure 13 (steps 182 and 190).

However, such a procedure would generally involve the terminal downloading multiple proxy AID interpreters 811 in order to allow parameters (Firewall ID, etc) to be extracted from the various AIDs received from the applications on card 102 (as per step 1248 of Figure 12). In contrast, download of the proxy AID interpreters 811 to the terminal 110 can typically be deferred in the procedure of Figure 13 until after the user has selected a desired application (step 1349). At this stage, there is only a single proxy AID interpreter 811 to download. (This download is not shown in Figure 13, but may occur before, during or after the launch of the selected applet).

In some circumstances, it may be that the presentation of options to a user (step 1348) is dependent on information encoded into the AID (other than the RID, Firewall ID and Applet ID components received from the smart card itself). For example, an AID may incorporate an expiry date encoded into Other portion 502C, after which the associated application is no longer available to the user. For this type of situation, one possibility is to download the proxy AID interpreter 811 for the application (such as by using the method of Figure 8) prior to presenting the user with the set of available options (i.e. before step 1348). This then allows data from the various AIDs to be decoded by the respective proxy AID interpreters, and used to tailor suitably the options presented to the user at step 1348. For example, if an application expiry date has passed, the corresponding application can then be omitted from the list of applications presented to the user.

It will be noted that such an approach again requires potentially multiple AID interpreters to be downloaded to terminal 110. This can be avoided by having the additional information (such as an expiry date) accessed and decoded by the card AID interpreter 411. As previously described, the card AID interpreter 411 generally knows how to unpack such additional components of the AID, even if it does not know what the additional components represent or how to process them.

For example, at step 1356, the card AID interpreter 411 may obtain not only the RID, Firewall ID and Applet ID, but also an expiry date encoded into the AID. (From the perspective of the card AID interpreter 411, the expiry date is generally simply an additional piece of abstract data encoded into the Other portion 502C of the AID 401). This expiry date can then be supplied by the card to the terminal at step 1358, along with the RID, Firewall ID and Applet ID. The terminal can then use this additional parameter as appropriate in further processing (for example, in making a decision as to whether or not the corresponding application is available for the cardholder to use). Note that such processing does not necessarily compromise the generality of the terminal, since the terminal does not need to know how the additional information (e.g. the expiry date) is encoded into the AID itself. (Typically, the terminal already knows that the parameter exists, and how to interpret the parameter, in order to be able to interact properly with the application).

Another implication of the provision of multi-function terminals, i.e. terminals supporting a number of applications, is that each application typically has its own associated proxy 410 and associated back office program 130 (see Figure 4). Thus if a terminal supports only a single type of card application, then the proxy for this application can automatically be invoked on terminal 110 in response to the insertion or activation of card 102. Indeed, the proxy may only be sleeping or suspended inbetween sessions with different cards.

On the other hand, if the terminal supports multiple applications, there may be a different proxy for each application. In this case, where the cardholder is able user to select the particular application to be used with the inserted card (such as discussed above in relation to Figure 13), then the terminal typically needs to ensure that the correct proxy is invoked to handle the user selected application.

In these circumstances, the terminal can be provided with a program (not shown in Figure 4) analogous to the applet selector program, which is used to determine the appropriate proxy to handle any given card session. In the embodiment of Figure 13, this selector program is typically responsible for the interaction with the card through to receipt of the user selection of the desired application (step 1349). At this point, the selector program can then launch the proxy corresponding to the user selection. The proxy 410 can then download the corresponding proxy AID interpreter (if not already present), as well as launching the selected application on the card (steps 182, 190).

Figure 13A presents a flowchart depicting the selection and activation of a proxy program on terminal 110 in accordance with one embodiment of the invention. Note that this procedure can be regarded as following on from the flowchart of Figure 12, whereby it is assumed that the proxy AID interpreter 811 corresponding to a particular AID (and corresponding applet) on the smart card 102 has already been installed and initialised on the terminal 110. In this case, the procedure of Figure 13A commences with a determination of the proxy to be used with this application (step 1330). Such a determination can be made based on material retrieved over the network (see Figures 8 and 9 above and associated discussion), or alternatively the terminal may have local knowledge of the proxy to use with this particular application. Another possibility is that a proxy itself contains information (such as the RID, and perhaps other parameters as well) that allow the proxy to be matched to a corresponding card application

Once the terminal has identified the correct proxy 410 for use with the relevant application, this proxy is installed into the terminal (step 1332), unless it is already present. Thus the proxy code can typically be obtained over a network, in the same manner as the proxy AID interpreter code 811 (see Figures 10 and 11). The proxy code can now be initialised with the proxy AID interpreter code that has already been downloaded (step 1334), which in turn can be initialised with the AID received from the application (such as at step 1246 or 1346). This lead to the general configuration of Figure 4, whereby substantive processing of the user session can commence.

As already discussed, the approach described herein permits a more flexible and powerful use of an AID 401 on a smart card 102. One further mechanism for exploiting this increased flexibility is to use the AID to store information concerning the initial configuration of an application at load time.

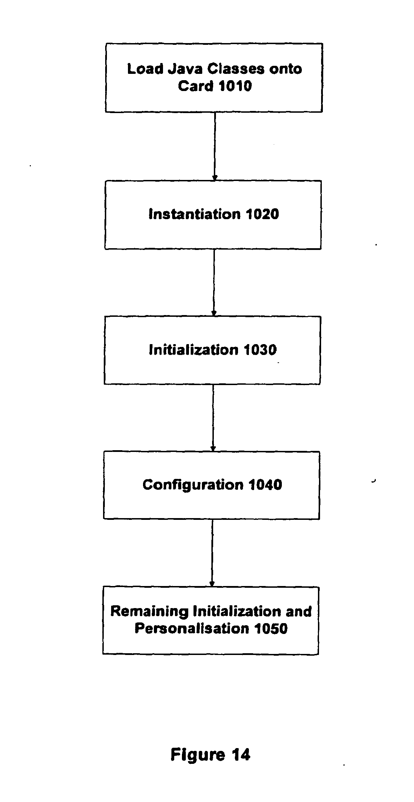

Figure 14 is a flowchart that depicts such a process in accordance with one embodiment of the invention. The process of Figure 14 begins with loading the Java classes for an applet 351 onto the smart card 102 (step 1010). Typically these classes are assembled into a package (referred to as a CAP file). Once the classes are present in memory on the smart card 102, then instantiation commences (step 1020). In other words, objects are created based on the class files. Note that in a smart card environment, this instantiation is a one-off procedure at load time, rather than being performed each time the applet is executed, as in a normal desktop environment. Object instantiation is followed by initialisation of variables (step 1030), and then configuration of the applet occurs (step 1040). Finally, any other necessary initialisation and personalisation completes (step 1050), whereby the card is now ready for use.

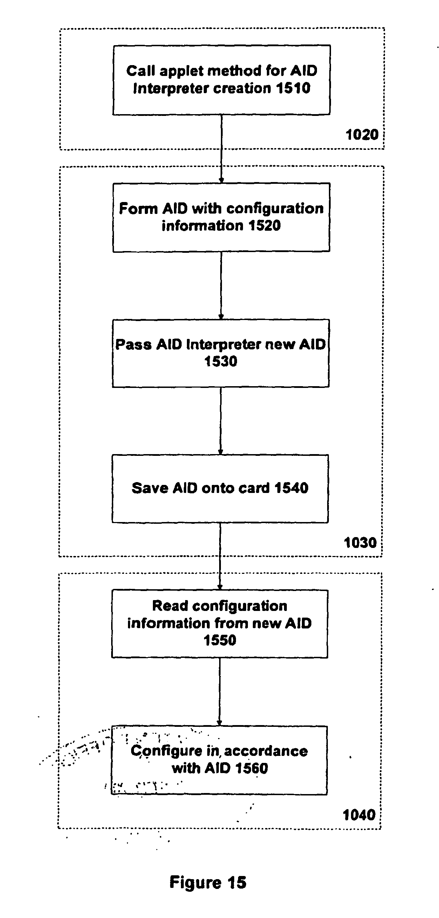

Figure 15 illustrates certain aspects of the procedure of Figure 14 in more detail, in particular the role of the AID in the card configuration process, in accordance with one embodiment of the invention. Note that the dotted outline boxes in Figure 15 correspond to steps from Figure 14 (as identified by the appropriate reference numbers).

Thus as part of the instantiation process of step 1020, the card AID interpreter 411 is created (including the AID object hierarchy such as shown in Figures 5A, 5B, 5C or 5D). This is typically achieved by calling appropriate methods (such as a factory method) on the applet being installed in order to instantiate the card AID interpreter 411 (step 1510).

The configuration program now generates the actual AID value to be stored into the card as part of the initialisation (step 1520 in Figure 15). (There is some flexibility in the timing of this step, for example, in some embodiments the creation of the AID may precede the creation of the card AID interpreter at step 1510). The newly created AID value can be used to encode various configuration data relating to the application that is being installed. Examples of configuration data that may be stored in the AID in this manner include: an indication of the physical and/or software capabilities of the card (e.g. memory capacity, and whether a certain format of digital signatures is supported, the version number of an installed application, etc); general parameters governing card behaviour, such as passwords and key lengths; and parameters relating to more application-specific properties, such as the maximum amount of money that may be stored in a purse object, or the maximum payment amount that may be made using the card without requiring a Personal Identification Number (PIN). It will be appreciated that multiple items of various configuration data can be incorporated into a single AID, subject to the available space limitations (in particular the 11 byte limit on the PIX portion of the AID).

Once the AID for the card and the program being installed has been generated by the configuration program, this is now passed to the card AID interpreter 411 (step 1530). In particular, a store_AID() method (or similar) is called on the card AID interpreter, and this is passed the AID string that was generated at step 1520. The card AID interpreter then acts to save the newly received AID string onto the card. The manner in which this is accomplished will depend upon the internal implementation of the card AID interpreter and how the AID is to be stored (such as depicted in Figures 5A, 5B, 5C and 5D). For example, in one embodiment the AID string is ultimately saved as a single byte array (as in Figure 5A), or may be distributed into multiple components, each associated with a different AID subobject (as in Figure 5B).

Note that there is typically a security procedure associated with storing the AID, to ensure that a duly saved AID is not subsequently corrupted (either deliberately or accidentally) by an inappropriate repeat call of this facility. For example, some form of password can be required to use the story-aids command, or alternatively the store_AID() command is perhaps only enabled at applet installation time.

Once the AID has been stored onto the card 102, the AID can then be accessed during subsequent configuration of the applet in order to derive the configuration information encoded into the AID (step 1550). The AID is typically accessed by making an appropriate call on the card AID interpreter 411. In one embodiment, this involves making a get_AID() method call on the AID interpreter, such as previously described, and then extracting the desired configuration information from the AID string. However, this generally requires the applet itself (or other configuration facility) to be able to decode the configuration information encoded into the AID. Thus in another embodiment, the card AID interpreter 411 itself decodes the configuration information stored in the AID string. Accordingly, in this embodiment the card AID interpreter 411 supports one or more method calls that provide specific access to configuration information from the AID string.

For example, the card AID interpreter 411 can support a get_AIDConfiguration() method call, which returns the full set of configuration data from the AID string, appropriately organised into a data structure or such-like. Alternatively, the card AID interpreter 411 can include a subobject which provides access to such data. It is also possible that the card AID interpreter 411 supports calls to access individual components of configuration data stored in the AID, e.g. a get_CardMemory() to retrieve the memory capacity on the card, although this tends to lead to a rather more complicated method signature for the card AID interpreter.

Once configuration data has been retrieved from the AID in this manner, this configuration data can then be used to control the particular software and data configuration adopted for the applet (step 1560). Examples of configuration data that can be stored into the AID include parameters that determine the characteristics of cryptographic algorithms used on the card (e.g. number of bits); memory usage (e.g. the number of bytes of card memory allocated to the application); the version number of various software support modules on the card; and so on. Making this information available to an applet via its AID helps to ensure that the installed applet conforms to properties of the smart card in question concerned (for example, the applet does not try to use more memory than is allocated to it on the card).

The above procedure therefore allows information about the card and the applet instance in the card environment to be encoded into the AID. This information can then be used to control the particular configuration of the applet as it is being installed. It will be appreciated that this provides a convenient software mechanism for optimising the application configuration for the relevant environment, without having to depart from a relatively conventional or standardised loading procedure. In other words, rather than having to customise the installation process itself, any special configuration details can be encoded into the AID. The AID information can be used to control the precise configuration adopted without further external intervention, so that the applet instance is matched to the particular card on which the applet is installed, with different applet code or configurations being installed on different cards.

Attached to the present description is a set of Appendices. These provide documentation relating to one implementation of certain components described herein. Note that the implementation described is not necessarily bug-free or fully functional. Furthermore various features are detailed that are not necessarily relevant to the invention itself (although they are typical of a complete implementation). Nevertheless, the Appendices provide the skilled person with a general indication at the code level as to how an implementation may be developed.

Appendix A describes a card AID interpreter (corresponding for example to card AID interpreter 411 in Figure 4). Note that in this implementation, the Firewall ID 502A (see Figure 5) is stored in byte 6 of the AID, and the Applet ID 502B is stored in byte 7 of the AID. An Owner ID is then formed as the composite of the RID 501 and the Firewall ID 502A, while the Applet ID is (re)defined as the composite of the Owner ID and the Applet ID 502B. Applet selection can then be performed using the Applet ID (only), since this incorporates the RID 501, the Firewall ID 502A and the Applet ID 502B of Figure 5. Note that from a logical perspective however, the selection is still utilising these three parameters, which can be regarded as encoded into the (redefined) Applet ID.

With the particular byte allocations described in Appendix A, the RID, Owner ID and the Applet ID correspond to the first five, six and seven bytes respectively of the AID. However, in other implementations they may be encoded differently into the AID (except of course for the RID, whose location is governed by the ISO standard).

Appendices B, C, D and E describe four classes nested within the AID interpreter that respectively manage the various components of the AID, such as the RID portion, the Owner portion, and so on. This is somewhat analogous to the embodiment illustrated in Figure 5C.

Appendix F describes a proxy AID interpreter (corresponding for example to proxy AID interpreter 811 in Figure 4). Note that there is a predefined list of attributes that might potentially be encoded into an AID (and hence need interpreting). Attributes that are not supported by a particular card are set to null. Additional attributes may be supported by suitably extending the class of Appendix F.

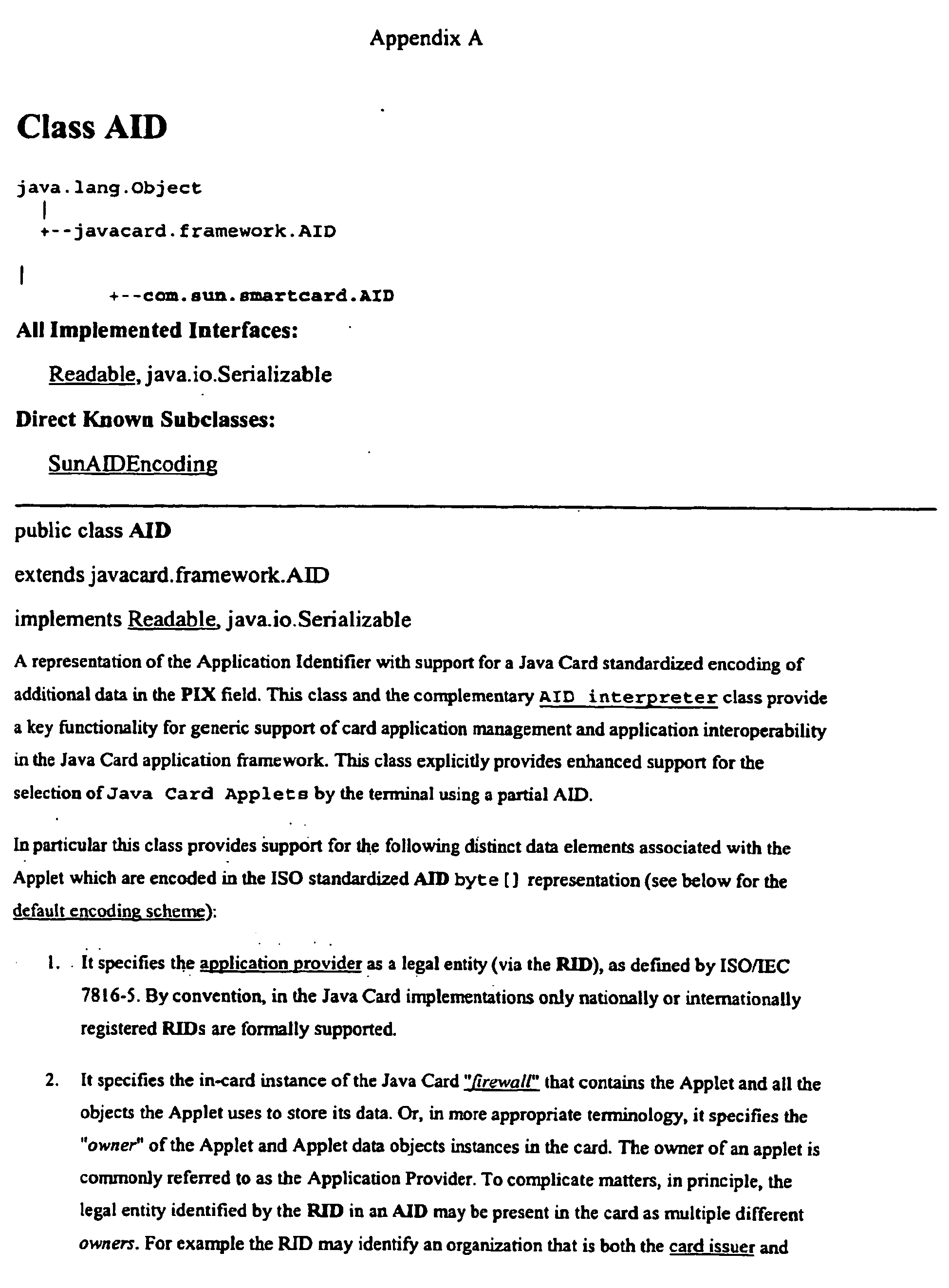

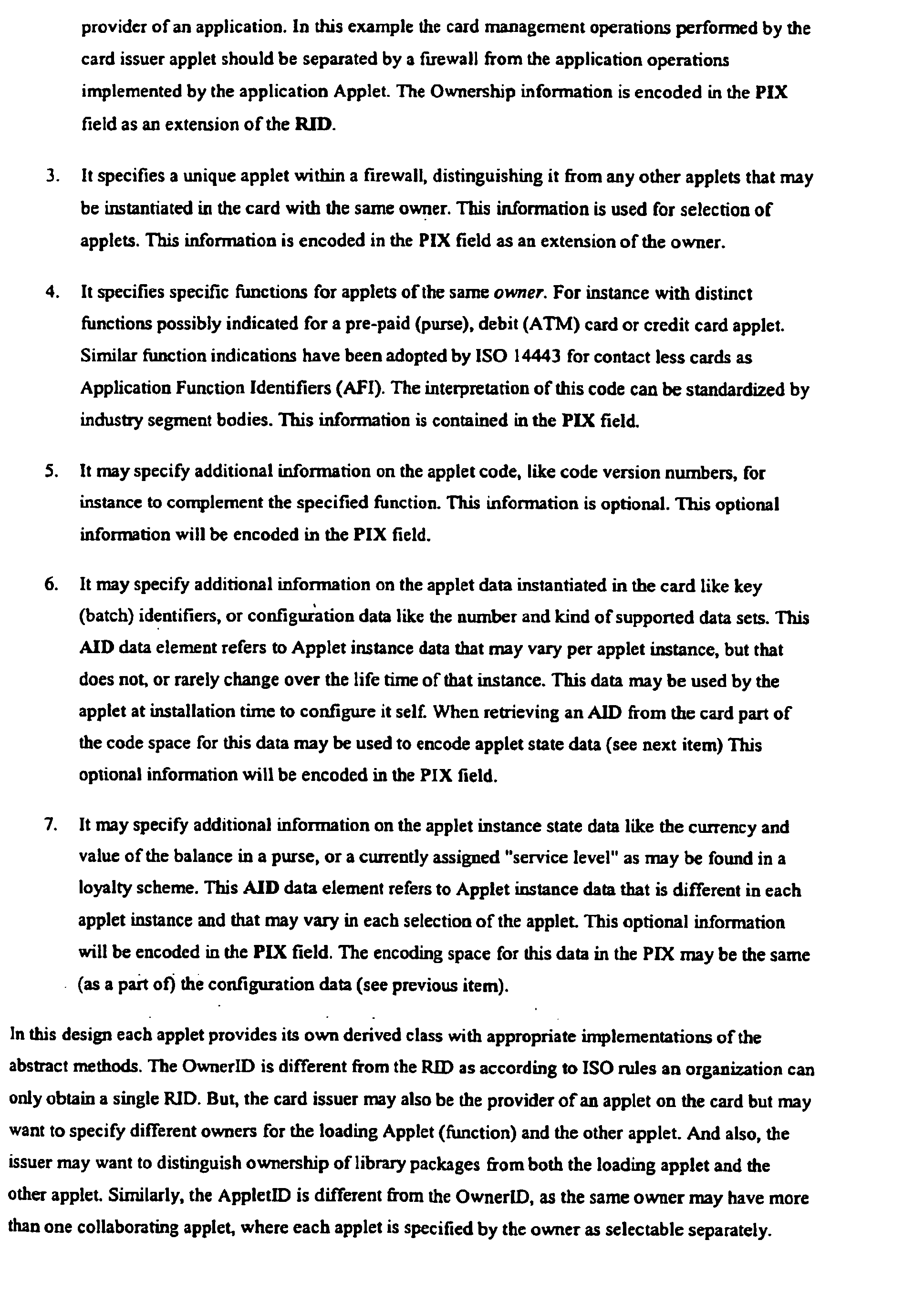

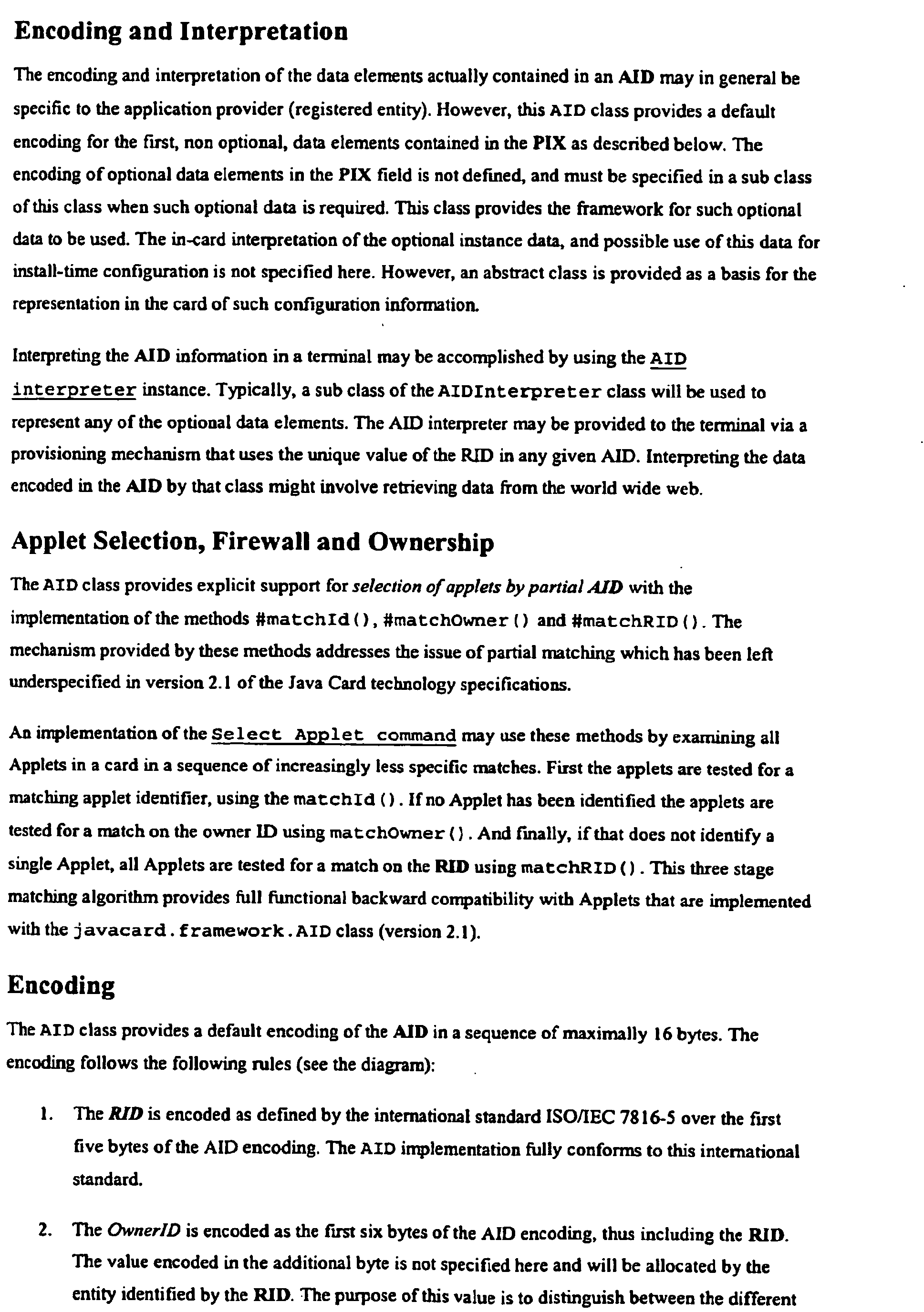

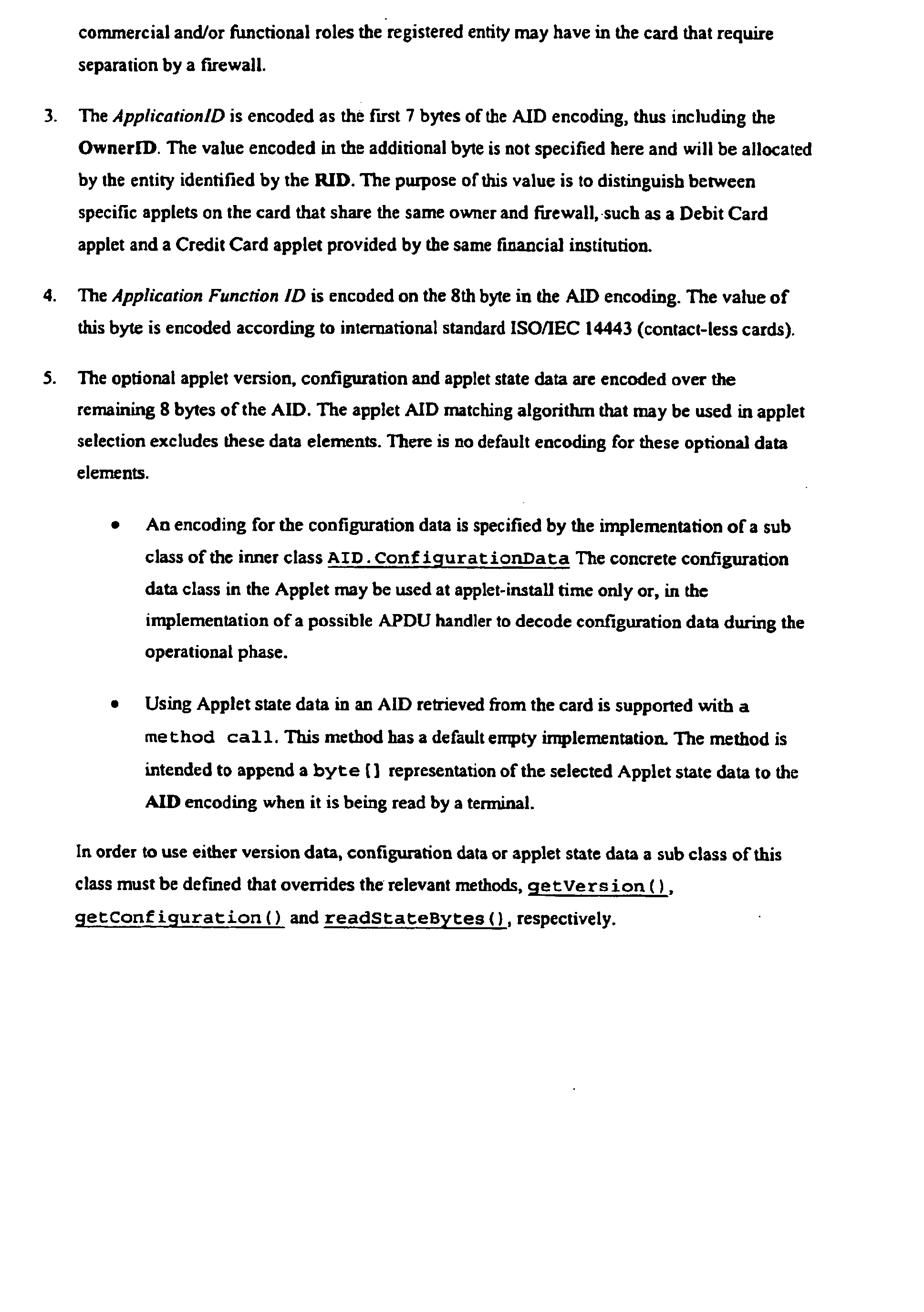

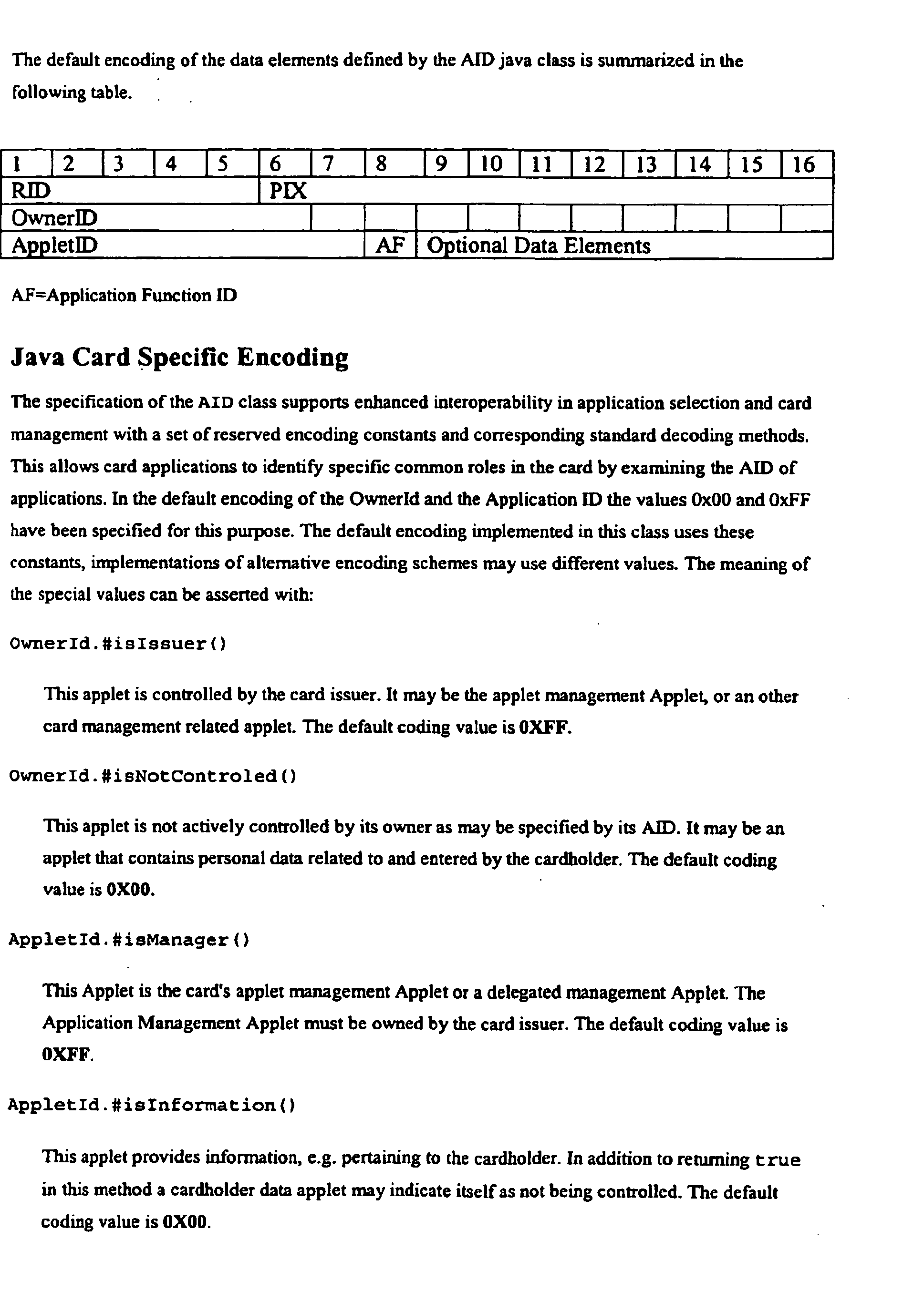

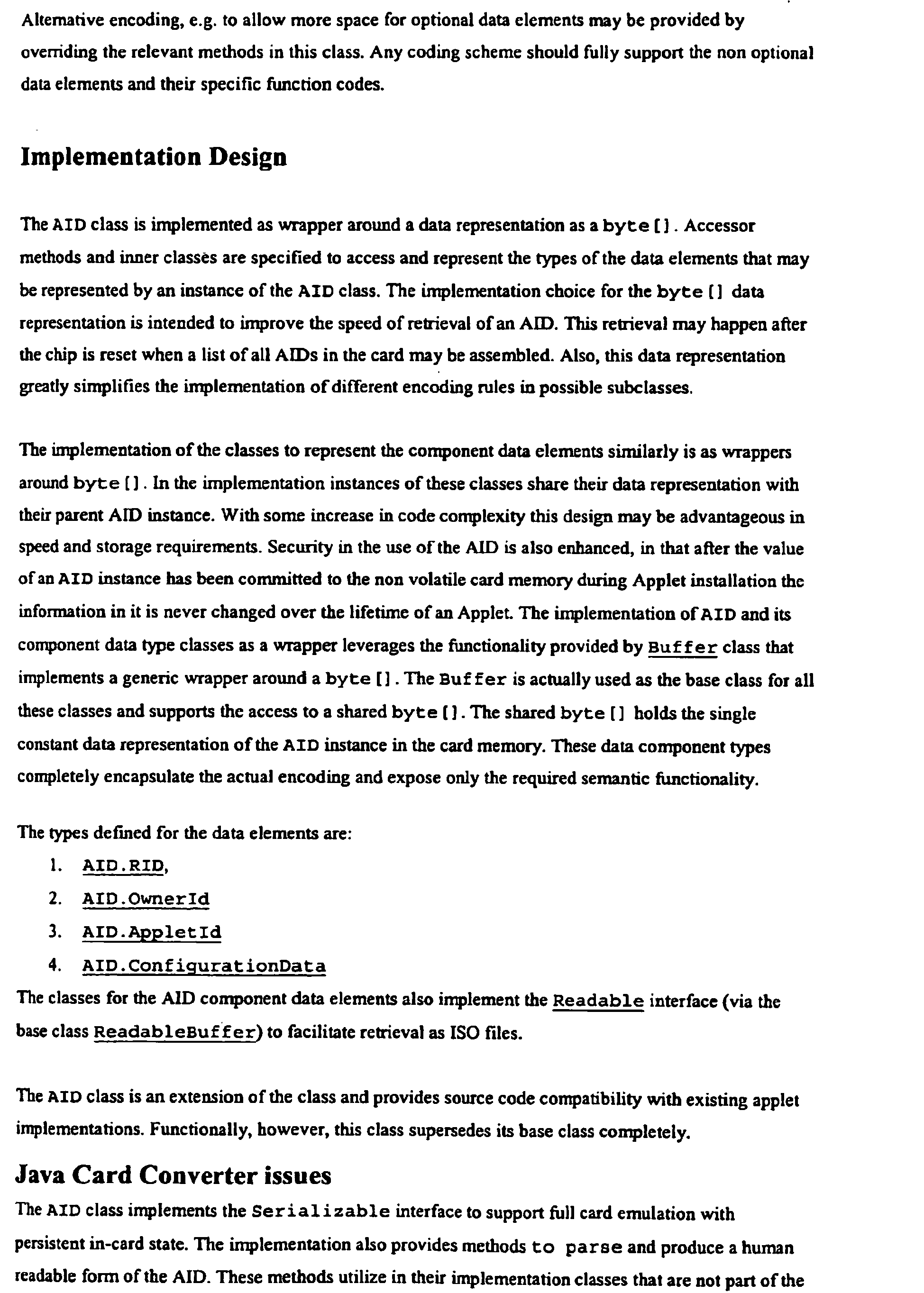

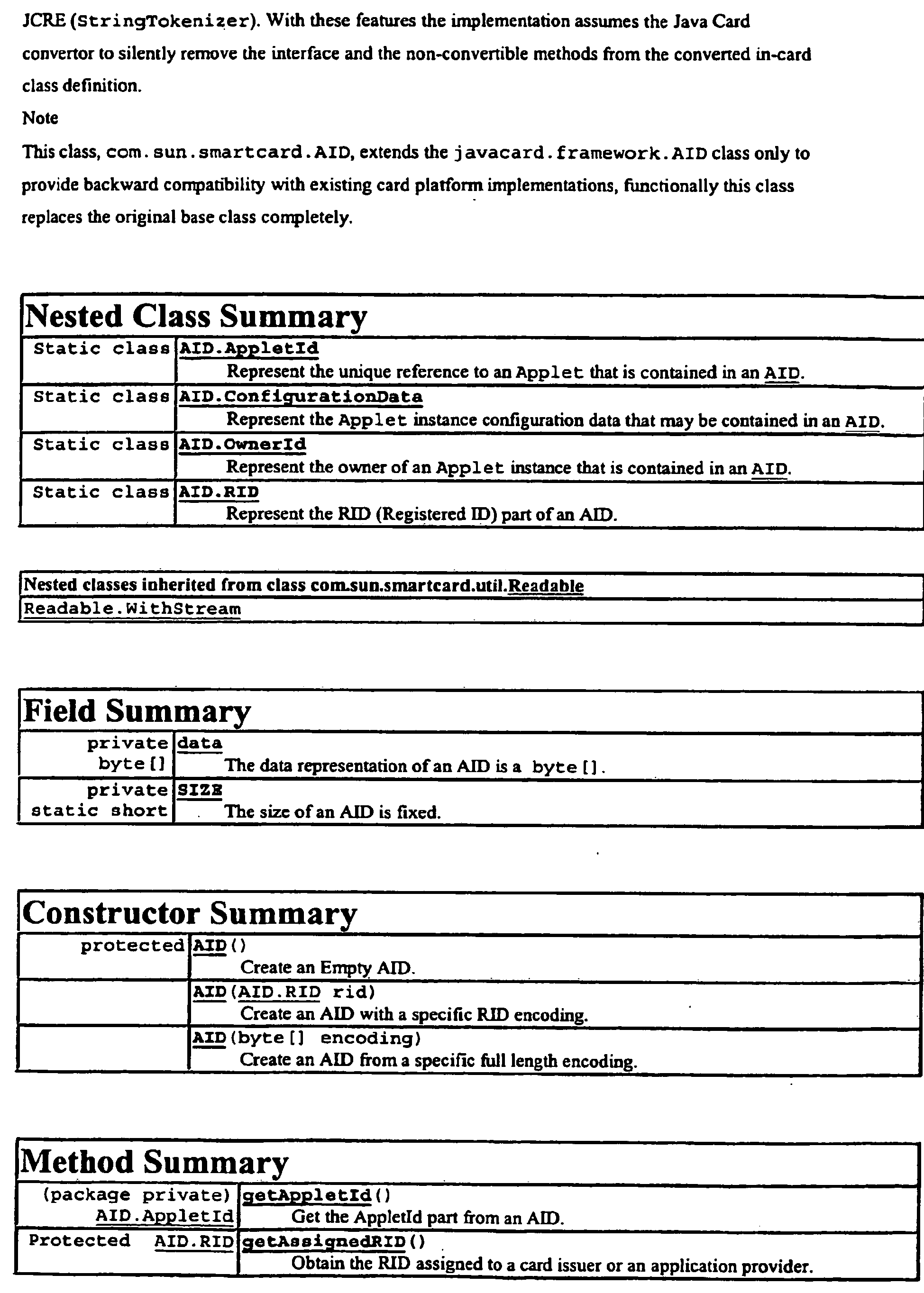

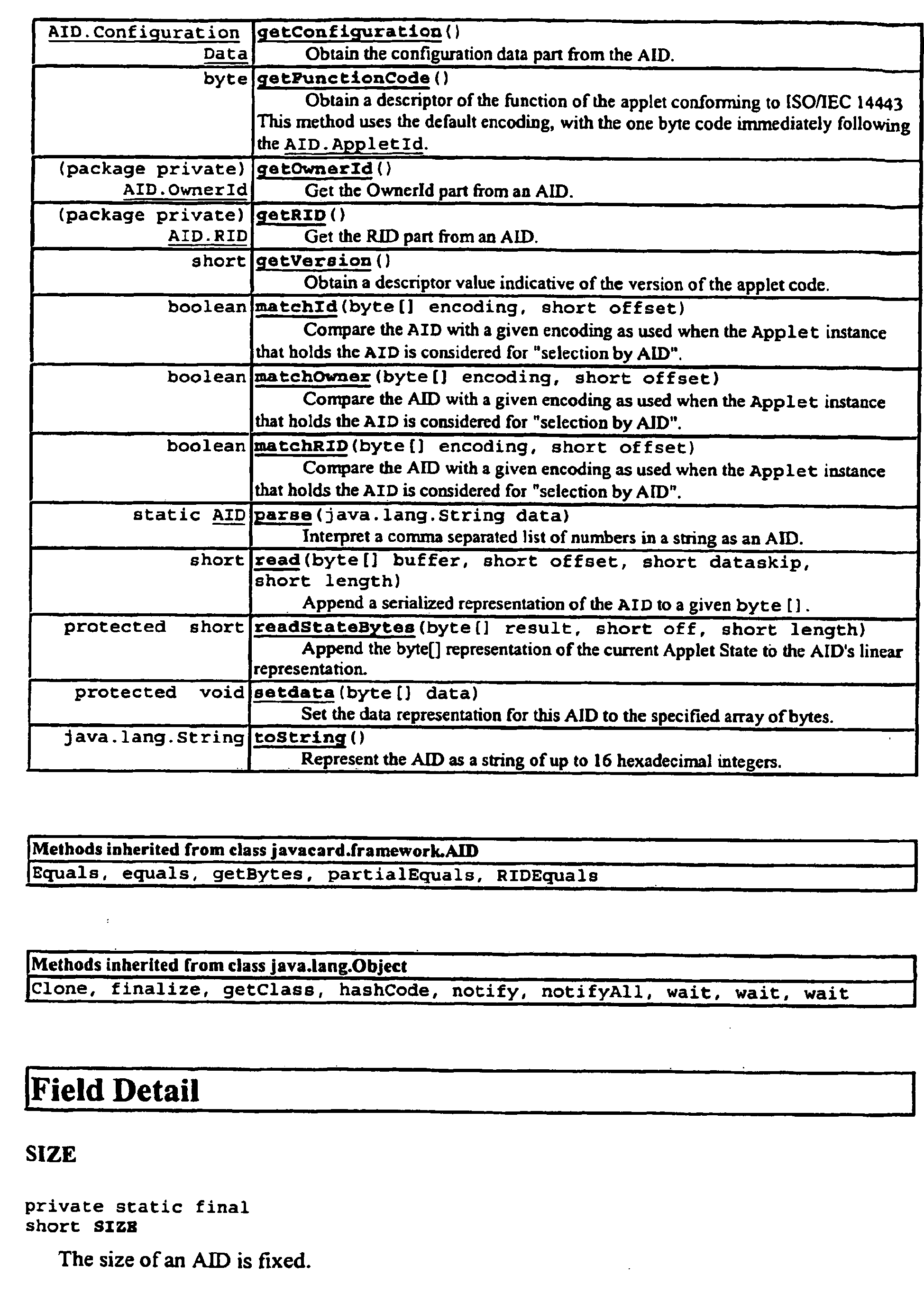

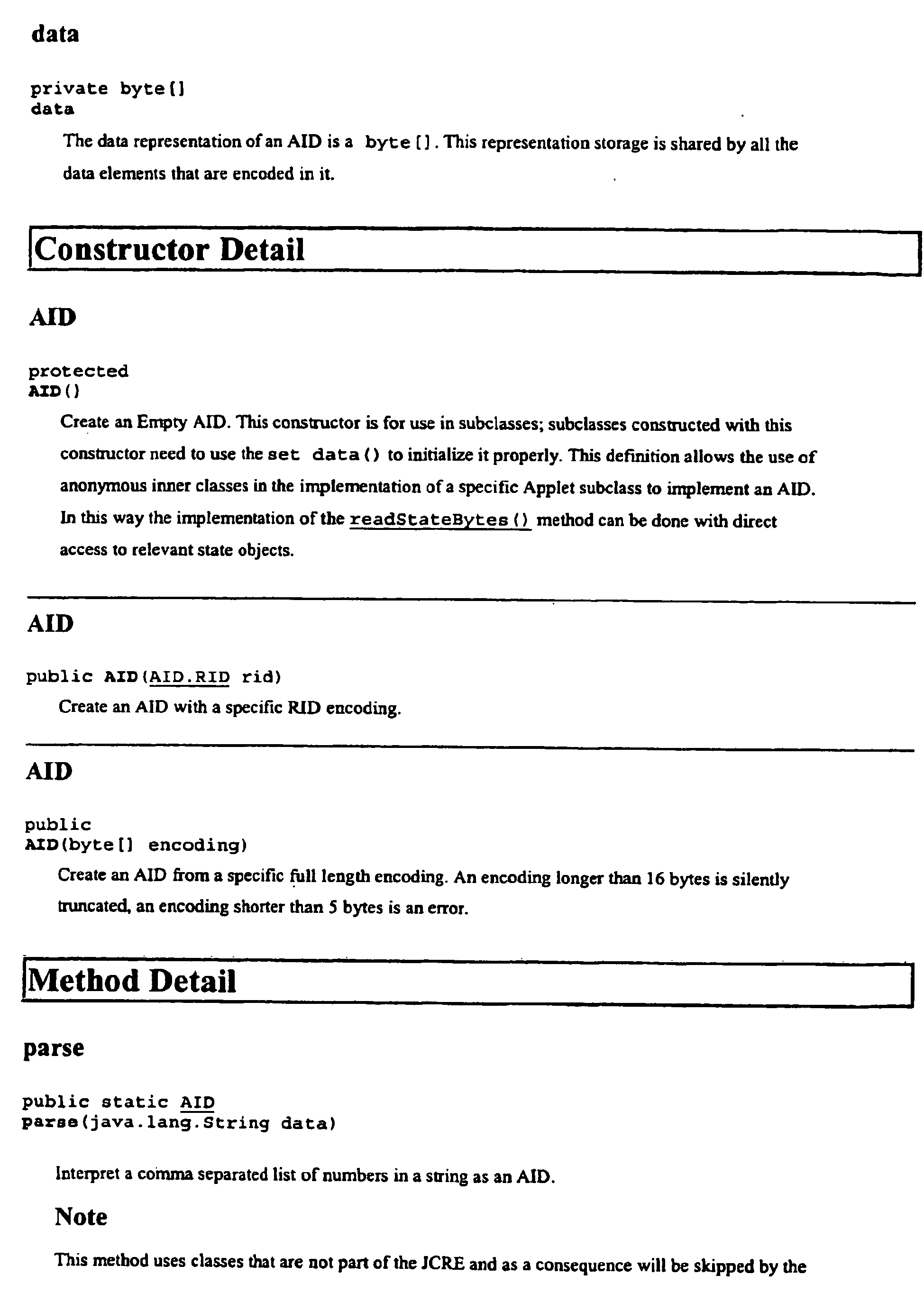

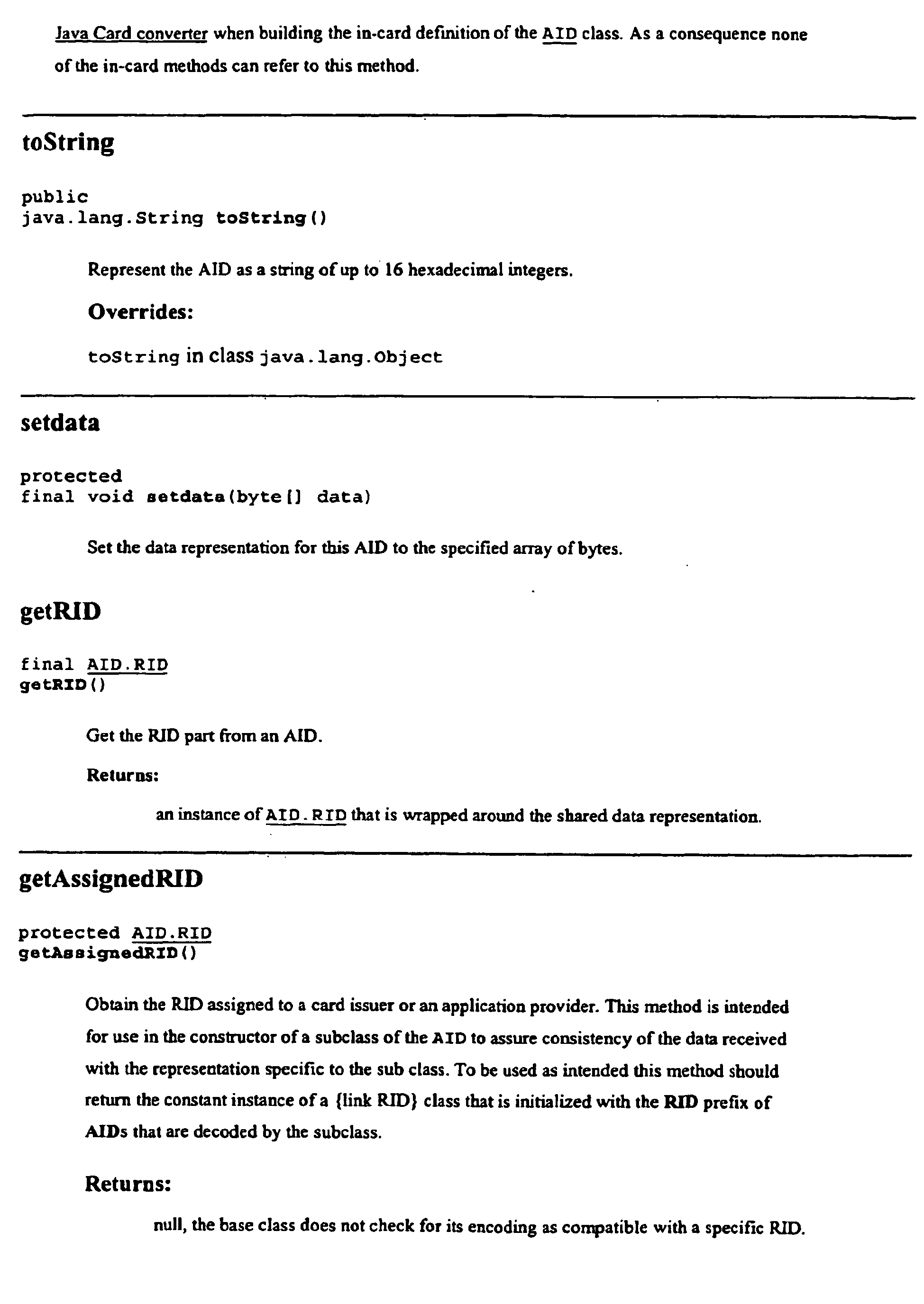

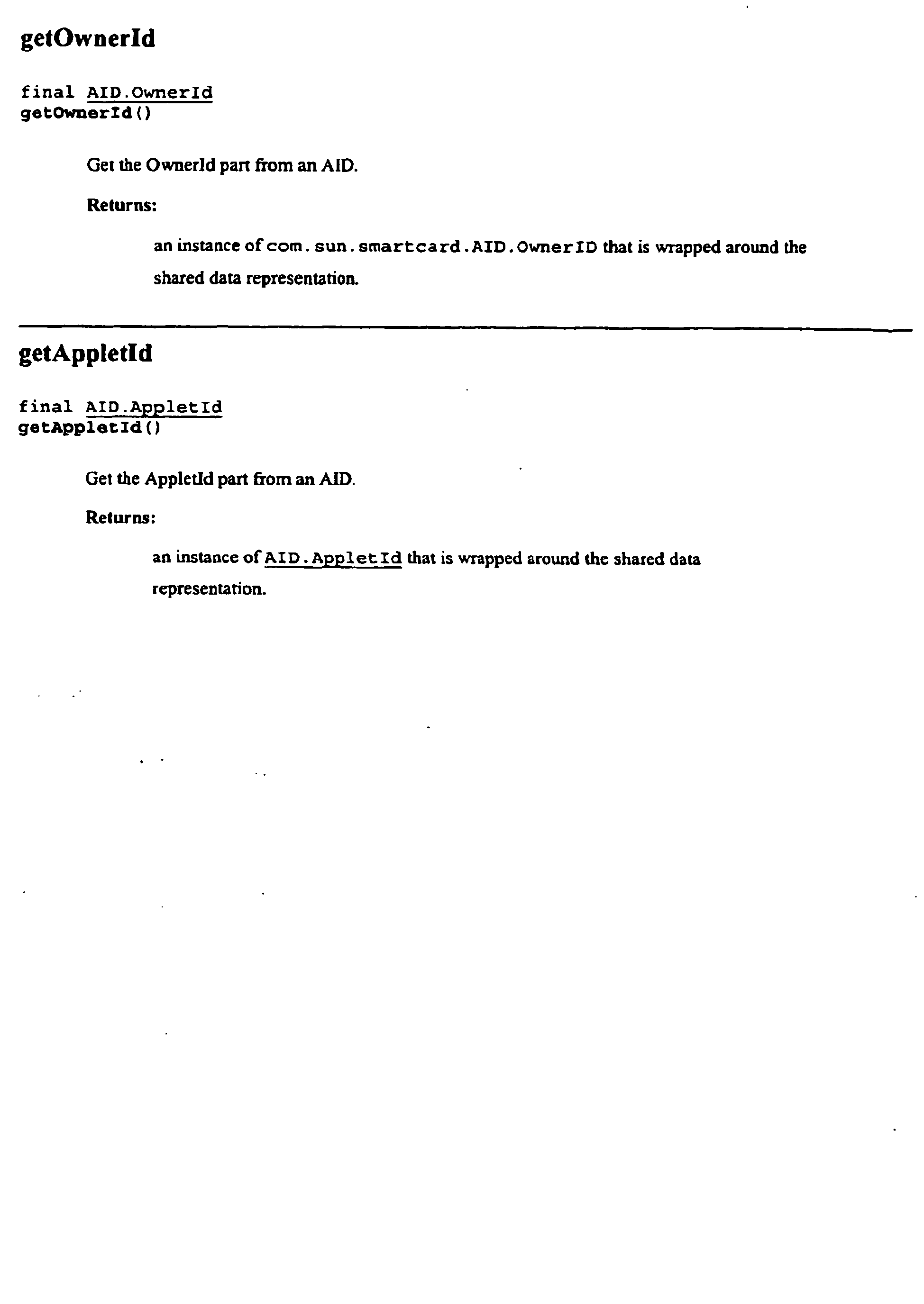

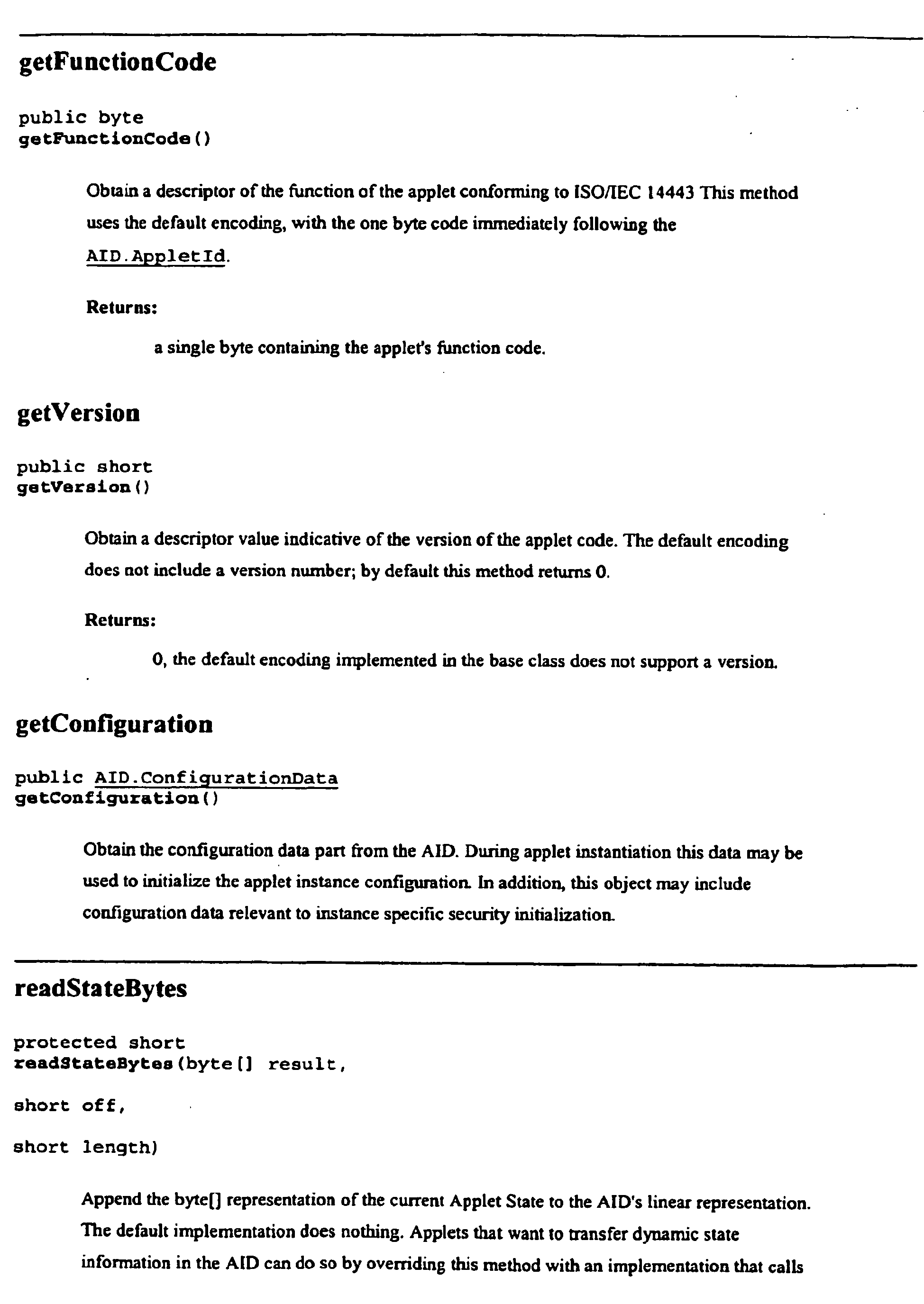

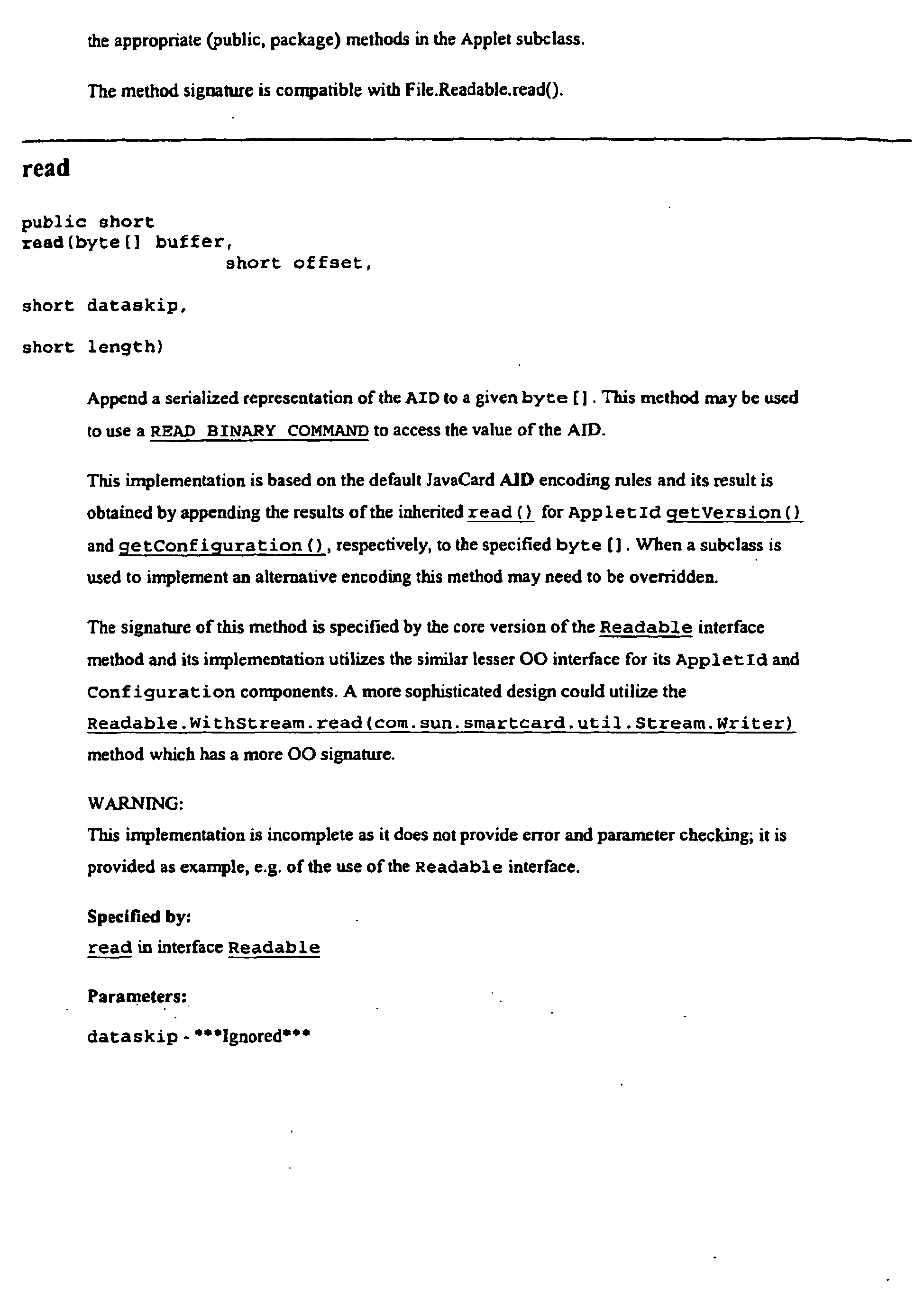

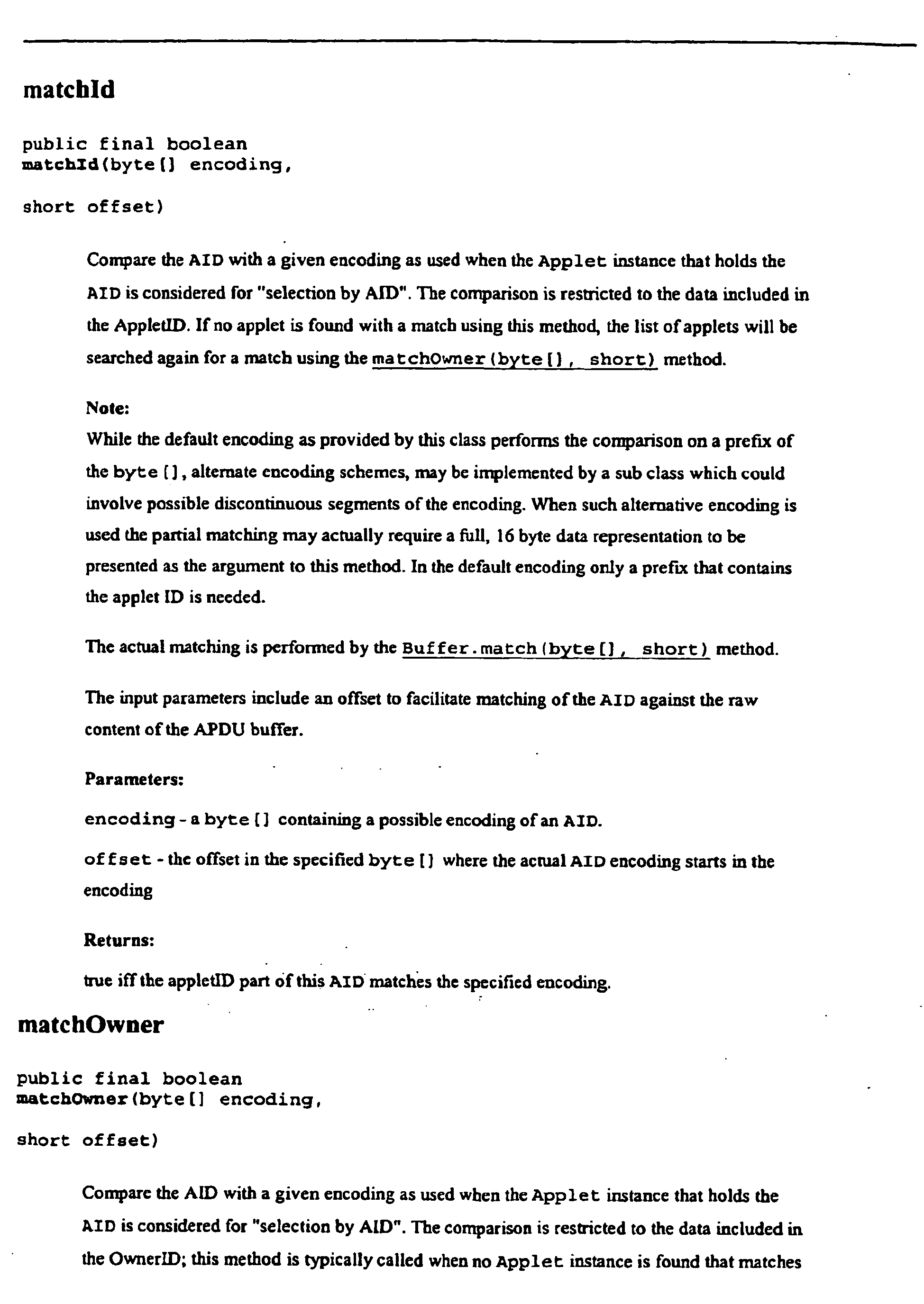

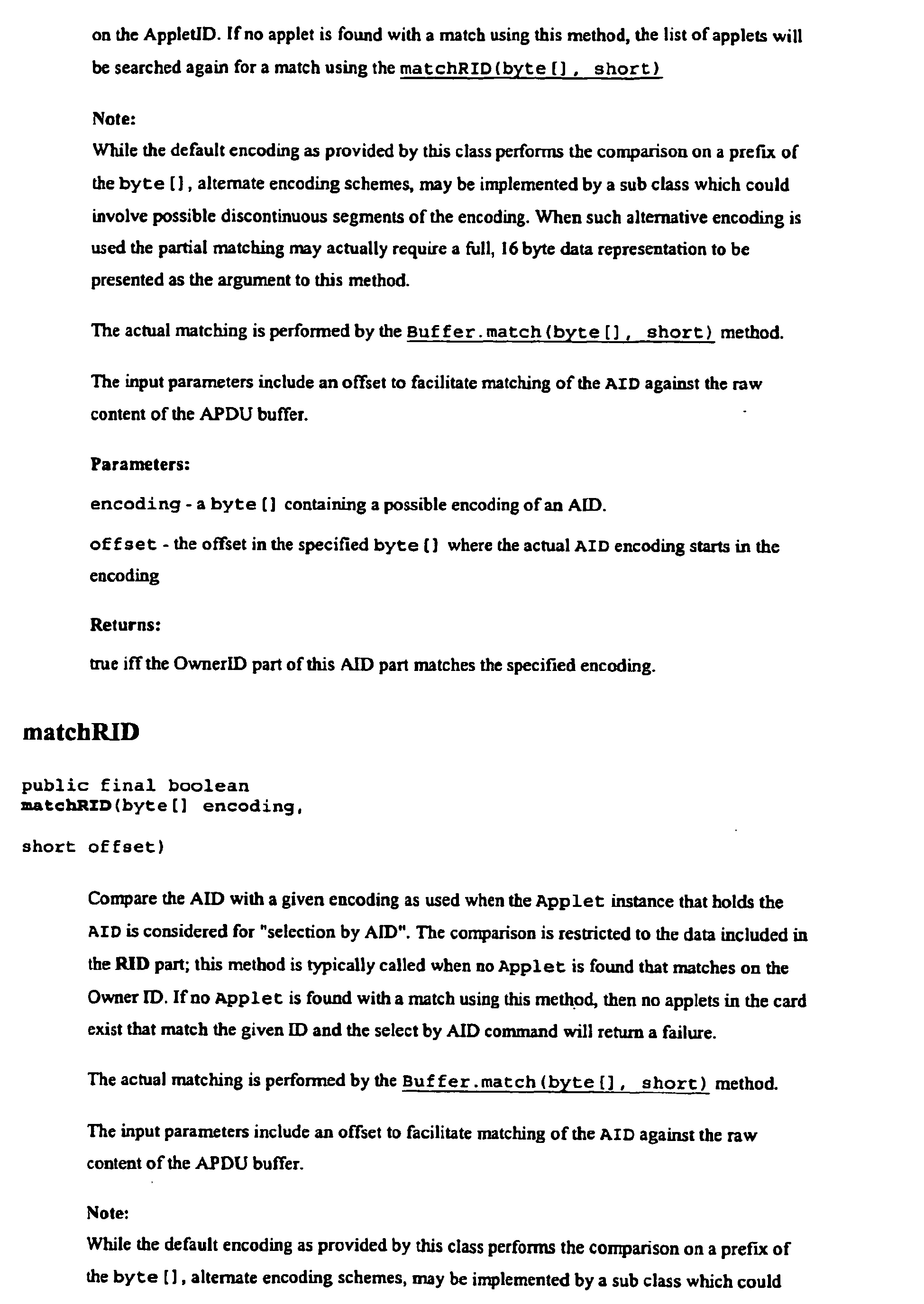

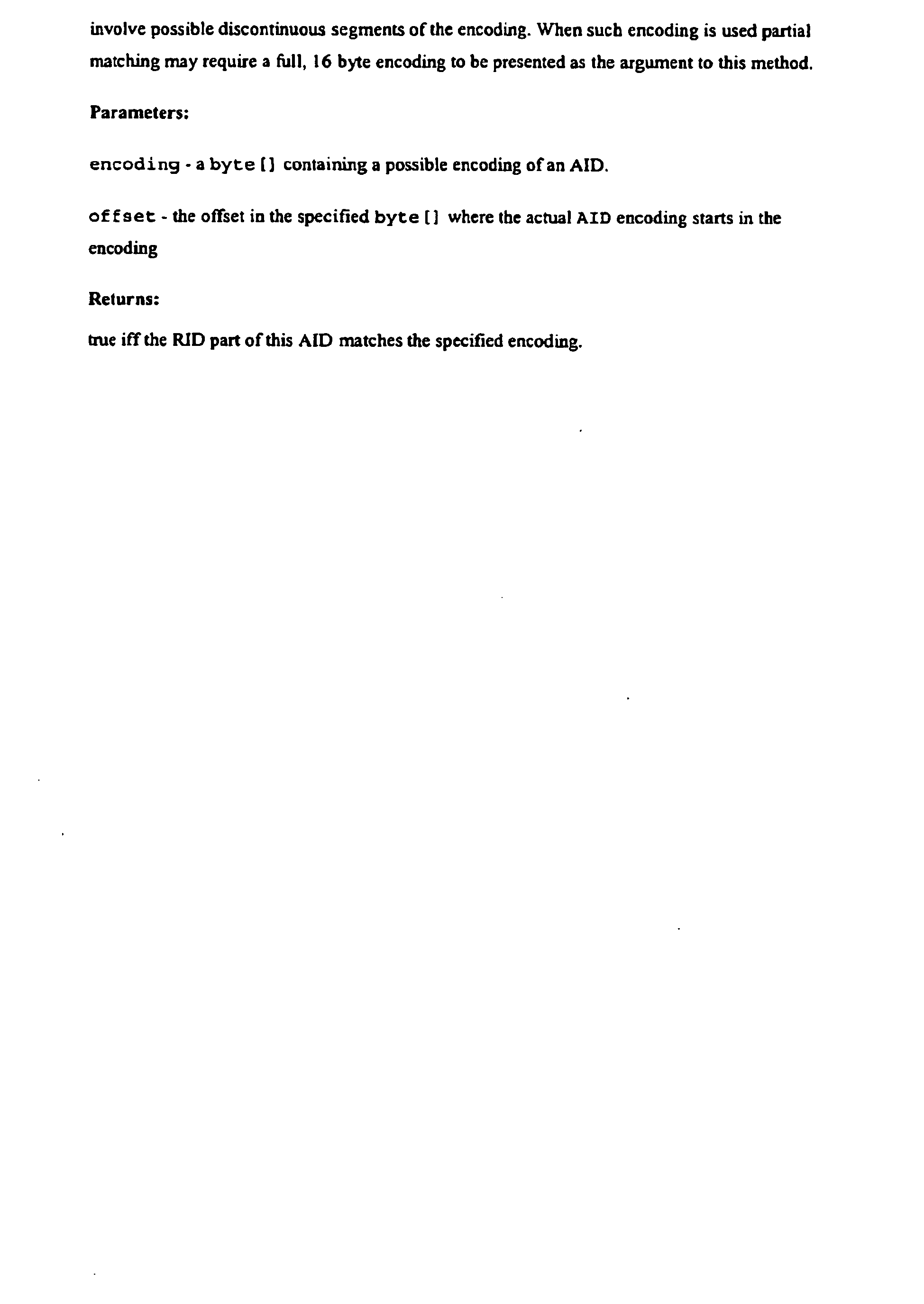

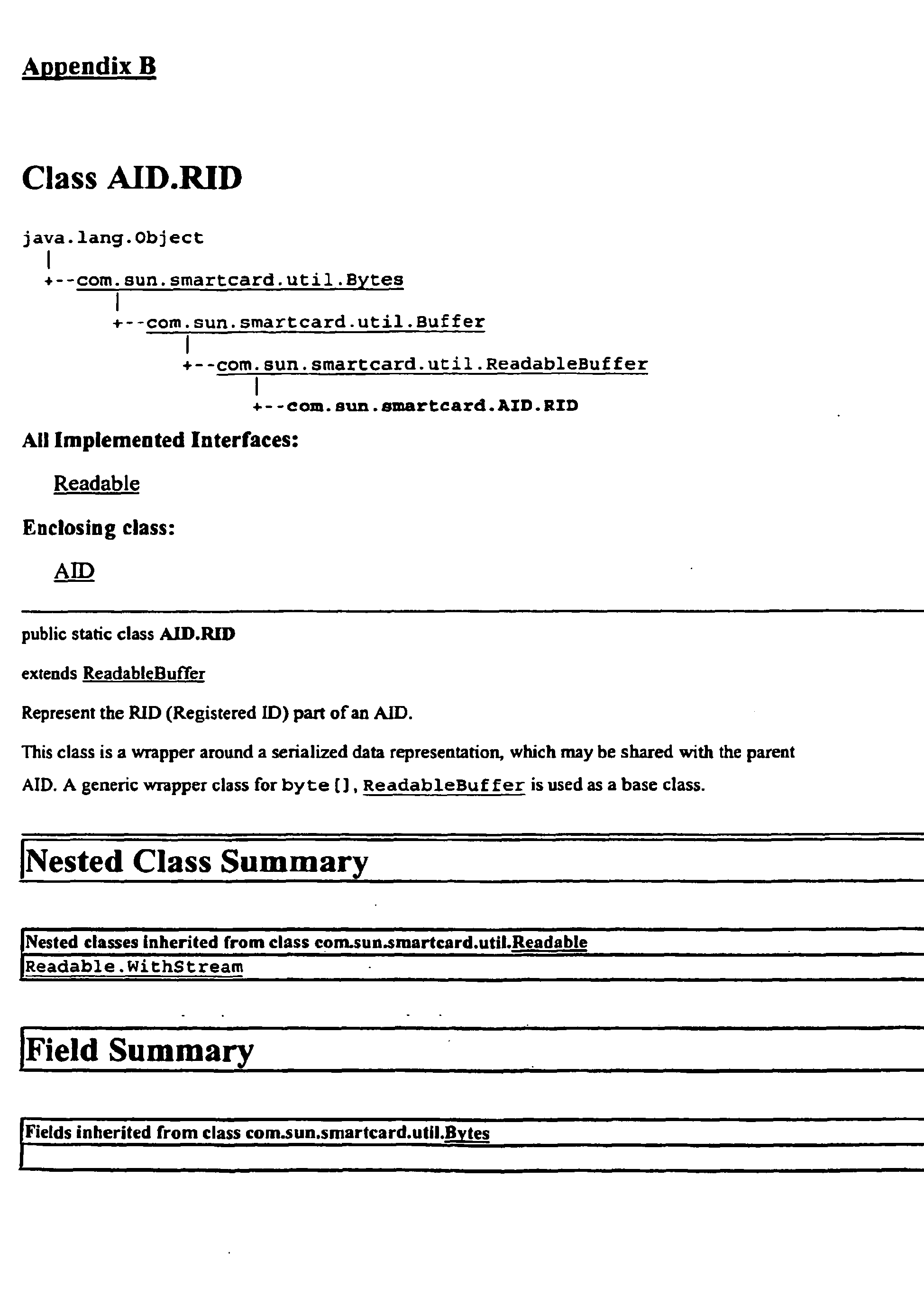

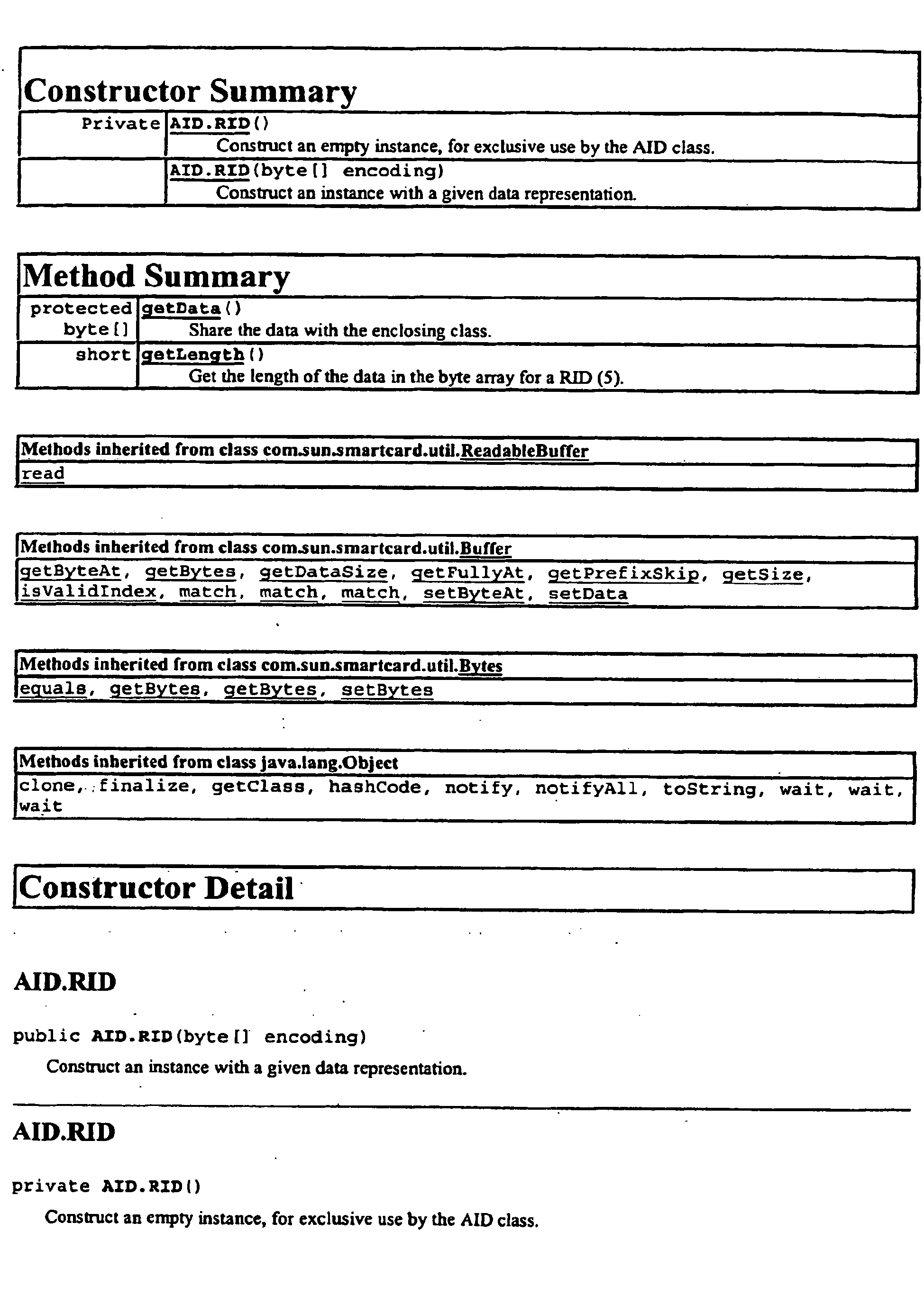

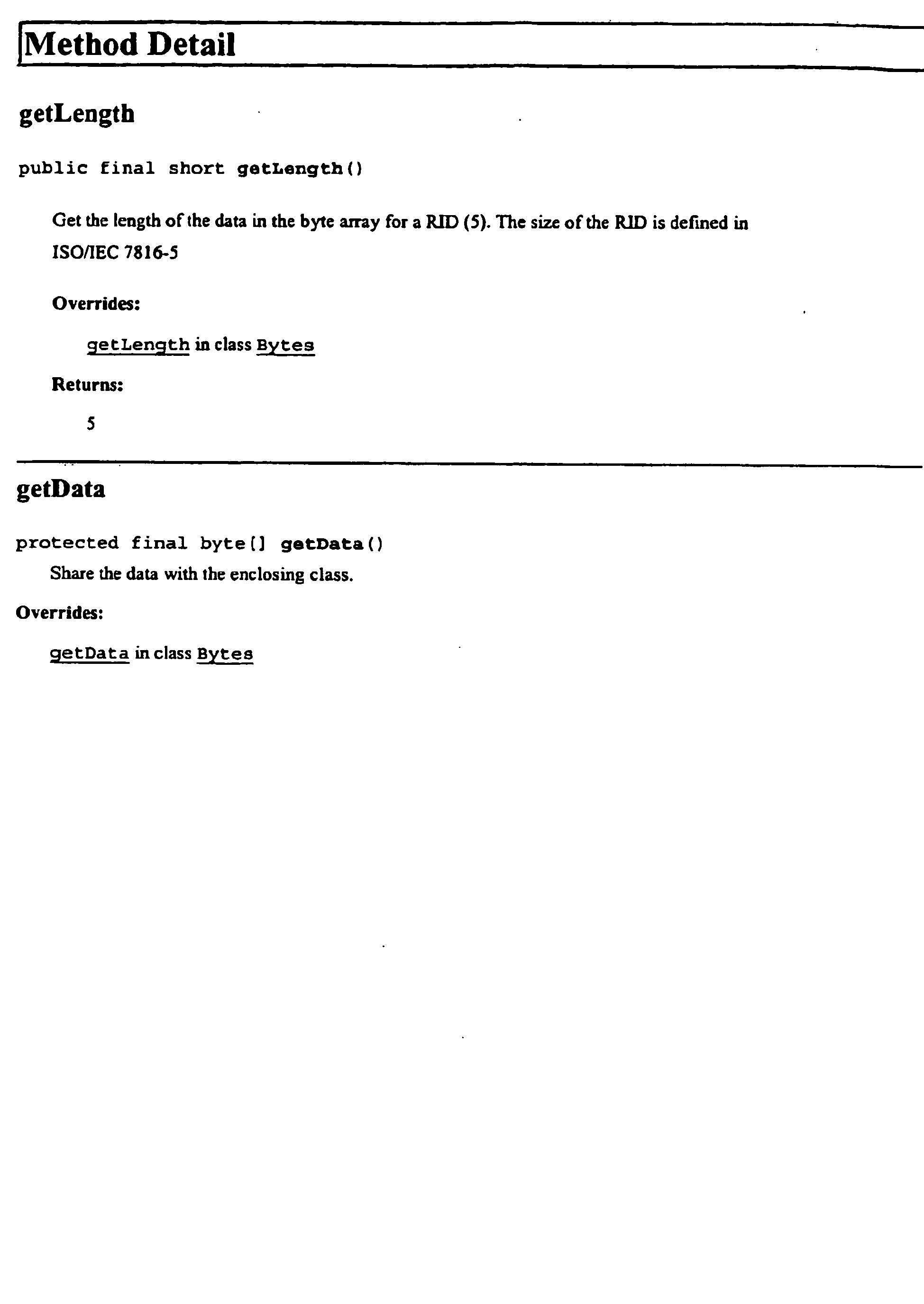

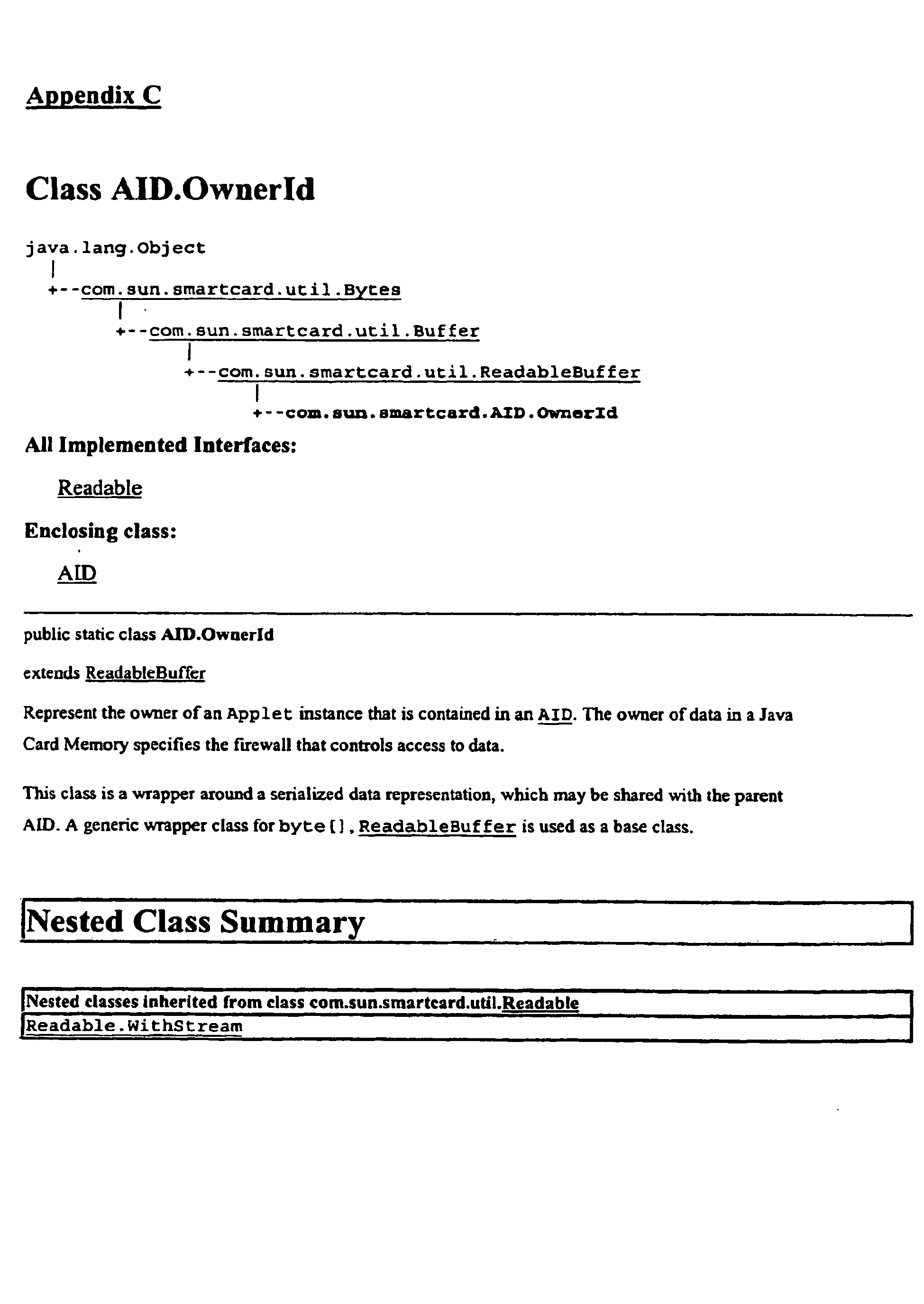

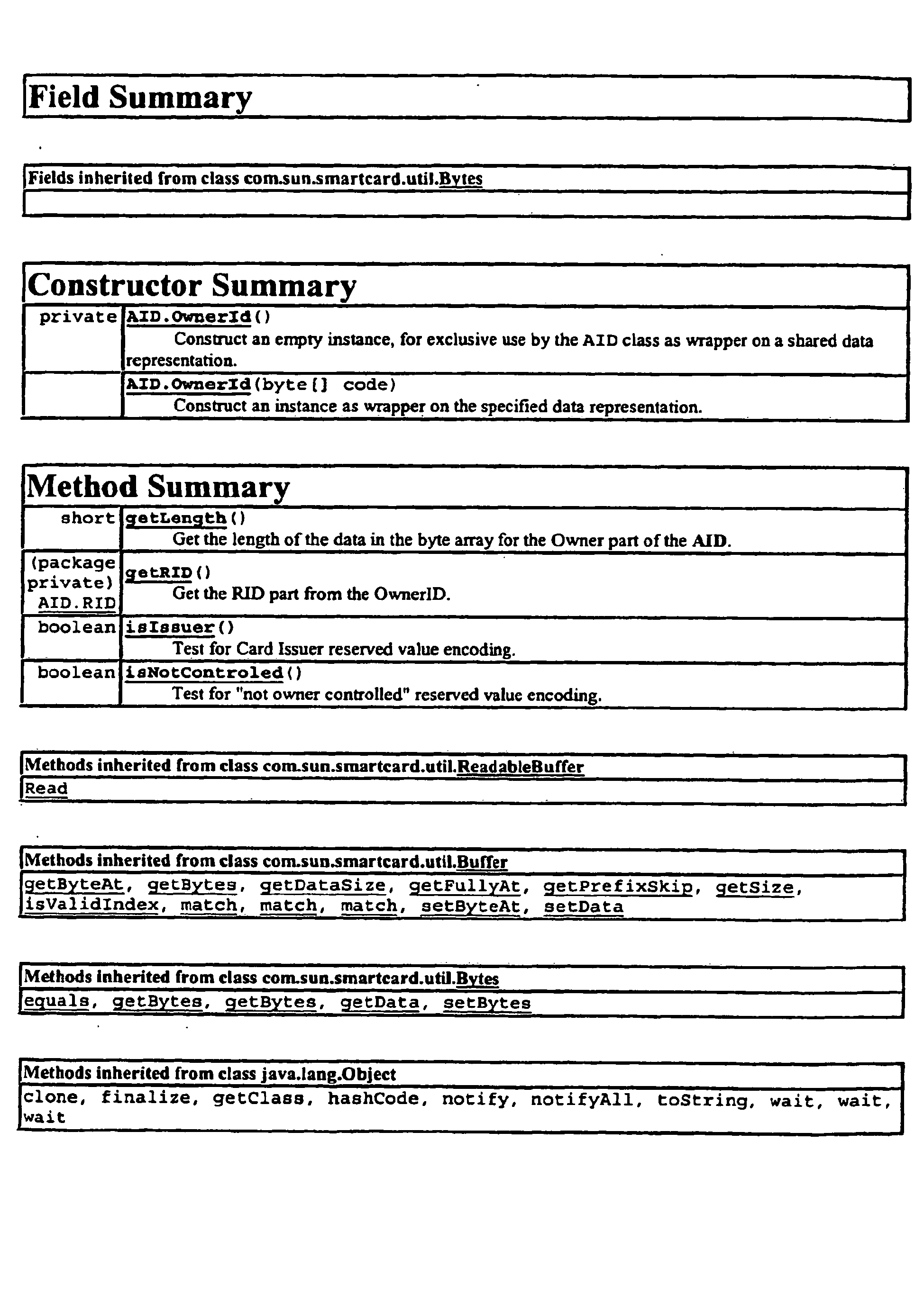

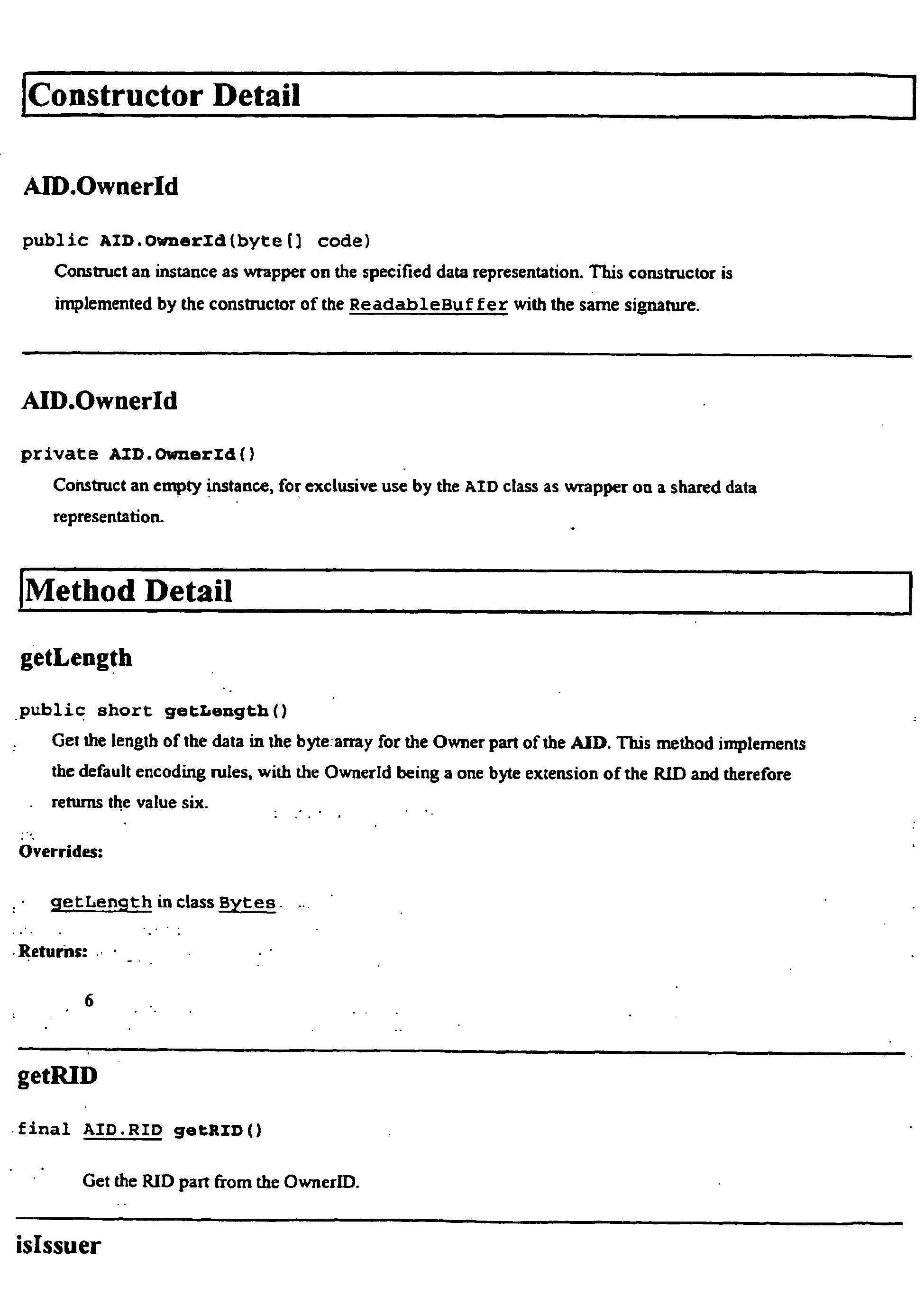

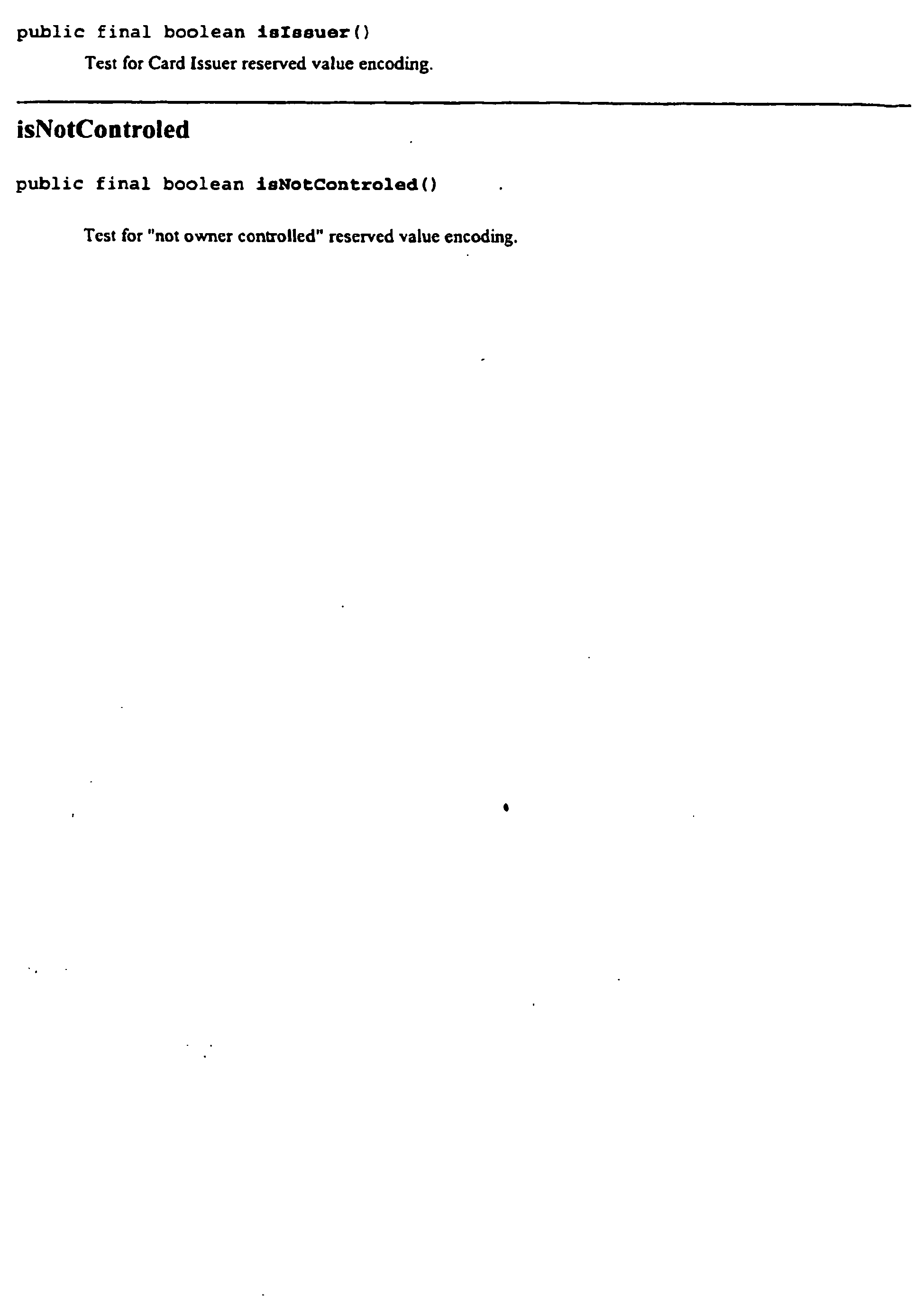

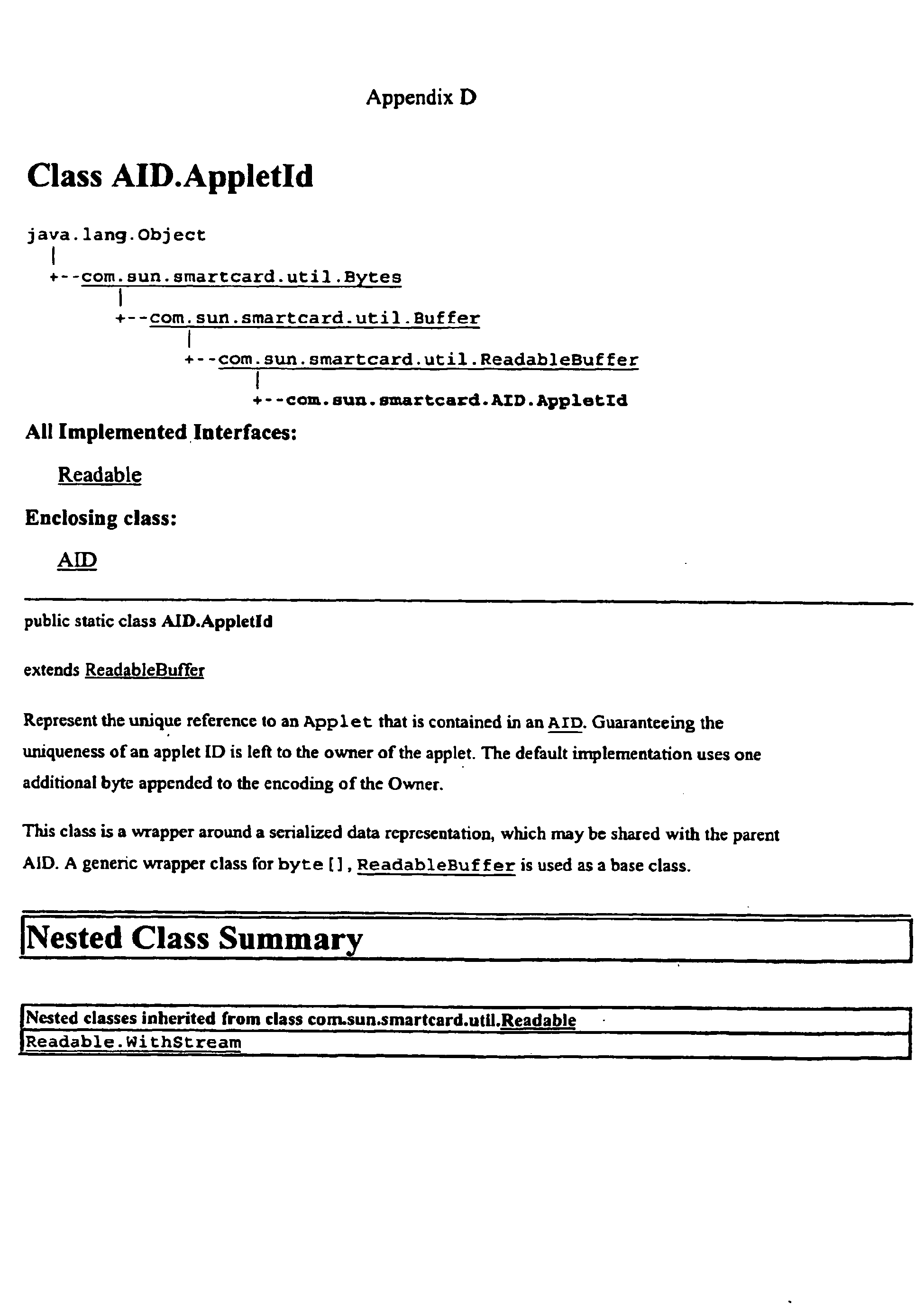

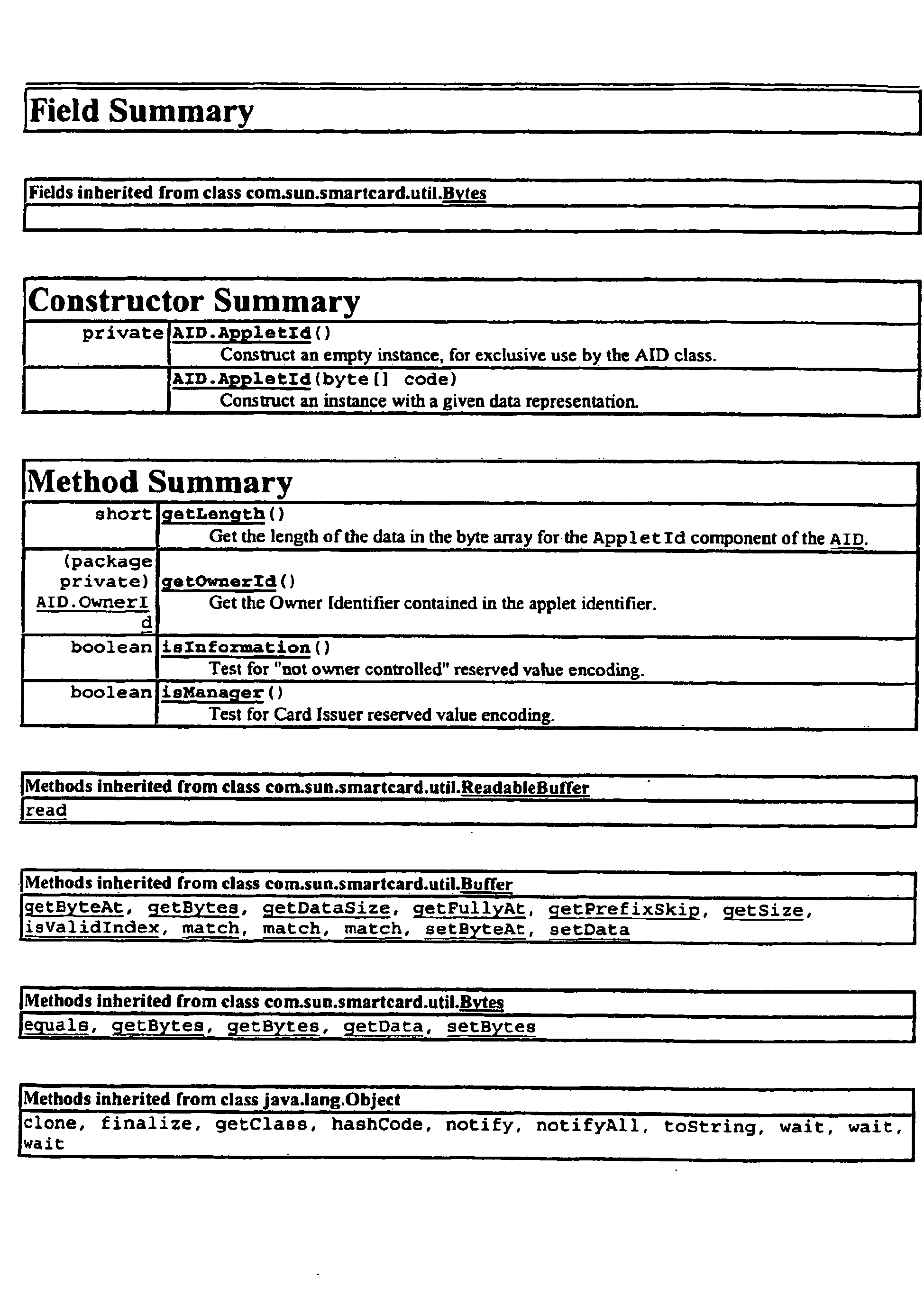

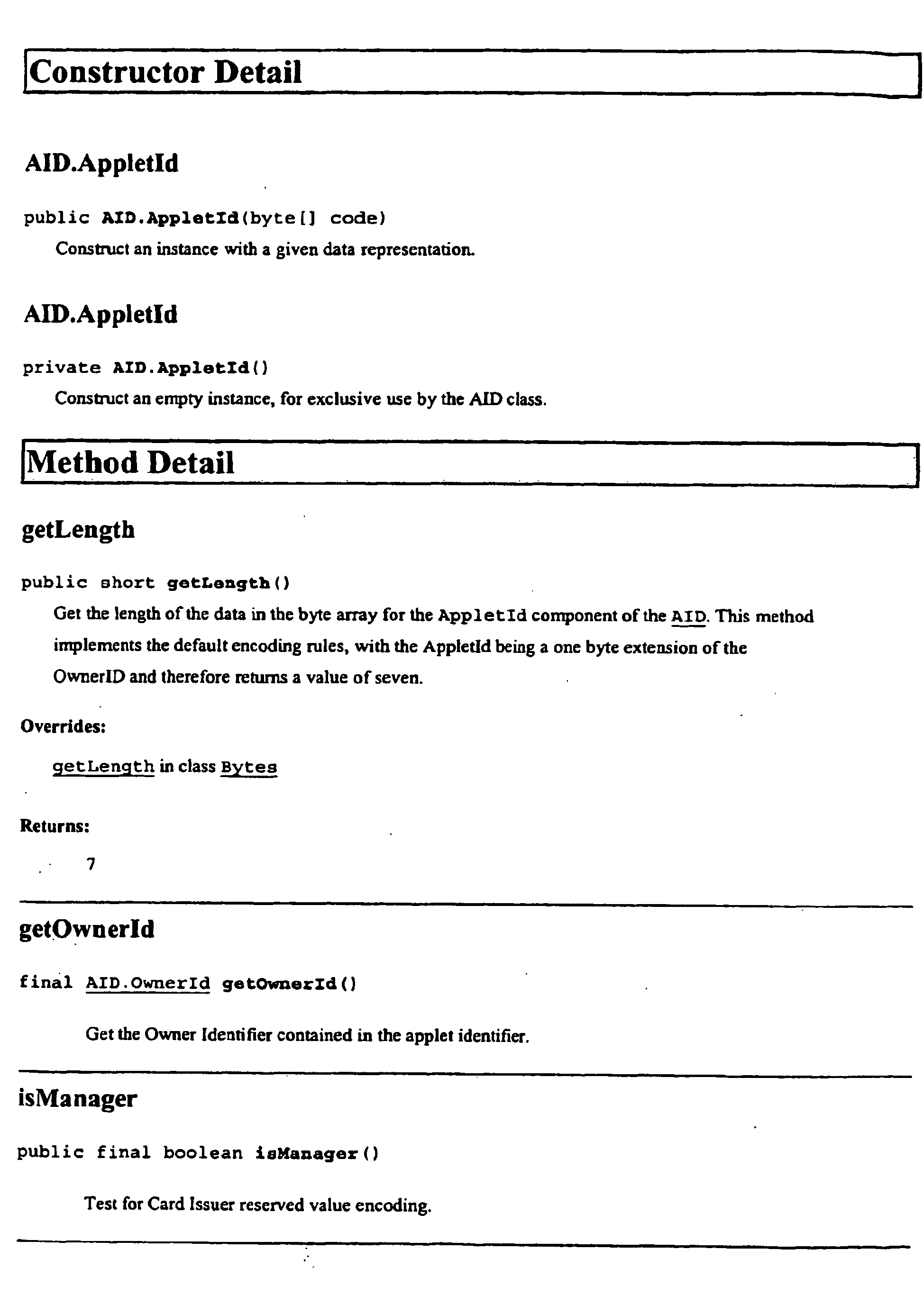

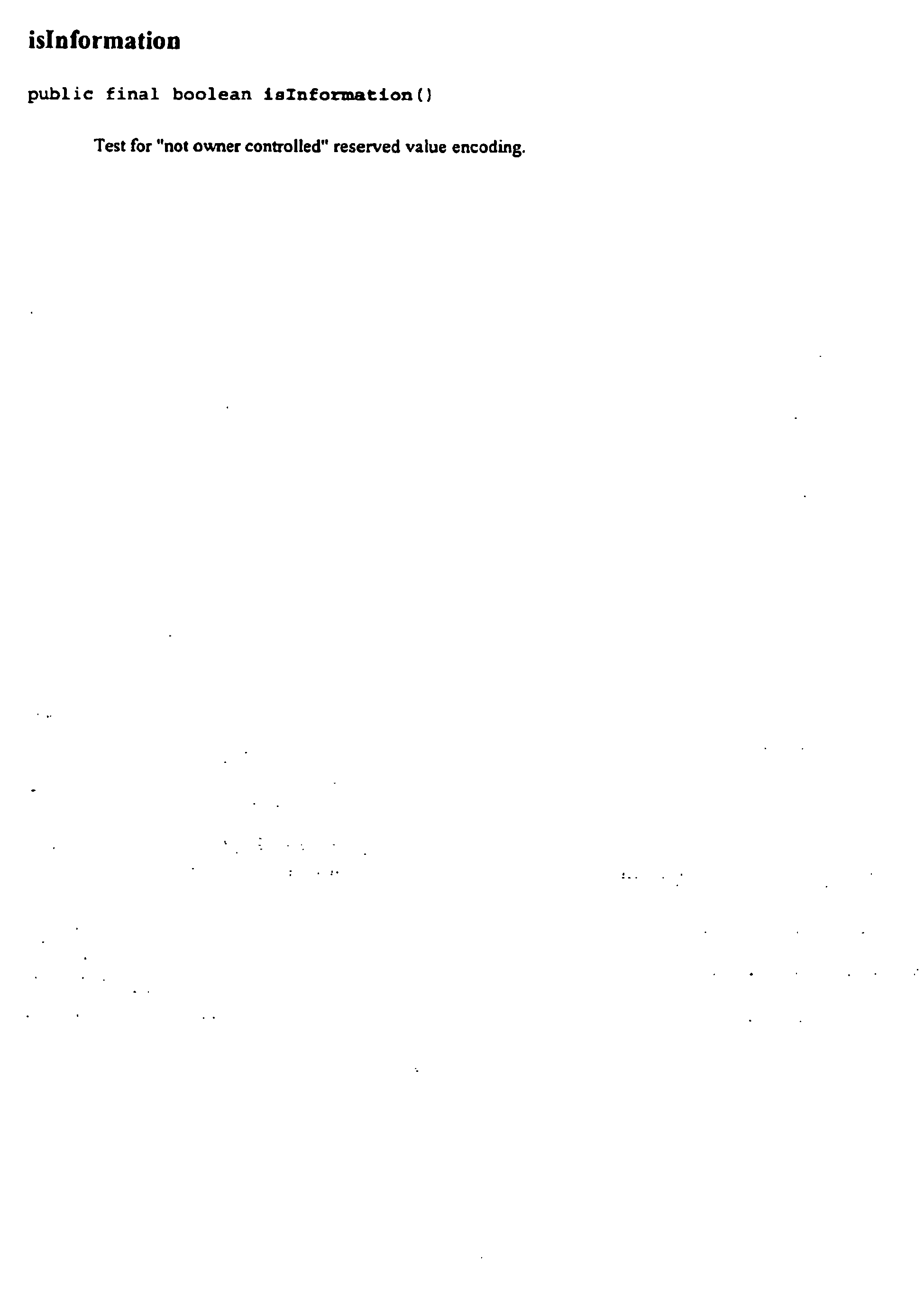

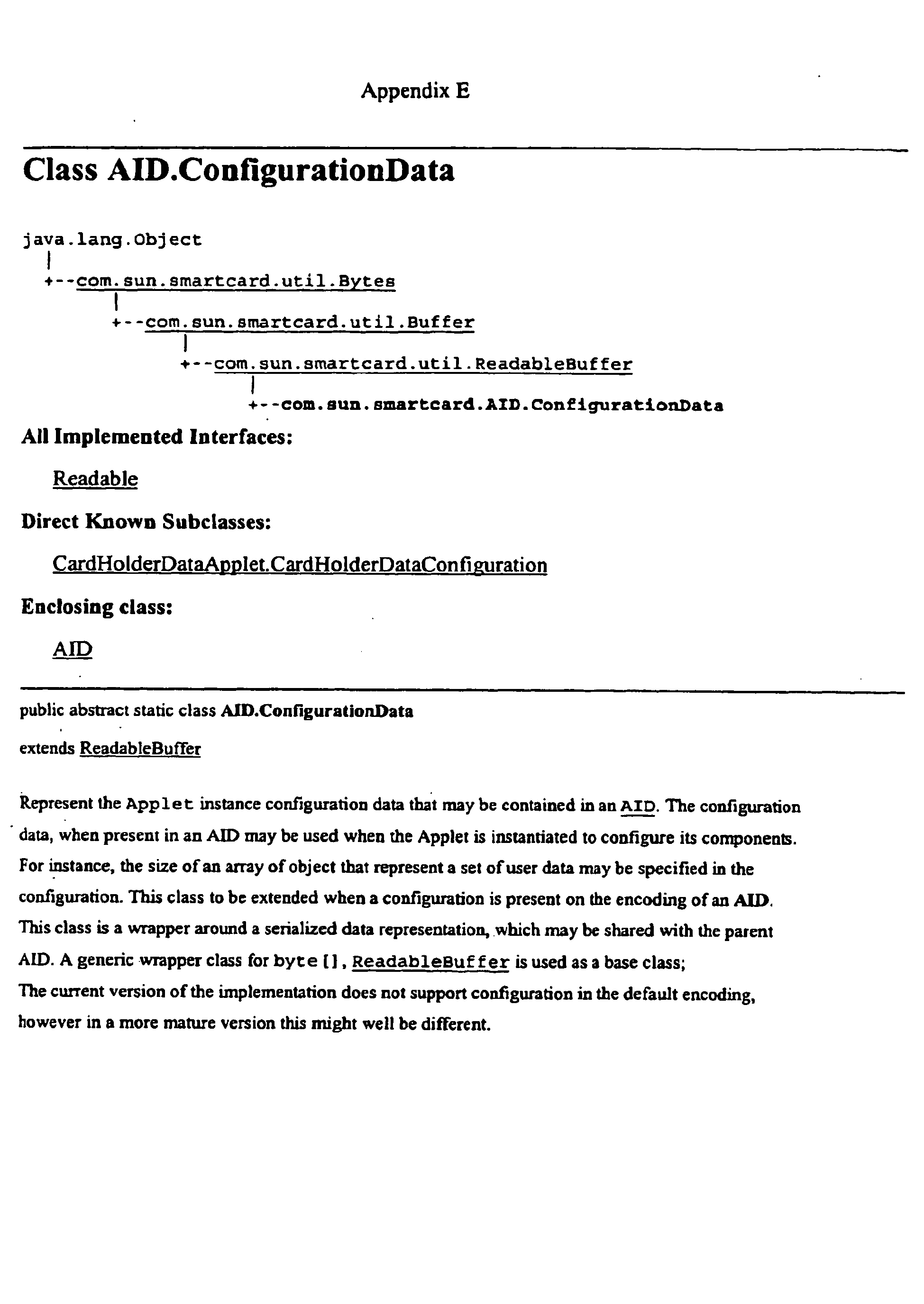

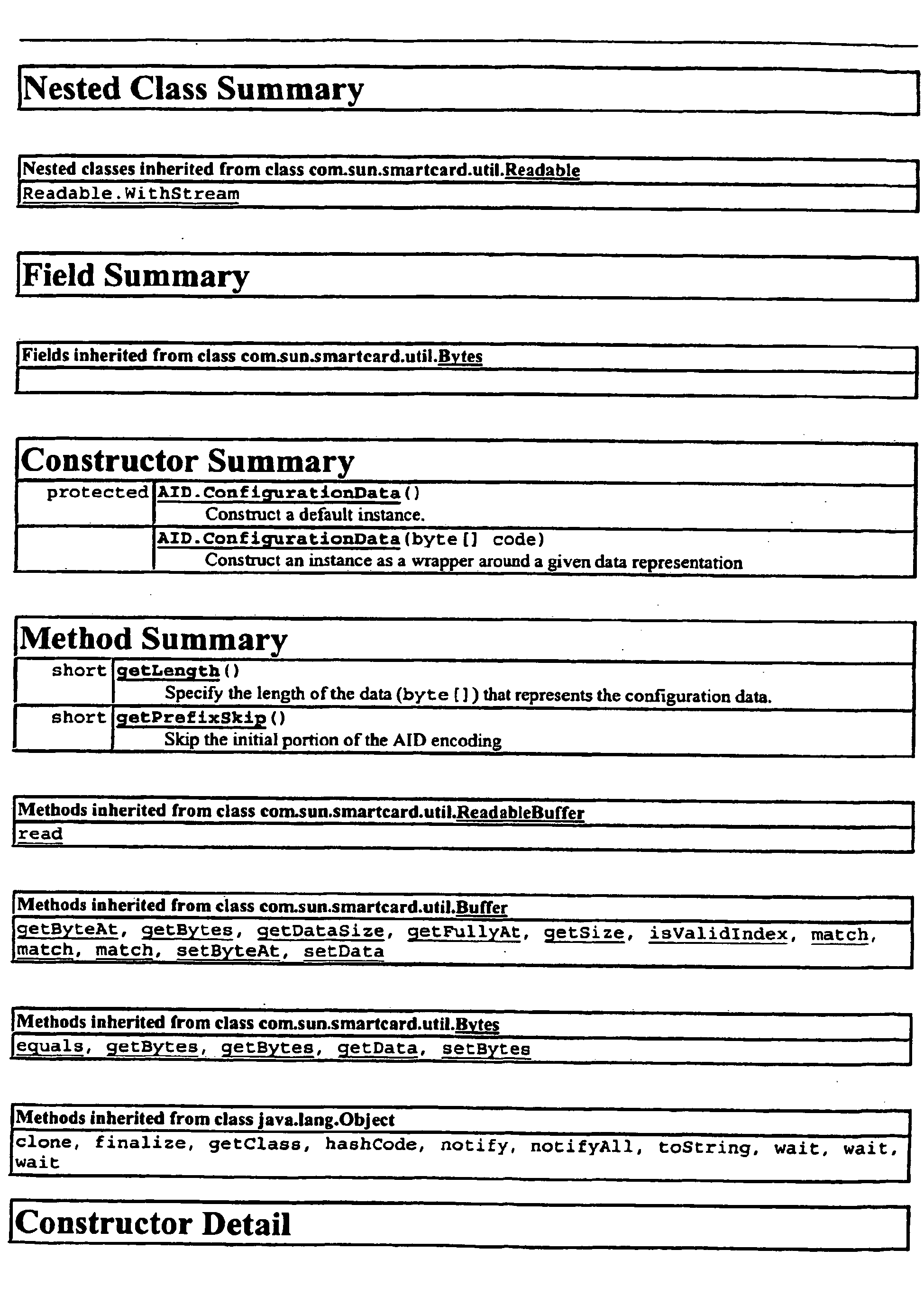

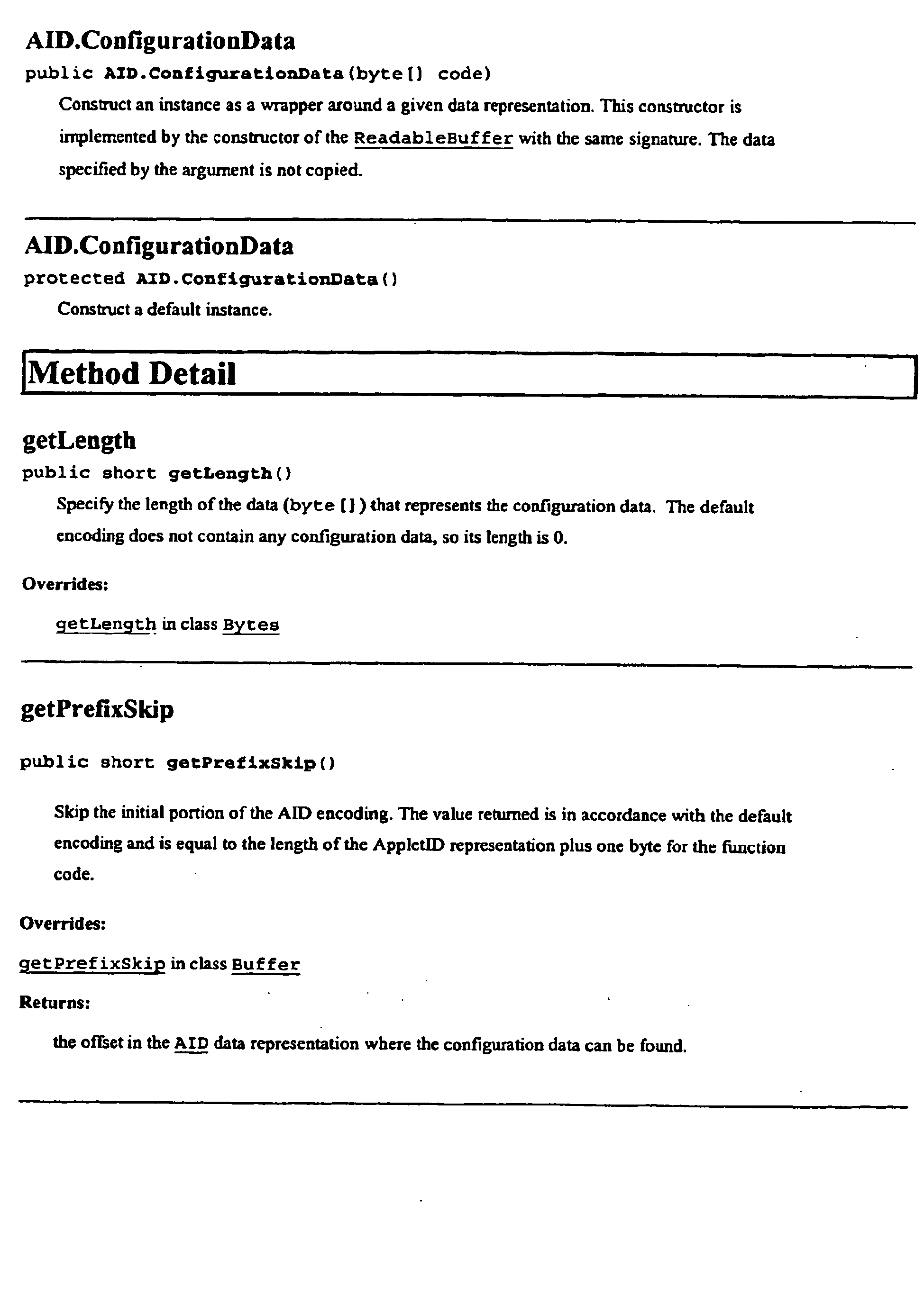

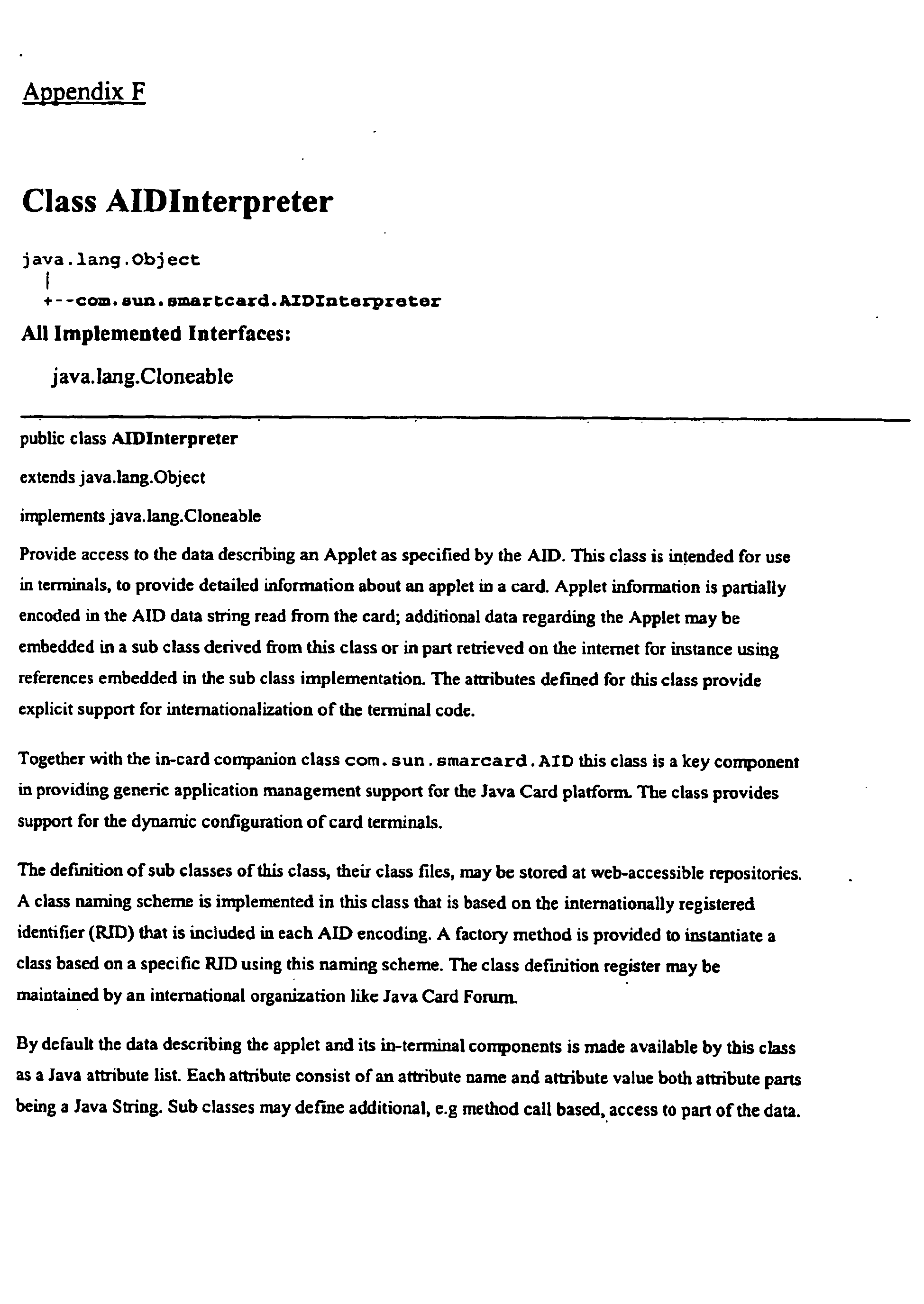

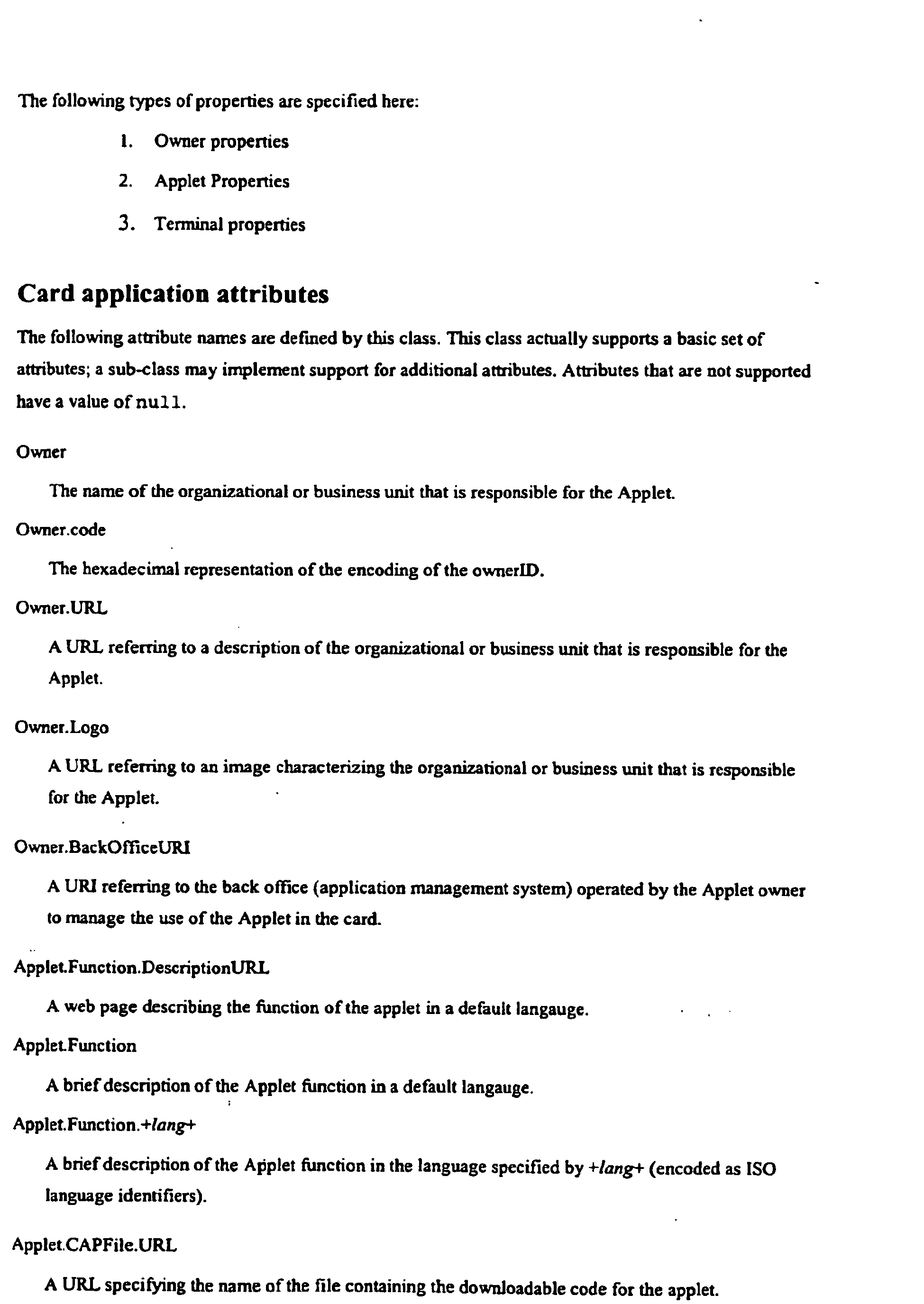

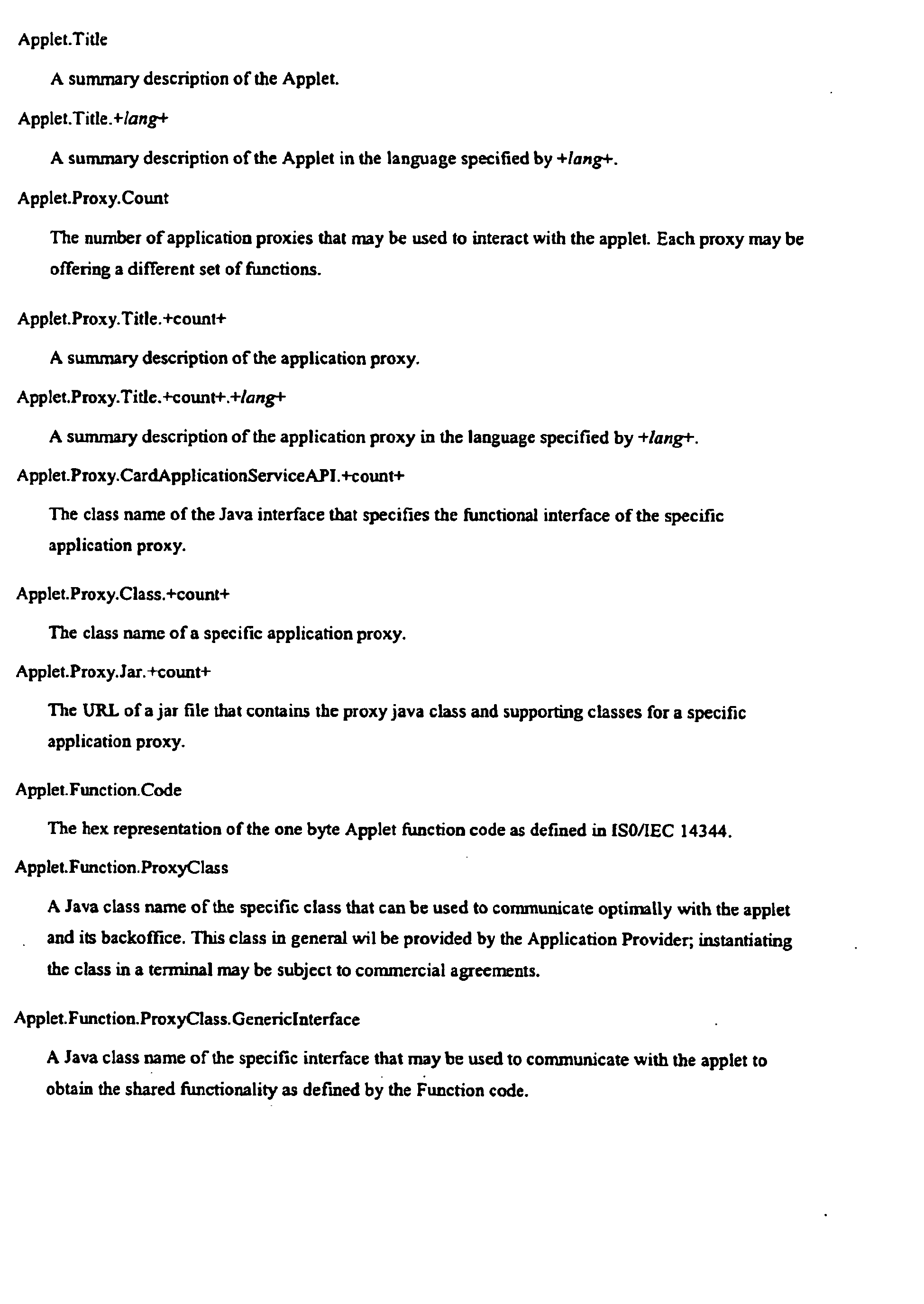

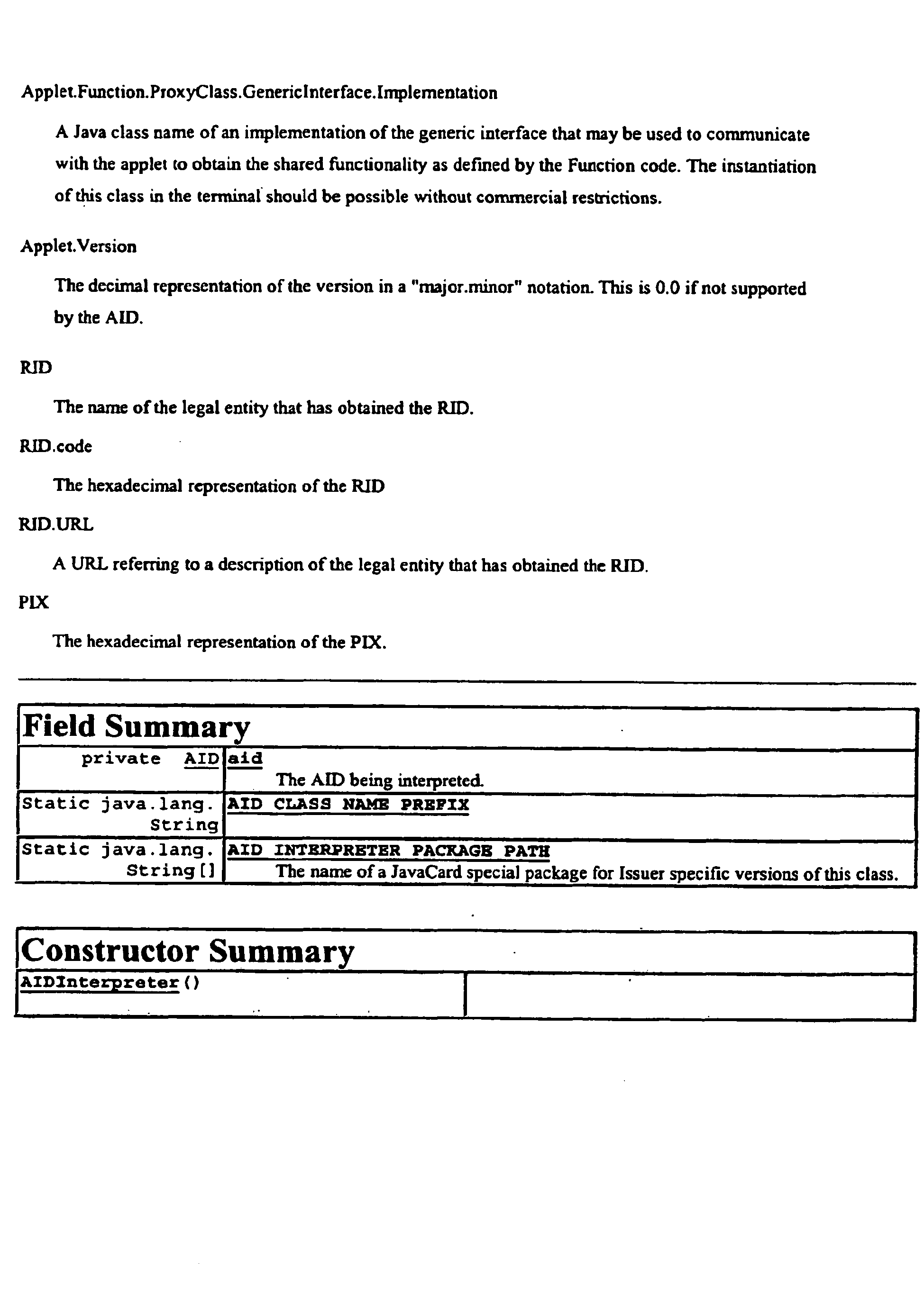

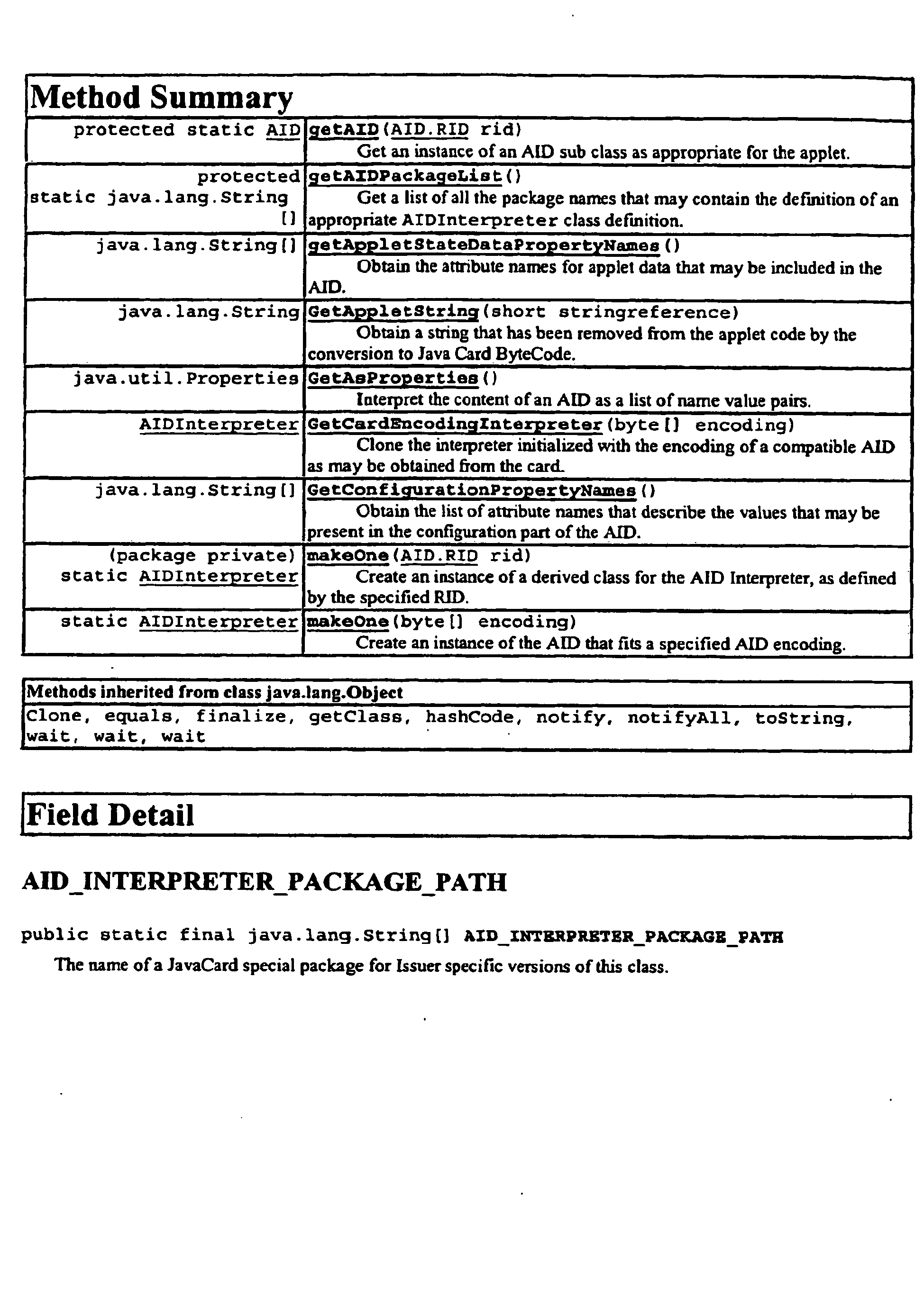

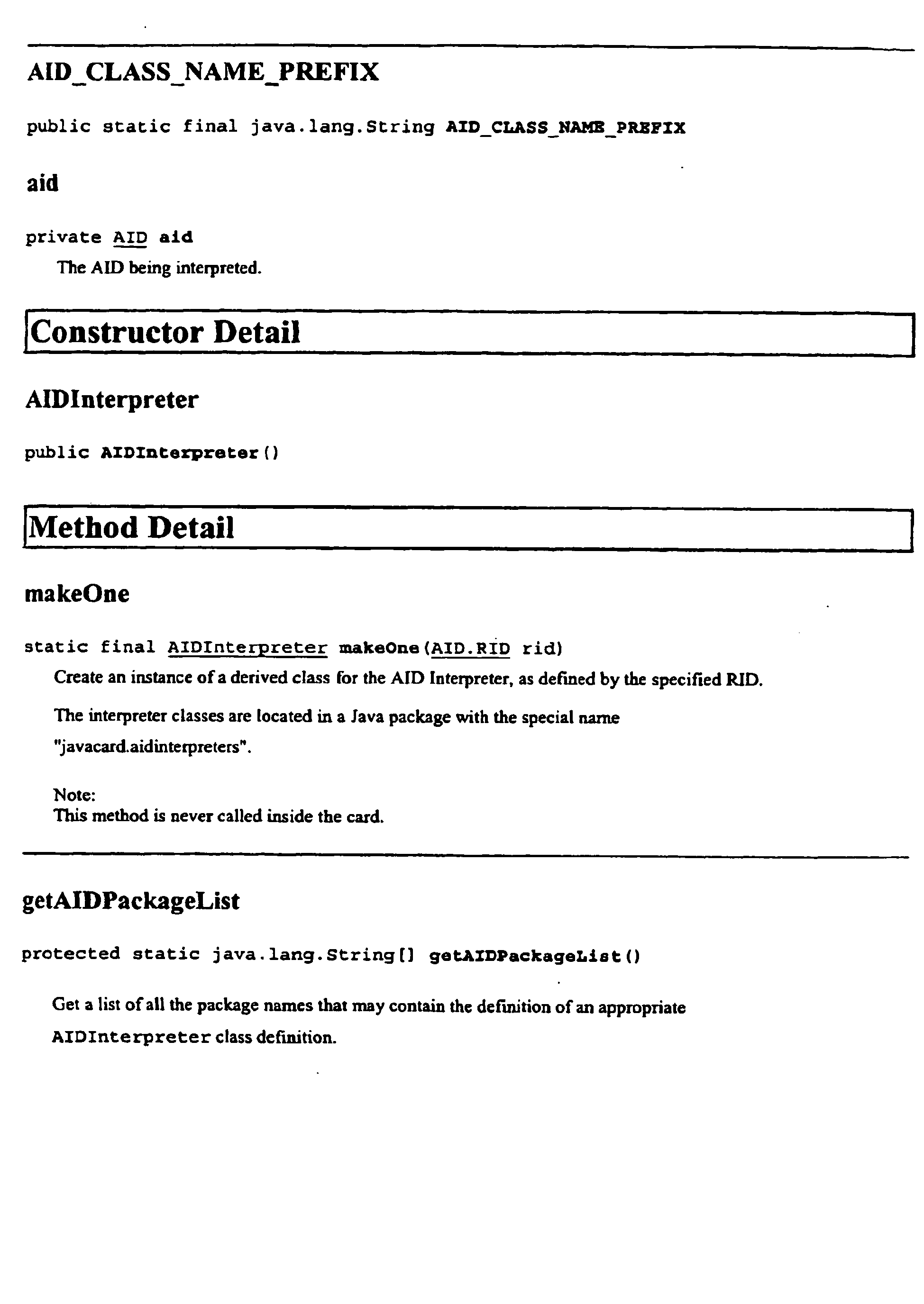

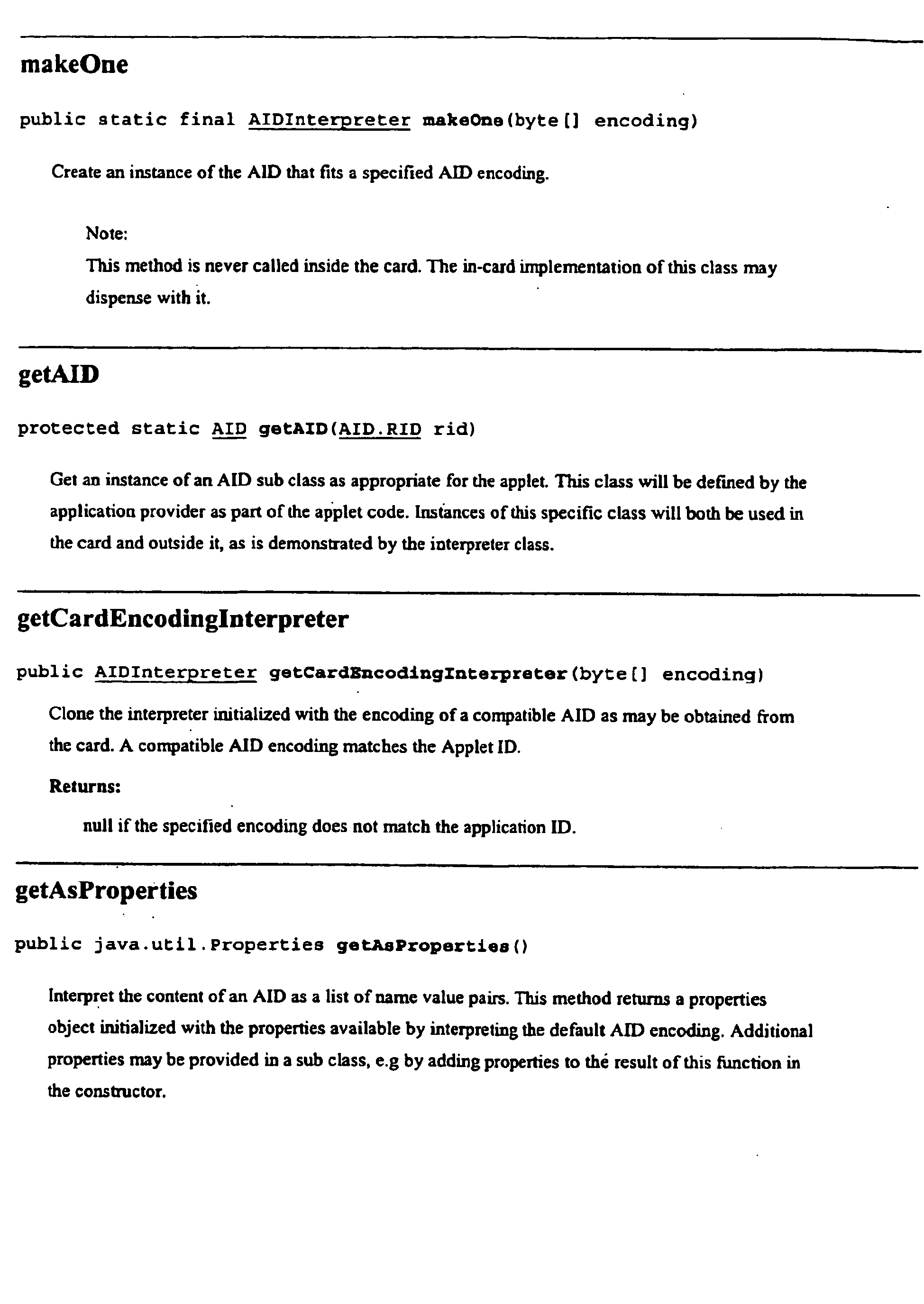

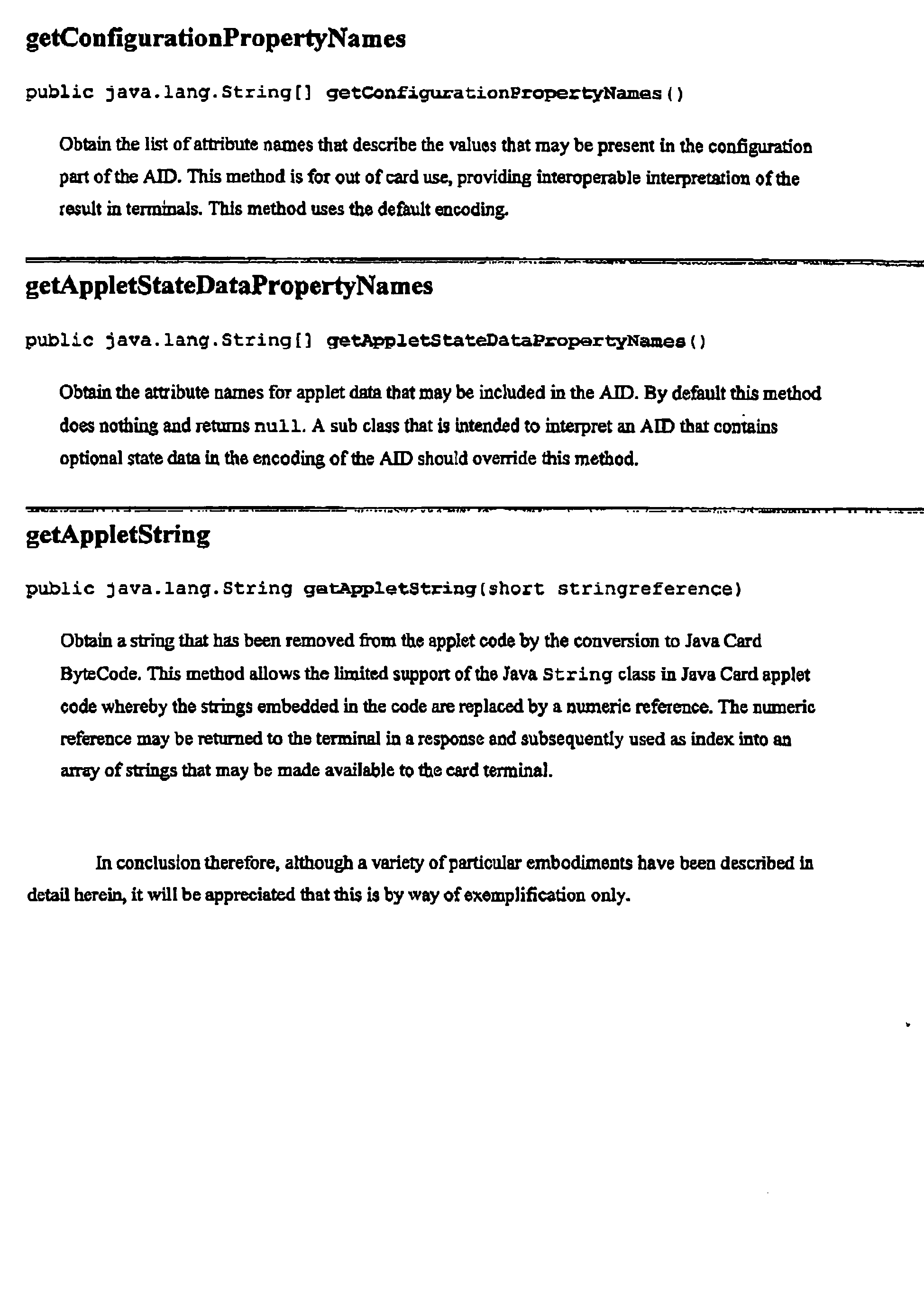

## Claims

1. A method of processing an application identifier AID (401) as defined in international standard ISO/IEC 7816-5 for an application installed on a smart card (102), said AID including a registered application provider identifier RID (501), the method comprising:
receiving at a terminal (110) the AID for an application on a smart card;
determining the RID for the application from the received AID of the application;
generating an identifier for a network resource from the RID;
transmitting from the terminal a request to the network resource using said identifier, wherein said request incorporates the AID for the application; and
receiving at the terminal a response to said request, said response including material selected based on the AID included in said request, wherein said material is for use in handling the application on the smart card;
wherein the application incorporates an AID interpreter (411), the method further comprising:
receiving a request at the AID interpreter to provide the AID for the application, wherein said AID is accessed via said AID interpreter;
retrieving a first component of the AID, wherein said first component is logically internal to the AID interpreter;
retrieving a second component of the AID, wherein said second component is logically external to the AID interpreter and comprises dynamic data indicative of a state relevant to the application; and
combining at least the first and second components of the AID in order to dynamically generate the AID for providing in response to said request to provide the AID for the application.

2. The method of claim 1, wherein said network resource identifier comprises a Universal Resource Locator.

3. The method of claim 1 or 2, wherein said determining the RID comprises extracting the RID from a predetermined location within the AID.

4. The method of any preceding claim, wherein generating a network resource identifier comprises forming the network resource identifier from first and second address portions, wherein said first address portion comprises a predetermined value, and said second address portion is dependent upon the determined RID.

5. The method of claim 4, wherein said first address portion corresponds to a network domain, and said second address portion corresponds to one or more input parameters for transmission to the network domain.

6. The method of claim 5, wherein said network resource identifier is generated by combining a first fixed address portion representative of a search site with a second variable address portion dependent upon the determined RID, wherein the second variable address portion forms a search string for input to the search site.

7. The method of any preceding claim, wherein generating the network resource identifier from the RID includes transforming a binary representation of the RID into a non-binary representation.

8. The method of claim 7, wherein said non-binary representation comprises a string representation.

9. The method of any preceding claim, wherein generating a network resource identifier comprises using a lookup table that maps RID to network resource identifier.

10. The method of claim 9, wherein generating a network resource identifier comprises:
accessing a local lookup table (810) that maps selected RIDs to corresponding network resource identifiers, and using a mapping from this table to generate the network resource identifier if the determined RID matches one of the RIDs in the table; and
if no matching RID in the table is found, accessing a remote database (865) that maps RIDs to corresponding network resource identifiers, wherein said generated network resource identifier comprises the address of the remote database in combination with the RID to be matched.

11. The method of claim 10, further comprising operating said local lookup table as a cache of the remote database.

12. The method of any preceding claim, wherein the response to said request comprises or identifies code for use in decoding the AID of the application.

13. The method of claim 12, wherein said code is provided in the form of a Java application descriptor file.

14. The method of claim 12, further comprising installing said code in the terminal to perform said transaction with the application.

15. The method of any preceding claim, wherein said network resource identifier represents a fully qualified class name for a class.

16. The method of claim 15, further comprising examining to see if the class is already loaded, and if so, not transmitting said request.

17. The method of claim 15, further comprising accessing the class in accordance with the classpath definitions.

18. The method of any preceding claim, wherein the response to said request comprises a URL denoting a service or facility for use in interacting with the application on the smart card.

19. The method of claim 1, wherein the response to the request is dependent upon a proprietary application identifier extension PDC portion (502) of the AID.

20. The method of any preceding claim, wherein the AID for the application on the smart card is received at the terminal during a session with said smart card, and wherein said steps of determining and generating are performed by said terminal.

21. The method of claim 20, wherein there are multiple applications on the smart card, each application having its own respective AID which is received on the terminal from the smart card, and wherein determining the RID, generating a network resource identifier from the RID, transmitting a request to said network resource using said identifier and receiving a response, are performed separately for each received AID.

22. The method of claim 21, wherein the responses to the requests received at the terminal for the multiple applications are used in determining which of said multiple applications an the smart card is to be used in interacting with the terminal.

23. The method of claim 1, further comprising selecting a desired application on a smart card, wherein there are potentially two or more applications installed on the smart card, each application having a stored application identifier AID, by
specifying a desired application in terms of multiple parameters;
retrieving multiple parameters from a stored AID for an application on the smart card; and
comparing the specified multiple parameters with the retrieved multiple parameters to determine whether or not there is match.

24. A computer program product comprising instructions on a medium, wherein said instructions when loaded into a computer system came the machine to implement the method of any preceding claim.

## Patentansprüche

1. Verfahren zum Verarbeiten einer Anwendungskennung AID (401), wie sie in dem internationalen Standard ISO/IEC 7816-5 für eine auf einer Smart Card (102) installierte Anwendung definiert wird, wobei die AID eine registrierte Providerkennung RID (501) der Anwendung umfasst, wobei das Verfahren aufweist:
Empfangen der AID für eine Anwendung auf einer Smart Card an einem Terminal (110),
Feststellen der RID der Anwendung aus der empfangenen AID der Anwendung,
Erzeugen einer Kennung für eine Netzwerkresource aus der RID,
Übermitteln einer Anfrage von dem Terminal an die Netzwerkresource unter Verwendung der Kennung, wobei die Anfrage die AID für die Anwendung beinhaltet, und
Empfangen einer Antwort auf die Anfrage an dem Terminal, wobei die Antwort Material enthält, welches auf Basis der AID, die in der Anfrage enthalten war, ausgewähltes Material enthält, wobei das Material für die Verwendung bei der Handhabung der Anwendung auf der Smart Card vorgesehen ist,
wobei die Anwendung einen AID-Interpreter (411) beinhaltet, und das Verfahren weiterhin aufweist:
Empfangen einer Anfrage bei dem AID-Interpreter, die AID für die Anwendung bereitzustellen, wobei über den AID-Interpreter auf die AID zugegriffen wird,
Beschaffen einer ersten Komponente der AID, wobei die erste Komponente logisch innerhalb des AID-Interpreters liegt,
Beschaffen einer zweiten Komponente der AID, wobei die zweite Komponente logisch außerhalb des AID-Interpreters liegt und dynamische Daten aufweist, die einen Zustand anzeigen, der sich auf die Anwendung bezieht, und
Kombinieren zumindest der ersten und zweiten Komponenten der AID, um die AID dynamisch zu erzeugen, um in Reaktion auf die Anfrage die AID für die Anwendung bereitzustellen.

2. Verfahren nach Anspruch 1, wobei die Kennung der Netzwerkresource einen universellen Resourcenlokalisierer (Universal Resource Locator - URL) aufweist.

3. Verfahren nach Anspruch 1 oder 2, wobei das Bestimmen der RID das Extrahieren der RID aus einer vorbestimmten Position innerhalb der AID aufweist.

4. Verfahren nach einem der vorstehenden Ansprüche, wobei das Erzeugen einer Netzwerkresourcenkennung das Ausbilden der Netzwerkresourcenkennung aus ersten und zweiten Adressabschnitten aufweist, wobei der erste Adressabschnitt einen vorbestimmten Wert aufweist und der zweite Adressabschnitt von der festgestellten RID abhängt.

5. Verfahren nach Anspruch 4, wobei der erste Adressabschnitt einer Netzwerkdomäne entspricht und der zweite Adressabschnitt einem oder mehreren Eingabeparametern für die Übermittlung an die Netzwerkdomäne entspricht.

6. Verfahren nach Anspruch 5, wobei die Netzwerkresourcenkennung durch Kombinieren eines ersten festen Adressabschnittes, welcher einen Suchort bzw. Suchbereich repräsentiert, mit einem zweiten variablen Adressabschnitt erzeugt wird, der von der festgestellten RID abhängt, wobei der zweite variable Adressabschnitt eine Suchkette (search string) für die Eingabe in den Suchbereich bildet.

7. Verfahren nach einem der vorstehenden Ansprüche, wobei das Erzeugen der Netzwerkresourcenkennung aus der RID das Transformieren einer binären Darstellung der RID in eine nicht-binäre Darstellung aufweist.

8. Verfahren nach Anspruch 7, wobei die nicht-binäre Darstellung die Darstellung einer Kette (eines string) aufweist.

9. Verfahren nach einem der vorstehenden Ansprüche, wobei das Erzeugen einer Netzwerkresourcenkennung die Verwendung einer Nachschlagetabelle aufweist, welche die RID auf die Netzwerkresourcenkennung abbildet.

10. Verfahren nach Anspruch 9, wobei das Erzeugen einer Netzwerkresourcenkennung aufweist:
Zugreifen auf eine lokale Nachschlagetabelle (810), welche ausgewählte RIDs auf entsprechende Netzwerkresourcenkennungen abbildet, und Verwenden einer Zuordnung von dieser Tabelle zum Erzeugen der Netzwerkresourcenkennung, wenn die festgestellte RID mit einer der RIDs in der Tabelle übereinstimmt, und
falls keine passende RID in der Tabelle gefunden wird, Zugreifen auf eine entfernte Datenbank (865), die RIDs auf entsprechende Netzwerkresourcenkennungen abbildet, wobei die erzeugte Netzwerkresourcenkennung die Adresse der entfernten Datenbank in Kombination mit der RID aufweist, für die ein passender Eintrag gesucht wird.

11. Verfahren nach Anspruch 10, welches weiterhin das Betreiben einer lokalen Nachschlagetabelle als Cache für die entfernt gelegene Datenbank aufweist.

12. Verfahren nach einem der vorstehenden Ansprüche, wobei die Antwort auf die Anfrage Code für die Verwendung beim Decodieren der AID der Anwendung aufweist oder diesen angibt bzw. identifiziert.

13. Verfahren nach Anspruch 12, wobei der Code in Form eines Java Anwendungs-Descriptorfiles bereitgestellt wird.

14. Verfahren nach Anspruch 12, welches weiterhin das Installieren des Codes in dem Terminal aufweist, um die Transaktion mit der Anwendung durchzuführen.

15. Verfahren nach einem der vorstehenden Ansprüche, wobei die Netzwerkresourcenkennung einen vollständig qualifizierten Klassennamen für eine Klasse repräsentiert.

16. Verfahren nach Anspruch 15, welches weiterhin das Untersuchen aufweist, festzustellen, ob die Klasse bereits geladen ist, und, wenn dies der Fall ist, nicht Übermitteln der Anfrage.

17. Verfahren nach Anspruch 15, welches weiterhin das Zugreifen auf die Klasse gemäß den Definitionen des Klassenpfades aufweist.

18. Verfahren nach einem der vorstehenden Ansprüche, wobei die Antwort auf die Anfrage eine URL aufweist, welche einen Dienst oder eine Einrichtung zum Verwenden bei der Interaktion mit der Anwendung auf der Smart Card angibt.

19. Verfahren nach Anspruch 1, wobei die Antwort auf die Anfrage von einem individuell zugeordneten Abschnitt (502) einer Erweiterung der Anwendungskennung (proprietary application identifier extension - PIX) des AID abhängt.

20. Verfahren nach einem der vorstehenden Ansprüche, wobei die AID für die Anwendung auf der Smart Card an einem Terminal während einer Sitzung mit der Smart Card empfangen wird, und wobei die Schritte des Feststellens und Erzeugens durch das Terminal ausgeführt werden.

21. Verfahren nach Anspruch 20, wobei es mehrere Anwendungen auf der Smart Card gibt und jede Anwendung ihre eigene entsprechende AID hat, die auf dem Terminal von der Smart Card empfangen wird, und wobei das Feststellen der RID, das Erzeugen einer Netzwerkresourcenkennung aus der RID, das Senden einer Anforderung an die Netzwerkresource unter Verwendung der Kennung und das Empfangen einer Antwort für jede empfangene AID getrennt ausgeführt werden.

22. Verfahren nach Anspruch 21, wobei die Antworten auf die Anfragen, welche bei dem Terminal für die mehreren Anwendungen empfangen werden, für die Feststellung verwendet werden, welche der mehreren Anwendungen auf der Smart Card beim Interagieren mit dem Terminal verwendet werden soll.

23. Verfahren nach Anspruch 1, welches weiterhin das Auswählen einer gewünschten Anwendung auf einer Smart Card aufweist, wobei es potentiell zwei oder mehrere Anwendungen gibt, die auf der Smart Card installiert sind, wobei jede Anwendung eine gespeicherte Anwendungskennung AID hat, indem
eine gewünschte Anwendung in Form mehrerer Parameter spezifiziert wird,
mehrere Parameter aus einer gespeicherten AID für eine Anwendung auf der Smart Card beschafft bzw. ausgelesen werden, und
die spezifizierten mehreren Parameter mit den beschafften bzw. ausgelesenen mehreren Parametern verglichen werden, um festzustellen, ob es eine Übereinstimmung gibt oder nicht.

24. Computerprogrammprodukt, welches Befehle auf einem Medium aufweist, wobei die Befehle, wenn sie in ein Computersystem geladen sind, bewirken, dass die Maschine das Verfahren nach einem der vorstehenden Ansprüche implementiert.

## Revendications

1. Procédé pour le traitement d'un identificateur d'application, AID, (401), tel que défini dans la norme internationale ISO/IEC 7816-5 pour une application installée sur une carte à puce (102), ledit identificateur AID comportant un identificateur de fournisseur d'applications homologué, RID, (501), le procédé comportant les étapes ci-après consistant à :
recevoir, au niveau d'un terminal (110), l'identificateur AID pour une application sur une carte à puce ;
déterminer l'identificateur RID de l'application à partir de l'identificateur AID reçu de l' application ;
générer un identificateur destiné à une ressource de réseau à partir de l'identificateur RID ;
transmettre, à partir du terminal, une demande à la ressource de réseau en utilisant ledit identificateur, dans laquelle ladite demande intègre l'identificateur AID de l'application ; et
recevoir, au niveau du terminal, une réponse à ladite demande, ladite réponse comportant un élément sélectionné sur la base de l'identificateur AID intégré au sein de ladite demande, dans lequel ledit élément est destiné à être employé dans le traitement de l'application sur la carte à puce ;
dans lequel, l'application intègre un interpréteur d'identificateur AID (411), le procédé comportant en outre les étapes ci-après consistant à :
recevoir une demande, au niveau de l'interpréteur d'identificateur AID, en vue de délivrer l'identificateur AID de l'application, dans lequel il est accédé audit identificateur AID par le biais dudit interpréteur d'identificateur AID ;
récupérer une première composante de l'identificateur AID, dans laquelle ladite première composante est logiquement interne à l'interpréteur d'identificateur AID ;
récupérer une seconde composante de l'identificateur AID, dans laquelle ladite seconde composante est logiquement externe à l'interpréteur d'identificateur AID et comporte des données dynamiques représentant un état pertinent pour l'application ; et
combiner au moins les première et seconde composantes de l'identificateur AID en vue de générer l'identificateur AID de manière dynamique de façon à délivrer, en réponse à ladite demande, l'identificateur AID de l'application.

2. Procédé selon la revendication 1, dans lequel ledit identificateur de ressources de réseau comporte une adresse universelle.

3. Procédé selon la revendication 1 ou 2, dans lequel ladite étape consistant à déterminer l'identificateur RID comporte l'étape consistant à extraire l'identificateur RID d'un emplacement prédéterminé au sein de l'identificateur AID.

4. Procédé selon l'une quelconque des revendications précédentes, dans lequel l'étape consistant à générer un identificateur de ressources de réseau comporte l'étape consistant à former l'identificateur de ressources de réseau à partir de première et seconde parties d'adresse, dans lesquelles ladite première partie d'adresse comporte une valeur prédéterminée, et ladite seconde partie d'adresse est dépendante de l'identificateur RID déterminé.

5. Procédé selon la revendication 4, dans lequel ladite première partie d'adresse correspond à un domaine de réseau, et ladite seconde partie d'adresse correspond à un ou plusieurs paramètres d'entrée destinés à être transmis au domaine de réseau.

6. Procédé selon la revendication 5, dans lequel ledit identificateur de ressources de réseau est généré en combinant une première partie d'adresse fixe représentant un site de recherche et une seconde partie d'adresse variable dépendante de l'identificateur RID déterminé, dans laquelle la seconde partie d'adresse variable forme une chaîne de recherche destinée à être saisie dans le site de recherche.

7. Procédé selon l'une quelconque des revendications précédentes, dans lequel l'étape consistant à générer l'identificateur de ressources de réseau à partir de l'identificateur RID comporte l'étape consistant à transformer une représentation binaire de l'identificateur RID en une représentation non binaire.

8. Procédé selon la revendication 7, dans lequel ladite représentation non binaire comporte une représentation de chaîne.

9. Procédé selon l'une quelconque des revendications précédentes, dans lequel l'étape consistant à générer un identificateur de ressources de réseau comporte l'étape consistant à utiliser une table de consultation qui met en correspondance l'identificateur RID et l'identificateur de ressources de réseau.

10. Procédé selon la revendication 9, dans lequel l'étape consistant à générer un identificateur de ressources de réseau comporte les étapes ci-après consistant à :
accéder à une table de consultation locale (810) laquelle met en correspondance des identificateurs RID sélectionnés et les identificateurs de ressources de réseau correspondants, et utiliser une mise en correspondance de ladite table de façon à générer un identificateur de ressources de réseau lorsque l'identificateur RID déterminé correspond à l'un des identificateurs RID dans la table ; et
si aucun identificateur RID correspondant n'est rencontré dans la table de consultation, accéder à une base de données à distance (865) laquelle met en correspondance des identificateurs RID et des identificateurs de ressources de réseau correspondants, dans lequel ledit identificateur de ressources de réseau généré comporte l'adresse de la base de données à distance en association avec l'identificateur RID destiné à être mis en correspondance.

11. Procédé selon la revendication 10, comportant en outre l'étape consistant à exploiter ladite table de consultation locale en tant qu'un cache de la base de données à distance.

12. Procédé selon l'une quelconque des revendications précédentes, dans lequel la réponse à ladite demande comporte ou identifie un code destiné à être utilisé dans le décodage de l'identificateur AID de l'application.

13. Procédé selon la revendication 12, dans lequel ledit code est délivré sous la forme d'un fichier de descripteur d'applications Java.

14. Procédé selon la revendication 12, comportant en outre l'étape consistant à installer ledit code dans le terminal en vue de mettre en oeuvre ladite transaction avec l'application.

15. Procédé selon l'une quelconque des revendications précédentes, dans lequel ledit identificateur de ressources de réseau représente un nom de classe totalement qualifié destiné à une classe.

16. Procédé selon la revendication 15, comportant en outre l'étape consistant à mettre en oeuvre une vérification en vue de déterminer si la classe est déjà chargée, et lorsqu'elle ne l'est pas, à ne pas transmettre ladite demande.

17. Procédé selon la revendication 15, comportant en outre l'étape consistant à accéder à la classe conformément aux définitions de chemin d'accès à la classe.

18. Procédé selon l'une quelconque des revendications précédentes, dans lequel la réponse à ladite demande comporte une adresse URL indiquant un service, ou une installation, destiné à être utilisé dans l'interaction avec l'application sur la carte à puce.

19. Procédé selon la revendication 1, dans lequel, la réponse à la demande dépend d'une partie d'extension d'identificateur d'application propriétaire, PIX, (502) de l'identificateur AID.

20. Procédé selon l'une quelconque des revendications précédentes, dans lequel l'identificateur AID de l'application sur la carte à puce est reçu au niveau du terminal au cours d'une session avec ladite carte à puce, et dans lequel lesdites étapes de détermination et de génération sont mises en oeuvre par ledit terminal.

21. Procédé selon la revendication 20, dans lequel il existe de multiples applications sur la carte à puce, chaque application présentant son propre identificateur AID respectif, lequel est reçu sur le terminal par la carte à puce, et dans lequel, les étapes consistant à déterminer l'identificateur RID, à générer un identificateur de ressources de réseau à partir de l'identificateur RID, à transmettre une demande à la ressource de réseau en utilisant ledit identificateur et à recevoir une réponse, sont mises en oeuvre d'une manière individuelle pour chaque identificateur AID reçu.

22. Procédé selon la revendication 21, dans lequel les réponses aux demandes reçues au niveau du terminal pour les applications multiples sont utilisées en vue de déterminer quelle application, parmi les applications multiples sur la carte à puce, doit être utilisée dans le cadre de l'interaction avec le terminal.

23. Procédé selon la revendication 1, comportant en outre l'étape consistant à sélectionner une application désirée sur la carte à puce, dans laquelle il existe potentiellement deux applications ou plus installées sur la carte à puce, chaque application présentant un identificateur d'application stocké, AID :
en spécifiant une application désirée en termes de paramètres multiples ;
en récupérant des paramètres multiples à partir d'un identificateur AID stocké pour une application sur la carte à puce ; et
en comparant les paramètres multiples spécifiés aux paramètres multiples récupérés en vue de déterminer s'il existe ou non une correspondance.

24. Produit programme informatique comportant des instructions sur un support, dans lequel, lesdites instructions, lorsqu'elles sont chargées sur un système informatique, amènent la machine à mettre en oeuvre le procédé selon l'une quelconque de revendications précédentes.
